# EUROPEAN PATENT APPLICATION

(11) **EP 4 707 777 A2**
(43) Date of publication of application: **11.03.2026**
(21) Application number: 25194610.9
(22) Date of filing: 07.08.2025
(51) Int. Cl.: G01N 17/00

(54) **TEST FIXTURES AND METHODS FOR IMPROVING FIDELITY OF THERMAL OXIDATIVE STABILITY TESTING**

(30) Priority: 09.08.2024 US 202418799269
(71) Applicant: The Boeing Company, Arlington, VA 22202 (US)
(72) Inventor: O'Hara, Jeremy N., Arlington, 22202 (US); Rhodes, Charles A., Arlington, 22202 (US)
(74) Representative: Arnold & Siedsma

(57) **Abstract**

A test fixture for improving fidelity of thermal oxidative stability testing includes an environmental test chamber and a test material holder. The environmental test chamber includes an enclosure and a controller. The enclosure with an opening that provides access to an internal compartment defining a chamber environment. The controller controls the chamber environment within the internal compartment. The test material holder, at least partially disposed in the internal compartment, holds a material under test. The environmental test chamber and the test material holder expose a frontside of the material under test to a first environment and expose a backside of the material under test to a different environment. Various test fixtures and methods for improving fidelity for thermal oxidative stability testing are provided.

## Description

### FIELD

The present disclosure relates generally to techniques for improving fidelity of thermal oxidative stability testing and, particularly, to test fixtures for improving fidelity of thermal oxidative stability testing. The various techniques establish an oxidating environment for the frontside of a material under test and an inert environment for the backside of the material under test. Examples of the material under test include a composite material, a metallic material, a ceramic material, a polymer material and a coated material. Other types of materials are also contemplated. Applications of the material under test include exterior skins of aircraft, spacecraft and other types of vehicles. Other applications are also contemplated.

### BACKGROUND

Thermal oxidative stability testing is conducted, for example, on polymer matrix composite PMC specimens to determine suitability for use in various environments. This test is conducted by placing a specimen in an oven for a period of time and periodically measuring the weight loss and mechanical properties. This test exposes the entire specimen to the oxidating environment (i.e., both sides of coupon, plus edges). In many applications this is not the exposure a component would undergo, and the test may be overly conservative. In other words, existing test methods are limited to full specimen exposure and over-predict actual thermal oxidative degradation.

Accordingly, those skilled in the art continue with research and development efforts to improve test fixtures and techniques for improving fidelity of thermal oxidative stability testing.

### SUMMARY

Disclosed are examples of test fixtures and methods for improving fidelity of thermal oxidative stability testing. The following is a non-exhaustive list of examples, which may or may not be claimed, of the subject matter according to the present disclosure.

In an example, a test fixture for improving fidelity of thermal oxidative stability testing includes an environmental test chamber and a test material holder. The environmental test chamber includes an enclosure and a controller. The enclosure with an opening that provides access to an internal compartment defining a chamber environment. The controller configured to control the chamber environment within the internal compartment. The test material holder at least partially disposed in the internal compartment and configured to hold a material under test. The environmental test chamber and the test material holder are configured to expose a frontside of the material under test to a first environment and to expose a backside of the material under test to a second environment. The second environment being different from the first environment and isolated from the first environment.

The environmental test chamber may comprise as least one of a conditioning oven, a fan-assisted oven, a mechanical convection oven, a laboratory oven, an inert atmosphere oven, a gravity oven, a climate test chamber, a climatic test chamber and an altitude test chamber. The material under test may comprise as least one of a polymer matrix composite material, a ceramic matrix composite material, a carbon matrix composite material, a carbon fiber reinforced polymer material, a fiberglass material, a thermoplastic composite material, a thermoset composite material, a metal matrix composite material, an aluminum matrix composite material, a metallic material, a ceramic material, a polymer material and a coated material.

The test material holder may comprise a bracket installed on the enclosure and sized to frame the opening, the bracket configured to secure and seal the material under test over the opening with the frontside of the material under test facing the chamber environment and the backside of the material under test facing an external environment of the environmental test chamber. The first environment may comprise the chamber environment and the second environment comprises the external environment of the environmental test chamber. The environmental test chamber may further comprise an oxidizing gas inlet valve installed through an exterior wall of the enclosure and configured to receive an oxidizing gas from an external gas source and configured to direct the oxidizing gas toward the frontside of the material under test in the chamber environment, and an oxidizing gas vent valve installed through the exterior wall of the enclosure and configured to pass the oxidizing gas from the chamber environment to the external environment of the environmental test chamber. The oxidizing gas may comprise at least one of an oxygen gas, an air mixture, a nitrous oxide gas and a chlorine gas. The external gas source may comprise at least one of a premixed oxidizing gas cylinder, a premixed air cylinder, an oxygen gas cylinder, a nitrous oxide gas cylinder, a premixed oxidizing gas supply system and a premixed air supply system. The controller of the environmental test chamber may be configured to control the oxidizing gas inlet valve and the oxidizing gas vent valve during operation of the environmental test chamber. The environmental test chamber may further comprise a compressor system configured to pressurize the chamber environment to a predetermined pressure during operation of the environmental test chamber, and the controller of the environmental test chamber may be configured to control the compressor system and configured to monitor a current pressure of the chamber environment. The predetermined pressure ranges between 1 standard atmosphere and 35 standard atmospheres. The environmental test chamber may further comprise a heating system configured to heat the chamber environment to a predetermined temperature during operation of the environmental test chamber, and the controller of the environmental test chamber may be configured to control the heating system and configured to monitor a current temperature of the chamber environment. The predetermined temperature may range between 15 °C above ambient and 2000 °C. The environmental test chamber may further comprise a ventilation system configured to circulate the oxidizing gas within the chamber environment at a predetermined flow rate during operation of the environmental test chamber, and the controller of the environmental test chamber may be configured to control the ventilation system and configured to monitor a current flow rate of the oxidizing gas within the chamber environment. The predetermined flow rate may range between 21.24 cubic meters (750 cubic feet) per minute and 49.55 cubic meters (1750 cubic feet) per minute. The environmental test chamber may further comprise an oxidizing gas mixing system configured to mix a select gas component with the oxidizing gas flowing through the chamber environment to maintain a predetermined concentration of the select gas component during operation of the environmental test chamber, and the controller of the environmental test chamber may be configured to control the oxidizing gas mixing system and configured to monitor a current concentration of the select gas component in the oxidizing gas flowing through the chamber environment. The select gas component may comprise at least one of an oxygen gas, a nitrous oxide gas and a chlorine gas. The predetermined concentration may range between approximately 20 percent and approximately 25 percent.

The environmental test chamber may further comprise an access door installed on the enclosure and sized to fit the opening, the access door is configured to open to permit placement of the test material holder with the material under test inside the internal compartment and to close to seal the opening.

The test material holder may comprise a container with a first opening that provides access to an internal volume; and a bracket installed on the container and sized to frame the first opening, the bracket configured to secure and seal the material under test over the first opening with the backside of the material under test facing the internal volume and the frontside of the material under test facing the chamber environment of the environmental test chamber, and wherein, during operation of the environmental test chamber, the container with the material under test secured thereon forms a pressure vessel that defines an inert environment within the internal volume of the container and an oxidizing environment outside the pressure vessel in the chamber environment. The first environment may comprise the oxidizing environment and the second environment comprises the inert environment. The environmental test chamber may further comprise an oxidizing gas inlet valve installed through an exterior wall of the enclosure and configured to receive an oxidizing gas from an external gas source and to direct the oxidizing gas toward the frontside of the material under test in the chamber environment; and an oxidizing gas vent valve installed through the exterior wall of the enclosure and configured to pass the oxidizing gas from the chamber environment to an external environment of the environmental test chamber. The controller of the environmental test chamber may be configured to control the oxidizing gas inlet valve and the oxidizing gas vent valve during operation of the environmental test chamber. The environmental test chamber may further comprise a compressor system configured to pressurize the chamber environment to a predetermined pressure during operation of the environmental test chamber, and the controller of the environmental test chamber may be configured to control the compressor system and configured to monitor a current pressure of the chamber environment. The environmental test chamber may further comprise a heating system configured to heat the chamber environment to a predetermined temperature during operation of the environmental test chamber, and the controller of the environmental test chamber may be configured to control the heating system and configured to monitor a current temperature of the chamber environment. The environmental test chamber may further comprise a ventilation system configured to circulate the oxidizing gas within the chamber environment at a predetermined flow rate during operation of the environmental test chamber, and the controller of the environmental test chamber may be configured to control the ventilation system and configured to monitor a current flow rate of the oxidizing gas within the chamber environment. The environmental test chamber may further comprise an oxidizing gas mixing system configured to mix a select gas component with the oxidizing gas flowing through the chamber environment to maintain a predetermined concentration of the select gas component during operation of the environmental test chamber, and the controller of the environmental test chamber may be configured to control the oxidizing gas mixing system and configured to monitor a current concentration of the select gas component in the oxidizing gas flowing through the chamber environment. The environmental test chamber may further comprise an inert gas inlet valve installed through an exterior wall of the enclosure and configured to receive an inert gas from an external source; a first inert gas conduit with a proximal end connected to the inert gas inlet valve and configured to provide an inlet path for the inert gas to the pressure vessel; a second inert gas conduit with a proximal end connected to the pressure vessel and configured to provide an outlet path to vent the inert gas from the pressure vessel; and an inert gas vent valve installed through the exterior wall of the enclosure, wherein a distal end of the second inert gas conduit is connected to the inert gas vent valve, the inert gas vent valve configured to vent the inert gas from the pressure vessel via the second inert gas conduit to an external environment of the environmental test chamber. The inert gas may comprise at least one of a dry air, a nitrogen gas, a noble gas and an argon gas. The external source may comprise at least one of a dry air cylinder, a nitrogen gas cylinder, an argon gas cylinder, a shop air supply system, an inert gas supply system and a noble gas supply system. The controller of the environmental test chamber may be configured to control the inert gas inlet valve and the inert gas vent valve during operation of the environmental test chamber. The pressure vessel may further comprise an inert gas inlet port installed through an exterior wall of the container, wherein a distal end of the first inert gas conduit is connected to the inert gas inlet port; and an inert gas vent port installed through the exterior wall of the container, wherein a proximal end of the second inert gas conduit is connected to the inert gas vent port. The environmental test chamber may further comprise a ventilation system configured to circulate the inert gas through the pressure vessel at a predetermined flow rate during operation of the environmental test chamber, and the controller of the environmental test chamber may be configured to control the ventilation system and configured to monitor a current flow rate of the inert gas through the pressure vessel. The predetermined flow rate may range between 21.24 cubic meters (750 cubic feet) per minute and 49.55 cubic meters (1750 cubic feet) per minute. The environmental test chamber may further comprise a cooling system configured to cool the inert gas flowing through the pressure vessel to a predetermined temperature during operation of the environmental test chamber, and the controller of the environmental test chamber may be configured to control the cooling system and configured to monitor a current temperature of the inert gas flowing through the pressure vessel. The predetermined temperature may range between 15 °C above ambient and 2000 °C.

The environmental test chamber may further comprise a vacuum valve installed through an exterior wall of the enclosure and configured to receive a vacuum draw from a vacuum system; and an internal vacuum line with a proximal end connected to the vacuum valve and configured to provide the vacuum draw to the pressure vessel. The vacuum system may comprise at least one of a vacuum pump within the environmental test chamber, an external vacuum pump and a shop vacuum system with a vacuum pump. The controller of the environmental test chamber may be configured to control the vacuum valve during operation of the environmental test chamber. The pressure vessel may further comprise a vacuum port installed through an exterior wall of the container, wherein a distal end of the internal vacuum line is connected to the vacuum port. The environmental test chamber may further comprise a vacuum pump connected to the vacuum valve and configured to draw a predetermined vacuum on the pressure vessel during operation of the environmental test chamber, and the controller of the environmental test chamber may be configured to control the vacuum pump and configured to monitor a current vacuum drawn on the pressure vessel. The predetermined vacuum may range between approximately 20 percent vacuum and approximately 50 percent vacuum.

The test material holder may comprise a first container with a first opening that provides access to a first internal volume; a bracket installed on the first container and sized to frame the first opening, the bracket configured to secure and seal the material under test over the first opening with the backside of the material under test facing the first internal volume and the frontside of the material under test facing the chamber environment of the environmental test chamber; and a second container with a second opening that provides access to a second internal volume, the second container installed over the bracket with the second opening sized to frame the frontside of the material under test, and wherein, during operation of the environmental test chamber, the first container with the material under test secured thereon forms a first pressure vessel that defines an inert environment within the first internal volume of the first container and the second container installed over the frontside of the material under test forms a second pressure vessel that defines an oxidizing environment within the second internal volume. The first environment may comprise the oxidizing environment and the second environment comprises the inert environment. The environmental test chamber may further comprise an oxidizing gas inlet valve installed through an exterior wall of the enclosure and configured to receive an oxidizing gas from an external gas source; a first oxidizing gas conduit with a proximal end connected to the oxidizing gas inlet valve and configured to provide an inlet path for the oxidizing gas to the second pressure vessel; a second oxidizing gas conduit with a proximal end connected to the second pressure vessel and configured to provide an outlet path to vent the oxidizing gas from the second pressure vessel; and an oxidizing gas vent valve installed through the exterior wall of the enclosure, wherein a distal end of the second oxidizing gas conduit is connected to the oxidizing gas vent valve, the oxidizing gas vent valve configured to vent the oxidizing gas from the second pressure vessel via the second oxidizing gas conduit to an external environment of the environmental test chamber. The controller of the environmental test chamber may be configured to control the oxidizing gas inlet valve and the oxidizing gas vent valve during operation of the environmental test chamber. The second pressure vessel may comprise an oxidizing gas inlet port installed through an exterior wall of the second container, wherein a distal end of the first oxidizing gas conduit is connected to the oxidizing gas inlet port; and an oxidizing gas vent port installed through the exterior wall of the second container, wherein a proximal end of the second oxidizing gas conduit is connected to the oxidizing gas vent port. The environmental test chamber may further comprise a compressor system configured to pressurize the second pressure vessel to a predetermined pressure during operation of the environmental test chamber, and the controller of the environmental test chamber may be configured to control the compressor system and configured to monitor a current pressure of the second pressure vessel. The predetermined pressure may range between 1 standard atmosphere and 35 standard atmospheres. The environmental test chamber may further comprise a heating system configured to heat the oxidizing gas flowing through the second pressure vessel to a predetermined temperature during operation of the environmental test chamber, and the controller of the environmental test chamber may be configured to control the heating system and configured to monitor a current temperature of the oxidizing gas flowing through the second pressure vessel. The predetermined temperature may range between 15 °C above ambient and 2000 °C. The environmental test chamber may further comprise a ventilation system configured to circulate the oxidizing gas within the second pressure vessel at a predetermined flow rate during operation of the environmental test chamber, and the controller of the environmental test chamber may be configured to control the ventilation system and configured to monitor a current flow rate within the second pressure vessel. The predetermined flow rate may range between 21.24 cubic meters (750 cubic feet) per minute and 49.55 cubic meters (1750 cubic feet) per minute. The environmental test chamber may further comprise an oxidizing gas mixing system configured to mix a select gas component with the oxidizing gas flowing through the second pressure vessel to maintain a predetermined concentration of the select gas component during operation of the environmental test chamber, and the controller of the environmental test chamber may be configured to control the oxidizing gas mixing system and configured to monitor a current concentration of the select gas component in the oxidizing gas flowing through the second pressure vessel. The select gas component may comprise at least one of an oxygen gas, a nitrous oxide gas and a chlorine gas. The predetermined concentration may range between approximately 20 percent and approximately 25 percent. The environmental test chamber may further comprise an inert gas inlet valve installed through an exterior wall of the enclosure and configured to receive an inert gas from an external source; a first inert gas conduit with a proximal end connected to the inert gas inlet valve and configured to provide an inlet path for the inert gas to the first pressure vessel; a second inert gas conduit with a proximal end connected to the first pressure vessel and configured to provide an outlet path to vent the inert gas from the first pressure vessel; and an inert gas vent valve installed through the exterior wall of the enclosure, wherein a distal end of the second inert gas conduit is connected to the inert gas vent valve, the inert gas vent valve configured to vent the inert gas from the first pressure vessel via the second inert gas conduit to an external environment of the environmental test chamber. The controller of the environmental test chamber may be configured to control the inert gas inlet valve and the inert gas vent valve during operation of the environmental test chamber. The first pressure vessel may comprise an inert gas inlet port installed through an exterior wall of the first container, wherein a distal end of the first inert gas conduit is connected to the inert gas inlet port; and an inert gas vent port installed through the exterior wall of the first container, wherein a proximal end of the second inert gas conduit is connected to the inert gas vent port. The environmental test chamber may further comprise a compressor system configured to pressurize the first pressure vessel to a predetermined pressure during operation of the environmental test chamber, and the controller of the environmental test chamber may be configured to control the compressor system and configured to monitor a current pressure of the first pressure vessel. The environmental test chamber may further comprise a ventilation system configured to circulate the inert gas through the first pressure vessel at a predetermined flow rate during operation of the environmental test chamber, and the controller of the environmental test chamber may be configured to control the ventilation system and configured to monitor a current flow rate of the inert gas through the first pressure vessel. The environmental test chamber may further comprise a cooling system configured to cool the inert gas flowing through the first pressure vessel to a predetermined temperature during operation of the environmental test chamber, and the controller of the environmental test chamber may be configured to control the cooling system and configured to monitor a current temperature of the inert gas flowing through the first pressure vessel.

The environmental test chamber may further comprise a vacuum valve installed through an exterior wall of the enclosure and configured to receive a vacuum draw from a vacuum system; and an internal vacuum line with a proximal end connected to the vacuum valve and configured to provide the vacuum draw to the first pressure vessel. The controller of the environmental test chamber may be configured to control the vacuum valve during operation of the environmental test chamber. The first pressure vessel may comprise a vacuum port installed through an exterior wall of the first container, wherein a distal end of the internal vacuum line is connected to the vacuum port. The environmental test chamber may further comprise a vacuum pump connected to the vacuum valve and configured to draw a predetermined vacuum on the first pressure vessel during operation of the environmental test chamber, and the controller of the environmental test chamber may be configured to control the vacuum pump and configured to monitor a current vacuum drawn on the first pressure vessel.

In an example, a method for improving fidelity for thermal oxidative stability testing includes: (1) exposing a frontside of a material under test to a first environment during an exposure portion of a thermal oxidative stability test for the material under test; and (2) exposing a backside of the material under test to a second environment during the exposure portion, the second environment being different from the first environment and isolated from the first environment.

The method may further comprise setting up conditions and parameters for operation of an environmental test chamber of a test fixture in conjunction with the exposure portion; and securing the material under test to a test material holder of the test fixture in conjunction with the exposure portion. The environmental test chamber may comprise an enclosure with an opening that provides access to an internal compartment of the environmental test chamber, the internal compartment defining a chamber environment, wherein the test material holder comprises a bracket sized to frame the opening, the securing of the material under test comprising securing and sealing the material under test over the opening using the bracket with the frontside of the material under test facing the chamber environment and the backside of the material under test facing an external environment of the environmental test chamber. The first environment may comprise the chamber environment and the second environment comprises the external environment of the environmental test chamber. The environmental test chamber may comprise an oxidizing gas inlet valve and an oxidizing gas vent valve, the exposing of the frontside comprising applying an oxidizing gas from an external gas source to the oxidizing gas inlet valve; controlling the oxidizing gas inlet valve to enable flow of the oxidizing gas from the external gas source toward the frontside of the material under test in the chamber environment; and controlling the oxidizing gas vent valve to enable flow of the oxidizing gas from the chamber environment to the external environment of the environmental test chamber. The exposing of the frontside may further comprise pressurizing the oxidizing gas flowing through the chamber environment to a predetermined pressure. The exposing of the frontside may further comprise monitoring a current pressure of the oxidizing gas flowing through the chamber environment; and controlling the pressurizing of the oxidizing gas flowing through the chamber environment in response to the monitoring of the current pressure. The exposing of the frontside may further comprise heating the chamber environment to a predetermined temperature. The exposing of the frontside may further comprise monitoring a current temperature within the chamber environment; and controlling the heating of the chamber environment in response to the monitoring of the current temperature. The exposing of the frontside may further comprise circulating the oxidizing gas within the chamber environment at a predetermined flow rate. The exposing of the frontside may further comprise monitoring a current flow rate of the oxidizing gas within the chamber environment; and controlling the circulating of the oxidizing gas within the chamber environment in response to the monitoring of the current flow rate. The exposing of the frontside may comprise mixing a select gas component with the oxidizing gas flowing through the chamber environment to maintain a predetermined concentration of the select gas component flowing through the chamber environment in the oxidizing gas. The exposing of the frontside may further comprise monitoring a current concentration of the select gas component in the oxidizing gas flowing through the chamber environment; and controlling the mixing of the select gas component with the oxidizing gas flowing through chamber environment in response to the monitoring of the current concentration of the select gas component.

The exposing of the backside may comprise exposing the backside of the material under test to an ambient air mixture present in the external environment of the environmental test chamber.

The test material holder may comprise a container and a bracket, the container having a first opening that provides access to an internal volume of the container, the bracket sized to frame the first opening, the securing of the material under test comprising securing and sealing the material under test to the container over the first opening using the bracket with the backside of the material under test facing the internal volume, wherein the container with the material under test secured thereon forms a pressure vessel that defines an inert environment within the internal volume of the container; placing the test material holder with the material under test secured thereon inside an internal compartment of the environmental test chamber; connecting a first inert gas conduit of the environmental test chamber to an inert gas inlet port of the pressure vessel; connecting a second inert gas conduit of the environmental test chamber to an inert gas vent port of the pressure vessel; and closing an access door of the environmental test chamber to seal the internal compartment forming an oxidizing environment with the pressure vessel inside and the frontside of the material under test facing the oxidizing environment. The first environment may comprise the oxidizing environment and the second environment comprises the inert environment. The environmental test chamber may comprise an oxidizing gas inlet valve and an oxidizing gas vent valve, the exposing of the frontside comprising applying an oxidizing gas from an external gas source to the oxidizing gas inlet valve; controlling the oxidizing gas inlet valve to enable flow of the oxidizing gas from the external gas source toward the frontside of the material under test in the oxidizing environment; and controlling the oxidizing gas vent valve to enable flow of the oxidizing gas from the oxidizing environment to an external environment of the environmental test chamber. The exposing of the frontside may further comprise pressurizing the oxidizing gas flowing through the oxidizing environment to a predetermined pressure. The exposing of the frontside may further comprise monitoring a current pressure of the oxidizing gas flowing through the oxidizing environment; and controlling the pressurizing of the oxidizing gas flowing through the oxidizing environment in response to the monitoring of the current pressure. The exposing of the frontside may further comprise heating the oxidizing environment to a predetermined temperature. The exposing of the frontside may further comprise monitoring a current temperature within the oxidizing environment; and controlling the heating of the oxidizing environment in response to the monitoring of the current temperature. The exposing of the frontside may further comprise circulating the oxidizing gas within the oxidizing environment at a predetermined flow rate. The exposing of the frontside may further comprise monitoring a current flow rate of the oxidizing gas within the oxidizing environment; and controlling the circulating of the oxidizing gas within the oxidizing environment in response to the monitoring of the current flow rate. The exposing of the frontside may further comprise mixing a select gas component with the oxidizing gas flowing through the oxidizing environment to maintain a predetermined concentration of the select gas component flowing through the oxidizing environment in the oxidizing gas. The exposing of the frontside may further comprise monitoring a current concentration of the select gas component in the oxidizing gas flowing through the oxidizing environment; and controlling the mixing of the select gas component with the oxidizing gas flowing through oxidizing environment in response to the monitoring of the current concentration of the select gas component. The environmental test chamber may comprise an inert gas inlet valve connected to the first inert gas conduit and an inert gas vent valve connected to the second inert gas conduit, the exposing of the backside comprising applying an inert gas from an external source to the inert gas inlet valve; controlling the inert gas inlet valve to enable flow of the inert gas from the external source to the pressure vessel via the first inert gas conduit; and controlling the inert gas vent valve to enable flow of the inert gas from the inert environment of the pressure vessel via the second inert gas conduit to an external environment of the environmental test chamber. The exposing of the backside may further comprise circulating the inert gas within the pressure vessel at a predetermined flow rate. The exposing of the backside may further comprise monitoring a current flow rate of the inert gas within the pressure vessel; and controlling the circulating of the inert gas within the pressure vessel in response to the monitoring of the current flow rate. The exposing of the backside may further comprise cooling the inert gas flowing through the pressure vessel to a predetermined temperature. The exposing of the backside may further comprise monitoring a current temperature of the inert gas flowing through the pressure vessel; and controlling the cooling of the inert gas flowing through the pressure vessel in response to the monitoring of the current temperature.

The test material holder may comprise a container and a bracket, the container having a first opening that provides access to an internal volume of the container, the bracket sized to frame the first opening, the securing of the material under test comprising securing and sealing the material under test to the container over the first opening using the bracket with the backside of the material under test facing the internal volume, wherein the container with the material under test secured thereon forms a pressure vessel that defines an inert environment within the internal volume of the container; placing the test material holder with the material under test secured thereon inside an internal compartment of the environmental test chamber; connecting an internal vacuum line of the environmental test chamber to a vacuum port of the pressure vessel; and closing an access door of the environmental test chamber to seal the internal compartment forming an oxidizing environment with the pressure vessel inside and the frontside of the material under test facing the oxidizing environment. The environmental test chamber may comprise a vacuum valve, the exposing of the backside further comprising applying a vacuum draw from a vacuum system to the vacuum valve; and controlling the vacuum valve to enable the vacuum draw from the vacuum system toward the backside of the material under test in the pressure vessel. The environmental test chamber may further comprise a vacuum pump, the exposing of the backside further comprising drawing a vacuum on the pressure vessel to a predetermined vacuum level. The exposing of the backside may further comprise monitoring a current vacuum drawn on the pressure vessel; and controlling the vacuum drawn on the pressure vessel in response to the monitoring of the current vacuum.

The test material holder may comprise a first container, a bracket and a second container, the first container having a first opening that provides access to a first internal volume of the first container, the bracket sized to frame the first opening, the second container having a second opening that provides access to a second internal volume, the securing of the material under test comprising securing and sealing the material under test to the first container over the first opening using the bracket with the backside of the material under test facing the first internal volume, wherein the first container with the material under test secured thereon forms a first pressure vessel that defines an inert environment within the first internal volume of the first container; installing the second container on the first pressure vessel over the bracket with the second opening framing the frontside of the material under test, wherein the second container and the frontside of the material under test forms a second pressure vessel that defines an oxidizing environment within the second internal volume of the second container; placing the first pressure vessel and the second pressure vessel with the material under test secured therebetween inside an internal compartment of the environmental test chamber; connecting a first inert gas conduit of the environmental test chamber to an inert gas inlet port of the first pressure vessel; connecting a second inert gas conduit of the environmental test chamber to an inert gas vent port of the first pressure vessel; connecting a first oxidizing gas conduit of the environmental test chamber to an oxidizing gas inlet port of the second pressure vessel; connecting a second oxidizing gas conduit of the environmental test chamber to an oxidizing gas vent port of the second pressure vessel; and closing an access door of the environmental test chamber to seal the internal compartment with the first pressure vessel and the second pressure vessel inside the environmental test chamber. The first environment may comprise the oxidizing environment and the second environment comprises the inert environment. The environmental test chamber may comprise an oxidizing gas inlet valve connected to the first oxidizing gas conduit and an oxidizing gas vent valve connected to the second oxidizing gas conduit, the exposing of the frontside comprising applying an oxidizing gas from an external gas source to the oxidizing gas inlet valve; controlling the oxidizing gas inlet valve to enable flow of the oxidizing gas from the external gas source to the second pressure vessel via the first oxidizing gas conduit; and controlling the oxidizing gas vent valve to enable flow of the oxidizing gas from the oxidizing environment of the second pressure vessel via the second oxidizing gas conduit to an external environment of the environmental test chamber. The exposing of the frontside may further comprise pressurizing the oxidizing gas flowing through the second pressure vessel to a predetermined pressure. The exposing of the frontside may further comprise monitoring a current pressure of the oxidizing gas flowing through the second pressure vessel; and controlling the pressurizing of the oxidizing gas flowing through the second pressure vessel in response to the monitoring of the current pressure. The exposing of the frontside may further comprise heating the oxidizing environment to a predetermined temperature. The exposing of the frontside may further comprise monitoring a current temperature within the oxidizing environment; and controlling the heating of the oxidizing environment in response to the monitoring of the current temperature. The exposing of the frontside may further comprise circulating the oxidizing gas within the second pressure vessel at a predetermined flow rate. The exposing of the frontside may further comprise monitoring a current flow rate of the oxidizing gas within the second pressure vessel; and controlling the circulating of the oxidizing gas within the second pressure vessel in response to the monitoring of the current flow rate. The exposing of the frontside may further comprise mixing a select gas component with the oxidizing gas flowing through the oxidizing environment to maintain a predetermined concentration of the select gas component flowing through the oxidizing environment in the oxidizing gas. The exposing of the frontside may further comprise monitoring a current concentration of the select gas component in the oxidizing gas flowing through the oxidizing environment; and controlling the mixing of the select gas component with the oxidizing gas flowing through oxidizing environment in response to the monitoring of the current concentration of the select gas component. The environmental test chamber may comprise an inert gas inlet valve connected to the first inert gas conduit and an inert gas vent valve connected to the second inert gas conduit, the exposing of the backside further comprising applying an inert gas from an external source to the inert gas inlet valve; controlling the inert gas inlet valve to enable flow of the inert gas from the external source to the first pressure vessel via the first inert gas conduit; and controlling the inert gas vent valve to enable flow of the inert gas from the inert environment of the first pressure vessel via the second inert gas conduit to an external environment of the environmental test chamber. The exposing of the backside may further comprise pressurizing the inert gas flowing through the first pressure vessel to a predetermined pressure. The exposing of the backside may further comprise monitoring a current pressure of the inert gas flowing through the first pressure vessel; and controlling the pressurizing of the inert gas flowing through the first pressure vessel in response to the monitoring of the current pressure. The exposing of the backside may further comprise circulating the inert gas within the first pressure vessel at a predetermined flow rate. The exposing of the backside may further comprise monitoring a current flow rate of the inert gas within the first pressure vessel; and controlling the circulating of the inert gas within the first pressure vessel in response to the monitoring of the current flow rate. The exposing of the backside may further comprise cooling the inert gas flowing through the first pressure vessel to a predetermined temperature. The exposing of the backside may further comprise monitoring a current temperature of the inert gas flowing through the first pressure vessel; and controlling the cooling of the inert gas flowing through the first pressure vessel in response to the monitoring of the current temperature.

The test material holder may comprise a first container, a bracket and a second container, the first container having a first opening that provides access to a first internal volume of the first container, the bracket sized to frame the first opening, the second container having a second opening that provides access to a second internal volume, the securing of the material under test comprising securing and sealing the material under test to the first container over the first opening using the bracket with the backside of the material under test facing the first internal volume, wherein the first container with the material under test secured thereon forms a first pressure vessel that defines an inert environment within the first internal volume of the first container; installing the second container on the first pressure vessel over the bracket with the second opening framing the frontside of the material under test, wherein the second container and the frontside of the material under test forms a second pressure vessel that defines an oxidizing environment within the second internal volume of the second container; placing the first pressure vessel and the second pressure vessel with the material under test secured therebetween inside an internal compartment of the environmental test chamber; connecting an internal vacuum line of the environmental test chamber to a vacuum port of the first pressure vessel; connecting a first oxidizing gas conduit of the environmental test chamber to an oxidizing gas inlet port of the second pressure vessel; connecting a second oxidizing gas conduit of the environmental test chamber to an oxidizing gas vent port of the second pressure vessel; and closing an access door of the environmental test chamber to seal the internal compartment with the first pressure vessel and the second pressure vessel inside the environmental test chamber. The environmental test chamber may comprise a vacuum valve, the exposing of the backside further comprising applying a vacuum draw from a vacuum system to the vacuum valve; and controlling the vacuum valve to enable the vacuum draw from the vacuum system toward the backside of the material under test in the first pressure vessel. The exposing of the backside may further comprise drawing a vacuum on the first pressure vessel to a predetermined pressure vessel. The exposing of the backside may further comprise monitoring a current vacuum drawn on the first pressure vessel; and controlling the vacuum drawn on the first pressure vessel in response to the monitoring of the current vacuum.

In another example, a method for improving fidelity for thermal oxidative stability testing includes: (1) forming a first pressure vessel that defines a first environment, the first pressure vessel including a first container and a material under test; and (2) forming a second pressure vessel that defines a second environment, the second pressure vessel including a second container and the material under test, the second environment being different from the first environment and isolated from the first environment.

The method may further comprise setting up conditions and parameters for operation of an environmental test chamber of a test fixture in conjunction with an exposure portion of a thermal oxidative stability test for a material under test, wherein the test fixture comprises the first container, a bracket and the second container, the first container having a first opening that provides access to a first internal volume of the first container, the bracket sized to frame the first opening, the second container having a second opening that provides access to a second internal volume. The forming of the first pressure vessel may comprise securing and sealing the material under test over a first opening of the first container using a bracket with a backside of the material under test facing a first internal volume of the first container, wherein the first container with the material under test secured thereon forms the first pressure vessel. The forming of the second pressure vessel may comprise installing the second container on the first pressure vessel over the bracket with a second opening of the second container framing a frontside of the material under test, wherein the second container and the frontside of the material under test forms the second pressure vessel. The first environment may comprise an inert environment and the second environment comprises an oxidizing environment. The method may further comprise placing the first pressure vessel and the second pressure vessel with the material under test secured therebetween inside an internal compartment of an environmental test chamber; connecting a first inert gas conduit of the environmental test chamber to an inert gas inlet port of the first pressure vessel; connecting a second inert gas conduit of the environmental test chamber to an inert gas vent port of the first pressure vessel; connecting a first oxidizing gas conduit of the environmental test chamber to an oxidizing gas inlet port of the second pressure vessel; connecting a second oxidizing gas conduit of the environmental test chamber to an oxidizing gas vent port of the second pressure vessel; and closing an access door of the environmental test chamber to seal the internal compartment with the first pressure vessel and the second pressure vessel inside the environmental test chamber. The environmental test chamber may comprise an oxidizing gas inlet valve connected to the first oxidizing gas conduit and an oxidizing gas vent valve connected to the second oxidizing gas conduit, the method further comprising applying an oxidizing gas from an external gas source to the oxidizing gas inlet valve; controlling the oxidizing gas inlet valve to enable flow of the oxidizing gas from the external gas source to the second pressure vessel via the first oxidizing gas conduit; and controlling the oxidizing gas vent valve to enable flow of the oxidizing gas from the oxidizing environment of the second pressure vessel via the second oxidizing gas conduit to an external environment of the environmental test chamber. The method may further comprise pressurizing the oxidizing gas flowing through the second pressure vessel to a predetermined pressure. The method may further comprise heating the oxidizing environment to a predetermined temperature. The method may further comprise circulating the oxidizing gas within the second pressure vessel at a predetermined flow rate. The method may further comprise mixing a select gas component with the oxidizing gas flowing through the oxidizing environment to maintain a predetermined concentration of the select gas component flowing through the oxidizing environment in the oxidizing gas. The environmental test chamber may comprise an inert gas inlet valve connected to the first inert gas conduit and an inert gas vent valve connected to the second inert gas conduit, the method further comprising applying an inert gas from an external source to the inert gas inlet valve; controlling the inert gas inlet valve to enable flow of the inert gas from the external source to the first pressure vessel via the first inert gas conduit; and controlling the inert gas vent valve to enable flow of the inert gas from the inert environment of the first pressure vessel via the second inert gas conduit to an external environment of the environmental test chamber. The method may further comprise pressurizing the inert gas flowing through the first pressure vessel to a predetermined pressure. The method may further comprise circulating the inert gas within the first pressure vessel at a predetermined flow rate. The method may further comprise cooling the inert gas flowing through the first pressure vessel to a predetermined temperature.

In another example, a test fixture for improving fidelity of thermal oxidative stability testing includes a first container, a bracket and a second container. The first container has a first opening that provides access to a first internal volume. The bracket sized to frame the first opening of the first container. A material under test is sealed and secured to the first container over the first opening using the bracket with a backside of the material under test facing the first internal volume. The first container with the material under test secured thereon forms a first pressure vessel that defines a first environment within the first internal volume. The second container having a second opening that provides access to a second internal volume. The second container installed on the first pressure vessel over the bracket with the second opening framing a frontside of the material under test. The second container and the frontside of the material under test forms a second pressure vessel that defines a second environment within the second internal volume of the second container. The second environment being different from the first environment and isolated from the first environment.

The first environment may comprises an inert environment and the second environment may comprise an oxidizing environment.

Other examples of the disclosed test fixtures and methods for improving fidelity of thermal oxidative stability testing will become apparent from the following detailed description, the accompanying drawings and the appended claims.

### BRIEF DESCRIPTION OF THE DRAWINGS

Fig. 1 is a perspective view of an example of an environmental test chamber in a test fixture for improving fidelity of thermal oxidative stability testing;
Fig. 2A is a front view of an example of a test material holder of a test fixture for improving fidelity of thermal oxidative stability testing;
Fig. 2B is a side cross-sectional view of the test material holder of Fig. 2A holding an example of a material under test;
Fig. 3 is a functional block diagram of an example of a test fixture for improving fidelity of thermal oxidative stability testing;
Fig. 4 is a perspective view of another example of an environmental test chamber in a test fixture for improving fidelity of thermal oxidative stability testing;
Fig. 5A is a front view of another example of a test material holder of a test fixture for improving fidelity of thermal oxidative stability testing;
Fig. 5B is a side cross-sectional view of the test material holder of Fig. 5A holding an example of a material under test;
Fig. 6 is a functional block diagram of another example of a test fixture for improving fidelity of thermal oxidative stability testing;
Fig. 7 is a functional diagram of an example of the test material holder of Fig. 5A inside an example of an enclosure of an environmental test chamber;
Fig. 8 is a functional diagram of another example the test material holder of Fig. 5A inside an example of an enclosure of an environmental test chamber;
Fig. 9 is a functional block diagram of yet another example of a test fixture for improving fidelity of thermal oxidative stability testing;
Fig. 10A is a front view of yet another example of a test material holder of a test fixture for improving fidelity of thermal oxidative stability testing;
Fig. 10B is a side cross-sectional view of the test material holder of Fig. 10A holding an example of a material under test;
Fig. 11 is a functional diagram of an example of the test material holder of Fig. 10A inside an example of an enclosure of an environmental test chamber;
Fig. 12 is a functional diagram of another example the test material holder of Fig. 10A inside an example of an enclosure of an environmental test chamber;
Fig. 13 is a flow diagram of an example of a method for improving fidelity of thermal oxidative stability testing;
Fig. 14 is a flow diagram of examples of the securing of the material under test and the exposing of the frontside of the material under test in the method of Fig. 13;
Fig. 15, in combination with Fig. 14, is a flow diagram of another example of the exposing of the frontside of the material under test in the method of Fig. 13;
Fig. 16, in combination with Fig. 14, is a flow diagram of yet another example of the exposing of the frontside of the material under test in the method of Fig. 13;
Fig. 17 is a flow diagram of an example of the exposing of the backside of the material under test in the method of Fig. 13;
Fig. 18 is a flow diagram of additional examples of the securing of the material under test and the exposing of the frontside of the material under test in the method of Fig. 13;
Fig. 19 is a flow diagram of still yet another example of the exposing of the frontside of the material under test in the method of Fig. 13;
Fig. 20 is a flow diagram of another example of the exposing of the frontside of the material under test in the method of Fig. 13;
Fig. 21, in combination with Fig. 18, is a flow diagram of another example of the exposing of the backside of the material under test in the method of Fig. 13;
Fig. 22, in combination with Figs. 18 and 21, is a flow diagram of yet another example the exposing of the backside of the material under test in the method of Fig. 13;
Fig. 23 is a flow diagram of yet another example of the securing of the material under test in the method of Fig. 13;
Fig. 24, in combination with Fig. 23, is a flow diagram of still another example of the exposing of the backside of the material under test in the method of Fig. 13;
Fig. 25 is a flow diagram of still another example of the securing of the material under test in the method of Fig. 13;
Fig. 26, in combination with Fig. 25, is a flow diagram of another example of the exposing of the frontside of the material under test in the method of Fig. 13;
Fig. 27, in combination with Figs. 25 and 26, is a flow diagram of yet another example of the exposing of the frontside of the material under test in the method of Fig. 13;
Fig. 28, in combination with Figs. 25 and 26, is a flow diagram of still another example of the exposing of the frontside of the material under test in the method of Fig. 13;
Fig. 29, in combination with Fig. 25, is a flow diagram of still yet another example of the exposing of the backside of the material under test in the method of Fig. 13;
Fig. 30, in combination with Figs. 25 and 29, is a flow diagram of another example of the exposing of the backside of the material under test in the method of Fig. 13;
Fig. 31, in combination with Figs. 25 and 29, is a flow diagram of yet another example of the exposing of the backside of the material under test in the method of Fig. 13;
Fig. 32 is a flow diagram of still yet another example of the securing of the material under test in the method of Fig. 13;
Fig. 33, in combination with Fig. 32, is a flow diagram of still another example of the exposing of the backside of the material under test in the method of Fig. 13;
Fig. 34 is a flow diagram of another example of a method for improving fidelity of thermal oxidative stability testing;
Fig. 35, in combination with Fig. 34, is a flow diagram of yet another example of a method for improving fidelity of thermal oxidative stability testing;
Fig. 36, in combination with Figs. 34 and 35, is a flow diagram of still another example of a method for improving fidelity of thermal oxidative stability testing;
Fig. 37, in combination with Figs. 34, 35 and 36, is a flow diagram of still yet another example of a method for improving fidelity of thermal oxidative stability testing;
Fig. 38, in combination with Figs. 34 and 35, is a flow diagram of another example of a method for improving fidelity of thermal oxidative stability testing;
Fig. 39, in combination with Figs. 34, 35 and 38, is a flow diagram of yet another example of a method for improving fidelity of thermal oxidative stability testing;
Fig. 40 is a block diagram of aircraft production and service methodology that implements tests using one or more of the examples of methods for improving fidelity of thermal oxidative stability testing disclosed herein;
Fig. 41 is a schematic illustration of an aircraft that incorporates components with materials tested using one or more of the examples of the test fixtures for improving fidelity of thermal oxidative stability testing and methods for improving fidelity of thermal oxidative stability testing disclosed herein; and
Fig. 42 is a flow diagram of examples of the forming of the first pressure vessel and the forming of the second pressure vessel in the method of Fig. 34.

### DETAILED DESCRIPTION

The various examples of test fixtures 300 and methods 1300, 3400, 3500, 3600, 3700, 3800, 3900 for improving fidelity of thermal oxidative stability testing disclosed herein provide techniques for exposing a frontside 204 of a material under test 202 to an oxidating environment 511 and exposing a backside 206 of the material under test 202 to an inert environment 509. The methods 1300, 3400, 3500, 3600, 3700, 3800, 3900 improve the fidelity of thermal oxidative stability testing and the related test fixtures 300 required to implement such tests.

The disclosed methods 1300, 3400, 3500, 3600, 3700, 3800, 3900 include a test with single sided specimen exposure to an oxidizing environment and the test fixture 300 used to conduct such test. A test specimen is clamped to an opening in a sealed pressure vessel 500. The pressure vessel 500 is then placed in the conditioning oven and the backside 206 of the specimen/internal to pressure vessel 500 is plumbed to inert gas (e.g., nitrogen). The entire assembly is then conditioned, as needed, such a frontside 204 of the specimen sees the oxidizing environment, while the backside 206 sees a separate environment.

The various test fixtures 300 and methods 1300, 3400, 3500, 3600, 3700, 3800, 3900 may use a conditioning oven and an associated control system suitable to conduct the thermal oxidative stability testing. A test specimen holder, for example, in the form of a pressure vessel 500 allows the test sample to be sealed in a manner such that a frontside 204 of the sample is exposed to the oxidizing environment, while the backside 206 is protected by means of an inert gas or a vacuum. The pressure vessel 500 is plumbed to a gas control system that controls the backside 206 environment from vacuum to any specified condition, along with a gas reservoir or generator and regulator system to provide the required environment.

In one example, the test fixture 300 provides a separate thermal environment on the backside 206 of the specimen through the use of coolant or cold gas flow. In another example, the pressure vessel 500 is replaced with a hole in the side of the conditioning oven allowing ambient conditions on the backside 206. In yet another example, there is a second pressure vessel 1000 on the frontside 204 of the specimen. A pressurized air mix is provided to the frontside 204 of specimen while equal pressure inert gas is provided to the backside 206 of the coupon. This configuration allows for accelerated thermal oxidizing stability testing as the speed of the reaction is increased under increased pressure or oxygen concentration.

The various examples of test fixtures 300 and methods 1300, 3400, 3500, 3600, 3700, 3800, 3900 can be used to screen materials for design and development projects.

Various companies and countries engaged in high temperature composite work may implement techniques disclosed herein. For example, various aerospace and engine companies, automotive companies, test laboratories, and industrial processors may find the techniques disclosed herein to be useful. Industrialized countries that have these industries may also find the techniques useful.

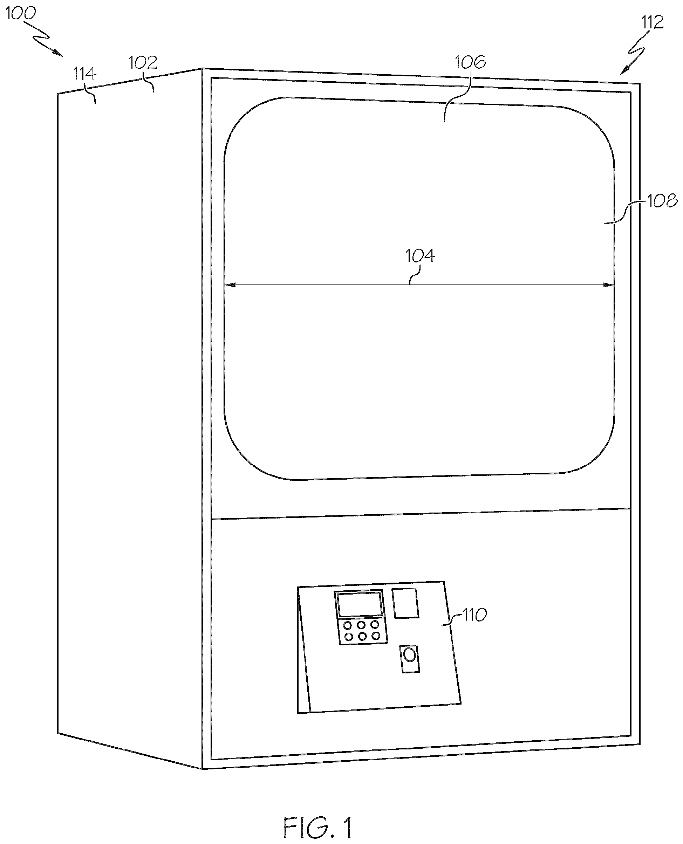

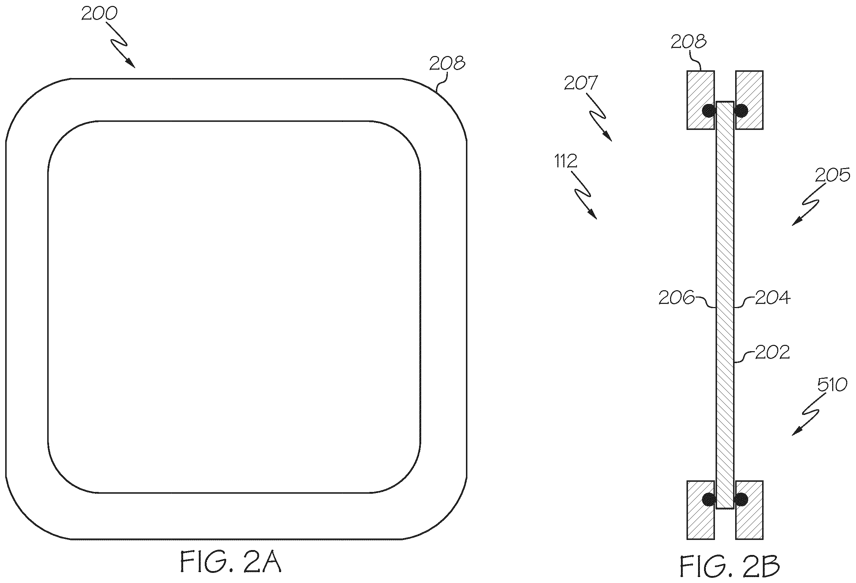

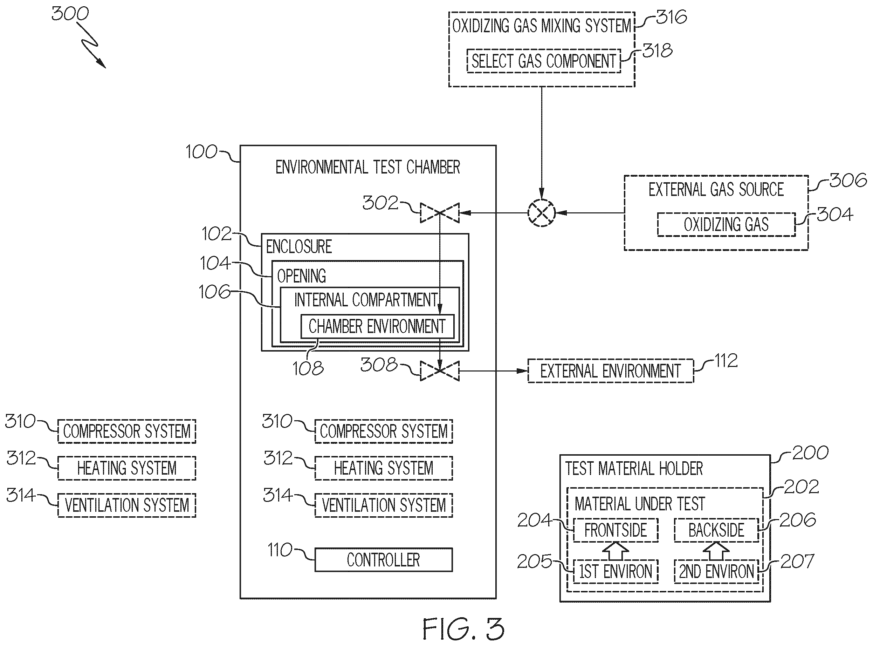

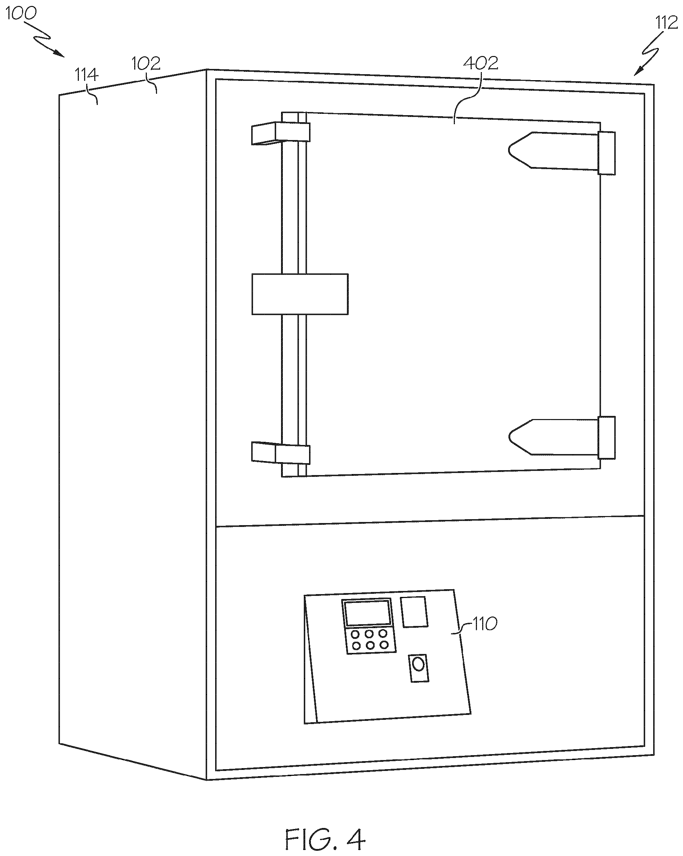

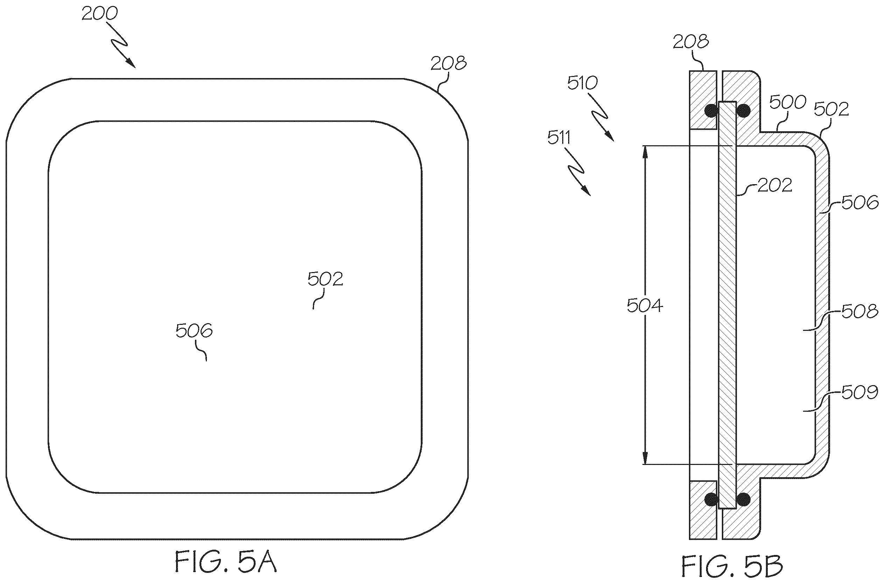

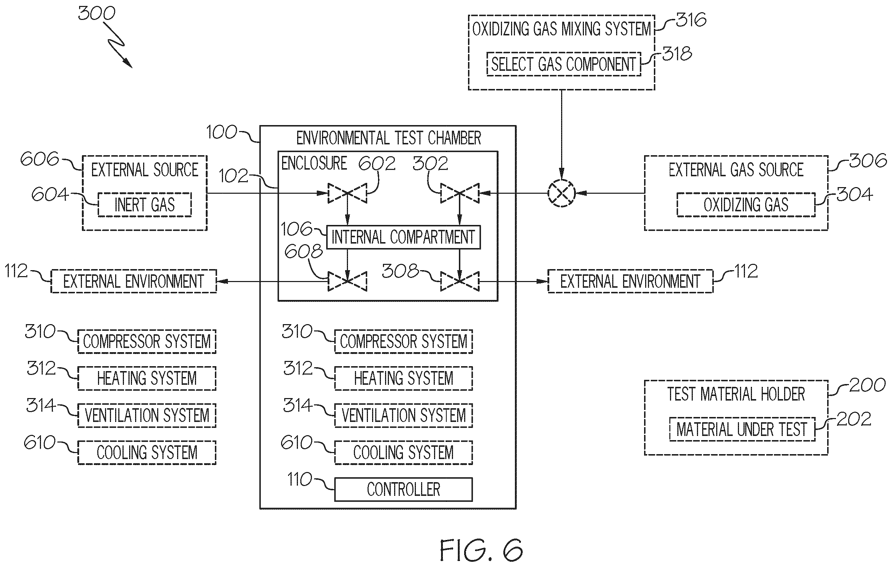

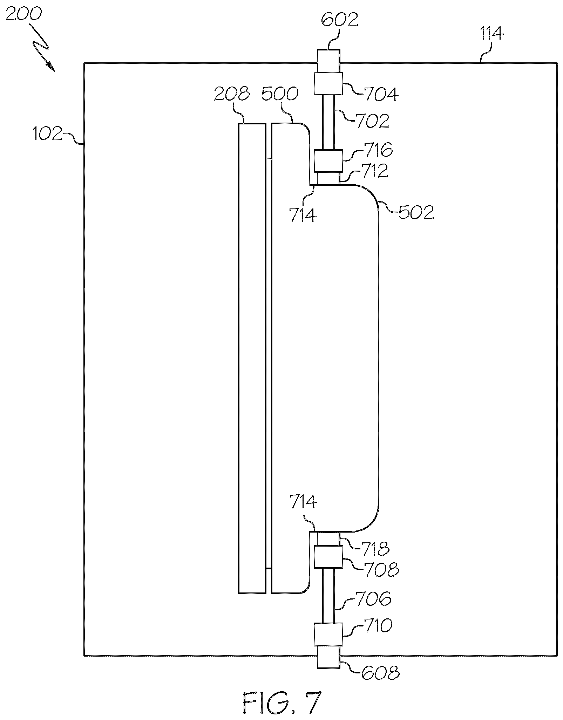

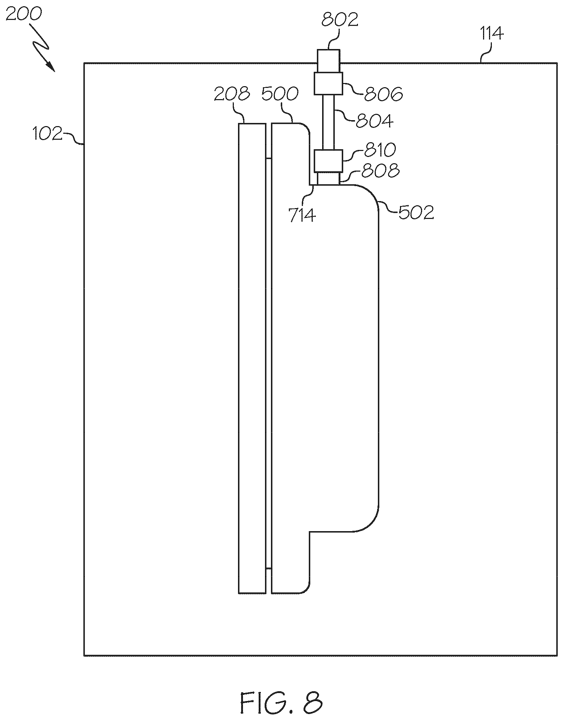

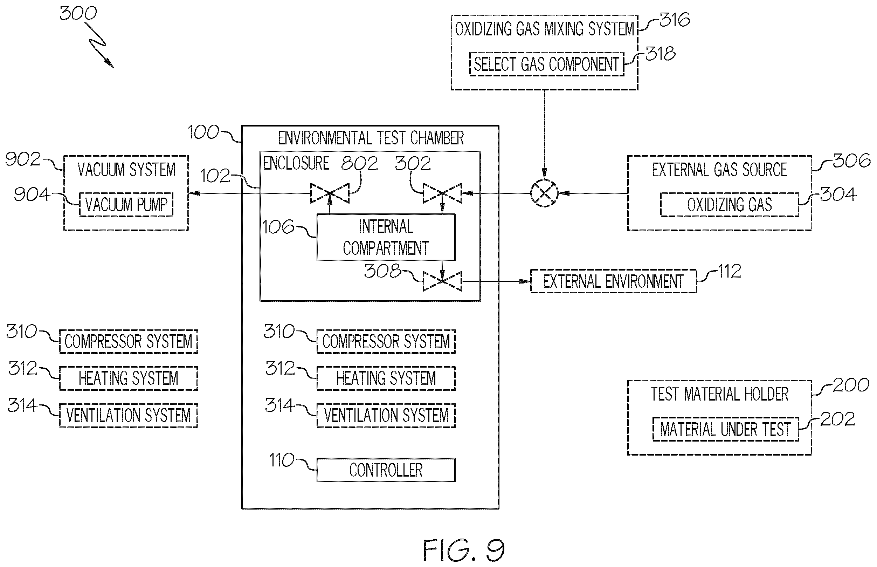

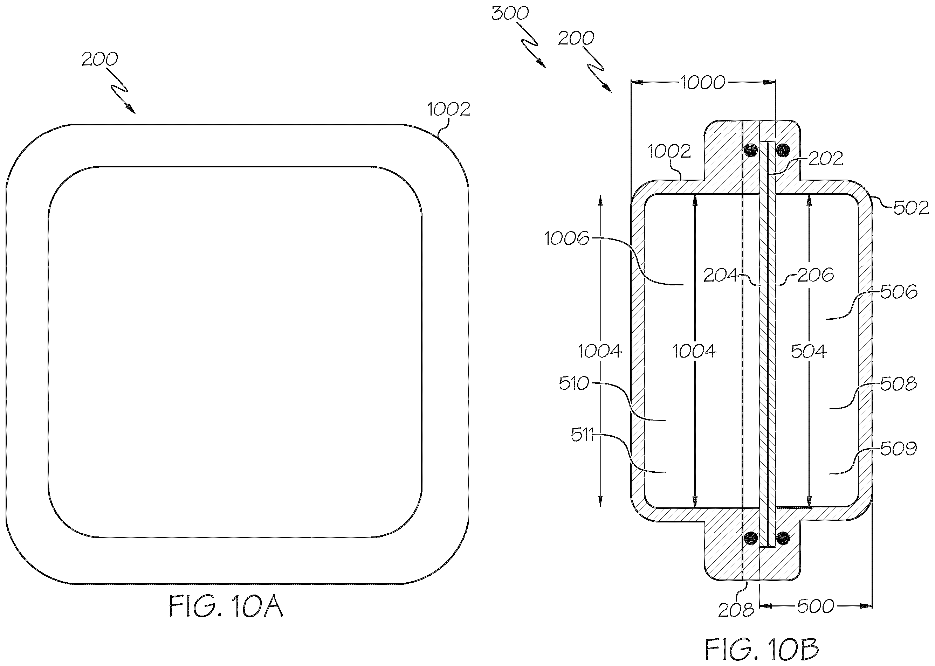

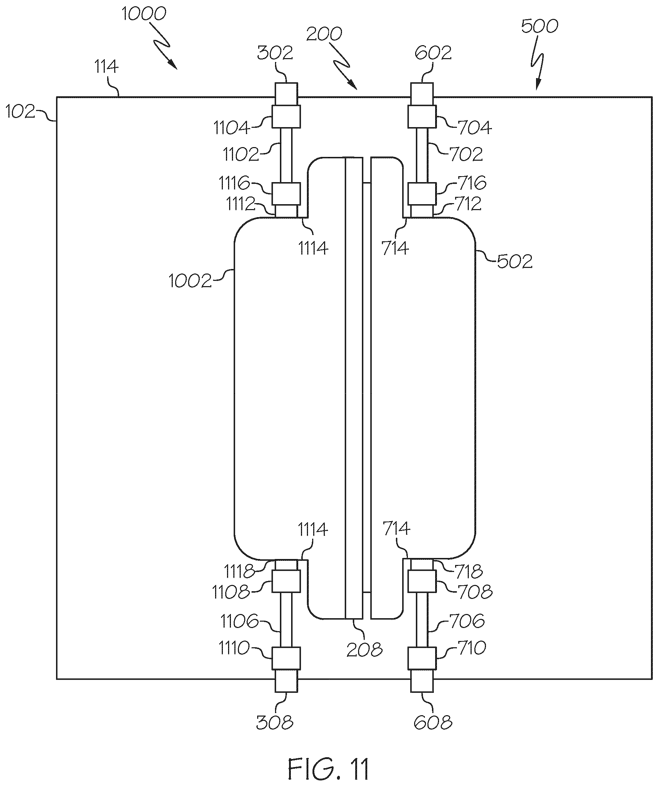

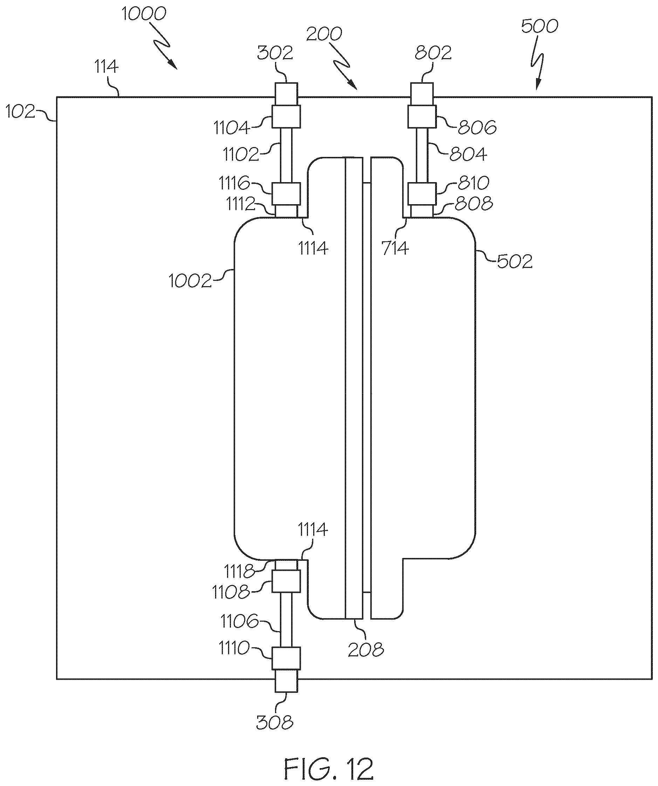

Referring generally to Figs. 1, 2A-B, 3, 4, 5A-B, 6-9, 10A-B, 11 and 12, by way of examples, the present disclosure is directed to a test fixture 300 for improving fidelity of thermal oxidative stability testing. Fig. 1 shows an example of an environmental test chamber 100 of the test fixture 300. Fig. 2A shows an example of a test material holder 200 of the test fixture 300. Fig. 2B shows a cross-sectional view of the test material holder 200 of Fig. 2A holding an example of a material under test 202. Fig. 3 provides a functional block diagram of an example of the test fixture 300. Fig. 4 shows another example of an environmental test chamber 100 in the test fixture 300. Fig. 5A shows another example of a test material holder 200 of the test fixture 300. Fig. 5B shows a cross-sectional view of the test material holder 200 of Fig. 5A holding an example of a material under test 202. Fig. 6 provides a functional block diagram of another example of the test fixture 300. Fig. 7 provides a functional diagram of an example of the test material holder 200 of Fig. 5A inside an example of an enclosure 102 of an environmental test chamber 100. Fig. 8 provides a functional diagram of another example the test material holder 200 of Fig. 5A inside an example of an enclosure 102 of an environmental test chamber 100. Fig. 9 provides a functional block diagram of yet another example of the test fixture 300. Fig. 10A shows yet another example of a test material holder 200 of the test fixture 300. Fig. 10B shows a cross-sectional view of the test material holder 200 of Fig. 10A holding an example of a material under test 202. Fig. 11 provides a functional diagram of an example of the test material holder 200 of Fig. 10A inside an example of an enclosure 102 of an environmental test chamber 100. Fig. 12 provides a functional diagram of another example the test material holder 200 of Fig. 10A inside an example of an enclosure 102 of an environmental test chamber 100.

With reference again to Figs. 1, 2A-B, 3, 4, 5A-B, 6-9, 10A-B, 11 and 12, in one or more examples, a test fixture 300 for improving fidelity of thermal oxidative stability testing includes an environmental test chamber 100 and a test material holder 200. The environmental test chamber 100 includes an enclosure 102 and a controller 110. The enclosure 102 with an opening 104 that provides access to an internal compartment 106 defining a chamber environment 108. The controller 110 configured to control the chamber environment 108 within the internal compartment 106. The test material holder 200 at least partially disposed in the internal compartment 106 and configured to hold a material under test 202. The environmental test chamber 100 and the test material holder 200 are configured to expose a frontside 204 of the material under test 202 to a first environment 205 and to expose a backside 206 of the material under test 202 to a second environment 207. The second environment 207 being different from the first environment 205 and isolated from the first environment 205.

In another example of the test fixture 300, the environmental test chamber 100 includes a conditioning oven, a fan-assisted oven, a mechanical convection oven, a laboratory oven, an inert atmosphere oven, a gravity oven, a climate test chamber, a climatic test chamber, an altitude test chamber or any other suitable environmental test chamber in any suitable combination. In yet another example of the test fixture 300, the material under test 202 includes a polymer matrix composite material, a ceramic matrix composite material, a carbon matrix composite material, a carbon fiber reinforced polymer material, a fiberglass material, a thermoplastic composite material, a thermoset composite material, a metal matrix composite material, an aluminum matrix composite material, a metallic material, a ceramic material, a polymer material, a coated material or any other suitable material in any suitable combination.

In still another example of the test fixture 300, the test material holder 200 includes a bracket 208 installed on the enclosure 102 and sized to frame the opening 104. The bracket 208 configured to secure and seal the material under test 202 over the opening 104 with the frontside 204 of the material under test 202 facing the chamber environment 108 and the backside 206 of the material under test 202 facing an external environment 112 of the environmental test chamber 100. In a further example, the first environment 205 includes the chamber environment 108 and the second environment 207 includes the external environment 112 of the environmental test chamber 100. In another further example, the environmental test chamber 100 also includes an oxidizing gas inlet valve 302 and an oxidizing gas vent valve 308. The oxidizing gas inlet valve 302 installed through an exterior wall 114 of the enclosure 102 and configured to receive an oxidizing gas 304 from an external gas source 306 and configured to direct the oxidizing gas 304 toward the frontside 204 of the material under test 202 in the chamber environment 108. The oxidizing gas vent valve 308 installed through the exterior wall 114 of the enclosure 102 and configured to pass the oxidizing gas 304 from the chamber environment 108 to the external environment 112 of the environmental test chamber 100.

In an even further example, the oxidizing gas 304 includes an oxygen gas, an air mixture, a nitrous oxide gas, a chlorine gas or another other suitable oxidizing gas in any suitable combination. In another even further example, the external gas source 306 includes a premixed oxidizing gas cylinder, a premixed air cylinder, an oxygen gas cylinder, a nitrous oxide gas cylinder, a premixed oxidizing gas supply system, a premixed air supply system or any other suitable external gas source in any suitable combination. In yet another even further example, the controller 110 of the environmental test chamber 100 is configured to control the oxidizing gas inlet valve 302 and the oxidizing gas vent valve 308 during operation of the environmental test chamber 100.

In still another even further example, the environmental test chamber 100 also includes a compressor system 310 configured to pressurize the chamber environment 108 to a predetermined pressure during operation of the environmental test chamber 100. The controller 110 of the environmental test chamber 100 is configured to control the compressor system 310 and configured to monitor a current pressure of the chamber environment 108. In an even yet further example, the predetermined pressure ranges between 1 standard atmosphere and 35 standard atmospheres.

In still yet another even further example, the environmental test chamber 100 also includes a heating system 312 configured to heat the chamber environment 108 to a predetermined temperature during operation of the environmental test chamber 100. The controller 110 of the environmental test chamber 100 is configured to control the heating system 312 and configured to monitor a current temperature of the chamber environment 108. In an even yet further example, the predetermined temperature ranges between 15 °C above ambient and 2000 °C.

In another even further example, the environmental test chamber 100 also includes a ventilation system 314 configured to circulate the oxidizing gas 304 within the chamber environment 108 at a predetermined flow rate during operation of the environmental test chamber 100. The controller 110 of the environmental test chamber 100 is configured to control the ventilation system 314 and configured to monitor a current flow rate of the oxidizing gas 304 within the chamber environment 108. In an even yet further example, the predetermined flow rate ranges between 21.24 cubic meters (750 cubic feet) per minute and 49.55 cubic meters (1750 cubic feet) per minute.

In yet another even further example, the environmental test chamber 100 also includes an oxidizing gas mixing system 316 configured to mix a select gas component 318 with the oxidizing gas 304 flowing through the chamber environment 108 to maintain a predetermined concentration of the select gas component 318 during operation of the environmental test chamber 100. The controller 110 of the environmental test chamber 100 is configured to control the oxidizing gas mixing system 316 and configured to monitor a current concentration of the select gas component 318 in the oxidizing gas 304 flowing through the chamber environment 108. In an even yet further example, the select gas component 318 includes an oxygen gas, a nitrous oxide gas, a chlorine gas or any other suitable oxidizing gas in any suitable combination. In another even yet further example, the predetermined concentration ranges between approximately 20 percent and approximately 25 percent.

In still yet another example of the test fixture 300, the environmental test chamber 100 also includes an access door 402 installed on the enclosure 102 and sized to fit the opening 104. The access door 402 is configured to open to permit placement of the test material holder 200 with the material under test 202 inside the internal compartment 106 and to close to seal the opening 104.

In another example of the test fixture 300, the test material holder 200 includes a container 502 and a bracket 208. The container 502 with a first opening 504 that provides access to an internal volume 506. The bracket 208 installed on the container 502 and sized to frame the first opening 504. The bracket 208 configured to secure and seal the material under test 202 over the first opening 504 with the backside 206 of the material under test 202 facing the internal volume 506 and the frontside 204 of the material under test 202 facing the chamber environment 108 of the environmental test chamber 100. During operation of the environmental test chamber 100, the container 502 with the material under test 202 secured thereon forms a pressure vessel 500 that defines an inert environment 509 within the internal volume 506 of the container 502 and an oxidizing environment 511 outside the pressure vessel 500 in the chamber environment 108. In a further example, the first environment 205 includes the oxidizing environment 511 and the second environment 207 includes the inert environment 509.

In another further example, the environmental test chamber 100 also includes an oxidizing gas inlet valve 302 and an oxidizing gas vent valve 308. The oxidizing gas inlet valve 302 installed through an exterior wall 114 of the enclosure 102 and configured to receive an oxidizing gas 304 from an external gas source 306 and to direct the oxidizing gas 304 toward the frontside 204 of the material under test 202 in the chamber environment 108. The oxidizing gas vent valve 308 installed through the exterior wall 114 of the enclosure 102 and configured to pass the oxidizing gas 304 from the chamber environment 108 to an external environment 112 of the environmental test chamber 100. In an even further example, the controller 110 of the environmental test chamber 100 is configured to control the oxidizing gas inlet valve 302 and the oxidizing gas vent valve 308 during operation of the environmental test chamber 100.

In another even further example, the environmental test chamber 100 also includes a compressor system 310 configured to pressurize the chamber environment 108 to a predetermined pressure during operation of the environmental test chamber 100. The controller 110 of the environmental test chamber 100 is configured to control the compressor system 310 and configured to monitor a current pressure of the chamber environment 108.

In yet another even further example, the environmental test chamber 100 also includes a heating system 312 configured to heat the chamber environment 108 to a predetermined temperature during operation of the environmental test chamber 100. The controller 110 of the environmental test chamber 100 is configured to control the heating system 312 and configured to monitor a current temperature of the chamber environment 108.

In still another even further example, the environmental test chamber 100 also includes a ventilation system 314 configured to circulate the oxidizing gas 304 within the chamber environment 108 at a predetermined flow rate during operation of the environmental test chamber 100. The controller 110 of the environmental test chamber 100 is configured to control the ventilation system 314 and configured to monitor a current flow rate of the oxidizing gas 304 within the chamber environment 108.

In still yet another even further example, the environmental test chamber 100 also includes an oxidizing gas mixing system 316 configured to mix a select gas component 318 with the oxidizing gas 304 flowing through the chamber environment 108 to maintain a predetermined concentration of the select gas component 318 during operation of the environmental test chamber 100. The controller 110 of the environmental test chamber 100 is configured to control the oxidizing gas mixing system 316 and configured to monitor a current concentration of the select gas component 318 in the oxidizing gas 304 flowing through the chamber environment 108.

In yet another further example, the environmental test chamber 100 also includes an inert gas inlet valve 602, a first inert gas conduit 702, a second inert gas conduit 706, and an inert gas vent valve 608. The inert gas inlet valve 602 installed through an exterior wall 114 of the enclosure 102 and configured to receive an inert gas 604 from an external source 606. The first inert gas conduit 702 with a proximal end 704 connected to the inert gas inlet valve 602 and configured to provide an inlet path for the inert gas 604 to the pressure vessel 500. The second inert gas conduit 706 with a proximal end 708 connected to the pressure vessel 500 and configured to provide an outlet path to vent the inert gas 604 from the pressure vessel 500. The inert gas vent valve 608 installed through the exterior wall 114 of the enclosure 102. A distal end 710 of the second inert gas conduit 706 is connected to the inert gas vent valve 608. The inert gas vent valve 608 configured to vent the inert gas 604 from the pressure vessel 500 via the second inert gas conduit 706 to an external environment 112 of the environmental test chamber 100. In an even yet further example, the inert gas 604 includes a dry air, a nitrogen gas, a noble gas, an argon gas or any other suitable inert gas in any suitable combination.

In another even yet further example, the external source 606 includes a dry air cylinder, a nitrogen gas cylinder, an argon gas cylinder, a shop air supply system, an inert gas supply system, a noble gas supply system or any other suitable external source in any suitable combination. In yet another even further example, the controller 110 of the environmental test chamber 100 is configured to control the inert gas inlet valve 602 and the inert gas vent valve 608 during operation of the environmental test chamber 100. In still another even further example, the pressure vessel 500 also includes an inert gas inlet port 712 and an inert gas vent port 718. The inert gas inlet port 712 installed through an exterior wall 714 of the container 502. A distal end 716 of the first inert gas conduit 702 is connected to the inert gas inlet port 712. The inert gas vent port 718 installed through the exterior wall 714 of the container 502. A proximal end 708 of the second inert gas conduit 706 is connected to the inert gas vent port 718.

In an even yet further example, the environmental test chamber 100 also includes a ventilation system 314 configured to circulate the inert gas 604 through the pressure vessel 500 at a predetermined flow rate during operation of the environmental test chamber 100. The controller 110 of the environmental test chamber 100 is configured to control the ventilation system 314 and configured to monitor a current flow rate of the inert gas 604 through the pressure vessel 500. In an even still further example, the predetermined flow rate ranges between 21.24 cubic meters (750 cubic feet) per minute and 49.55 cubic meters (1750 cubic feet) per minute.

In another even yet further example, the environmental test chamber 100 also includes a cooling system 610 configured to cool the inert gas 604 flowing through the pressure vessel 500 to a predetermined temperature during operation of the environmental test chamber 100. The controller 110 of the environmental test chamber 100 is configured to control the cooling system 610 and configured to monitor a current temperature of the inert gas 604 flowing through the pressure vessel 500. In an even still further example, the predetermined temperature ranges between 15 °C above ambient and 2000 °C.

In still another further example, the environmental test chamber 100 further also includes a vacuum valve 802 and an internal vacuum line 804. The vacuum valve 802 installed through an exterior wall 114 of the enclosure 102 and configured to receive a vacuum draw from a vacuum system 902. The internal vacuum line 804 with a proximal end 806 connected to the vacuum valve 802 and configured to provide the vacuum draw to the pressure vessel 500. In an even further example, the vacuum system 902 includes a vacuum pump 904 within the environmental test chamber 100, an external vacuum pump, a shop vacuum system with a vacuum pump 904 or any other suitable vacuum system in any suitable combination. In another even further example, the controller 110 of the environmental test chamber 100 is configured to control the vacuum valve 802 during operation of the environmental test chamber 100.

In yet another even further example, the pressure vessel 500 also includes a vacuum port 808 installed through an exterior wall 714 of the container 502. A distal end 810 of the internal vacuum line 804 is connected to the vacuum port 808. In an even yet further example, the environmental test chamber 100 also includes a vacuum pump 904 connected to the vacuum valve 802 and configured to draw a predetermined vacuum on the pressure vessel 500 during operation of the environmental test chamber 100. The controller 110 of the environmental test chamber 100 is configured to control the vacuum pump 904 and configured to monitor a current vacuum drawn on the pressure vessel 500. In an even still further example, the predetermined vacuum ranges between approximately 20 percent vacuum and approximately 50 percent vacuum.

In yet another example of the test fixture 300, the test material holder 200 includes a first container 502, a bracket 208 and a second container 1002. The first container 502 with a first opening 504 that provides access to a first internal volume 506. The bracket 208 installed on the first container 502 and sized to frame the first opening 504. The bracket 208 configured to secure and seal the material under test 202 over the first opening 504 with the backside 206 of the material under test 202 facing the first internal volume 506 and the frontside 204 of the material under test 202 facing the chamber environment 108 of the environmental test chamber 100. The second container 1002 with a second opening 1004 that provides access to a second internal volume 1006. The second container 1002 installed over the bracket 208 with the second opening 1004 sized to frame the frontside 204 of the material under test 202. During operation of the environmental test chamber 100, the first container 502 with the material under test 202 secured thereon forms a first pressure vessel 500 that defines an inert environment 509 within the first internal volume 506 of the first container 502 and the second container 1002 installed over the frontside 204 of the material under test 202 forms a second pressure vessel 1000 that defines an oxidizing environment 511 within the second internal volume 1006. In a further example, the first environment 205 includes the oxidizing environment 511 and the second environment 207 includes the inert environment 509.

In another further example, the environmental test chamber 100 also includes an oxidizing gas inlet valve 302, a first oxidizing gas conduit 1102, a second oxidizing gas conduit 1106 and an oxidizing gas vent valve 308. The oxidizing gas inlet valve 302 installed through an exterior wall 114 of the enclosure 102 and configured to receive an oxidizing gas 304 from an external gas source 306. The first oxidizing gas conduit 1102 with a proximal end 1104 connected to the oxidizing gas inlet valve 302 and configured to provide an inlet path for the oxidizing gas 304 to the second pressure vessel 1000. The second oxidizing gas conduit 1106 with a proximal end 1108 connected to the second pressure vessel 1000 and configured to provide an outlet path to vent the oxidizing gas 304 from the second pressure vessel 1000. The oxidizing gas vent valve 308 installed through the exterior wall 114 of the enclosure 102. A distal end 1110 of the second oxidizing gas conduit 1106 is connected to the oxidizing gas vent valve 308. The oxidizing gas vent valve 308 configured to vent the oxidizing gas 304 from the second pressure vessel 1000 via the second oxidizing gas conduit 1106 to an external environment 112 of the environmental test chamber 100. In a further example, the controller 110 of the environmental test chamber 100 is configured to control the oxidizing gas inlet valve 302 and the oxidizing gas vent valve 308 during operation of the environmental test chamber 100.

In an even further example, the second pressure vessel 1000 includes an oxidizing gas inlet port 1112 and an oxidizing gas vent port 1118. The oxidizing gas inlet port 1112 installed through an exterior wall 1114 of the second container 1002. A distal end 1116 of the first oxidizing gas conduit 1102 is connected to the oxidizing gas inlet port 1112. The oxidizing gas vent port 1118 installed through the exterior wall 1114 of the second container 1002. A proximal end 1108 of the second oxidizing gas conduit 1106 is connected to the oxidizing gas vent port 1118. In an even yet further example, the environmental test chamber 100 also includes a compressor system 310 configured to pressurize the second pressure vessel 1000 to a predetermined pressure during operation of the environmental test chamber 100. The controller 110 of the environmental test chamber 100 is configured to control the compressor system 310 and configured to monitor a current pressure of the second pressure vessel 1000. In an even still further example, the predetermined pressure ranges between 1 standard atmosphere and 35 standard atmospheres.

In another even yet further example, the environmental test chamber 100 also includes a heating system 312 configured to heat the oxidizing gas 304 flowing through the second pressure vessel 1000 to a predetermined temperature during operation of the environmental test chamber 100. The controller 110 of the environmental test chamber 100 is configured to control the heating system 312 and configured to monitor a current temperature of the oxidizing gas 304 flowing through the second pressure vessel 1000. In an even still further example, the predetermined temperature ranges between 15 °C above ambient and 2000 °C. In yet another even yet further example, the environmental test chamber 100 also includes a ventilation system 314 configured to circulate the oxidizing gas 304 within the second pressure vessel 1000 at a predetermined flow rate during operation of the environmental test chamber 100. The controller 110 of the environmental test chamber 100 is configured to control the ventilation system 314 and configured to monitor a current flow rate within the second pressure vessel 1000. In an even still further example, the predetermined flow rate ranges between 21.24 cubic meters (750 cubic feet) per minute and 49.55 cubic meters (1750 cubic feet) per minute.

In still another even yet further example, the environmental test chamber 100 also includes an oxidizing gas mixing system 316 configured to mix a select gas component 318 with the oxidizing gas 304 flowing through the second pressure vessel 1000 to maintain a predetermined concentration of the select gas component 318 during operation of the environmental test chamber 100. The controller 110 of the environmental test chamber 100 is configured to control the oxidizing gas mixing system 316 and configured to monitor a current concentration of the select gas component 318 in the oxidizing gas 304 flowing through the second pressure vessel 1000. In an even still further example, the select gas component 318 includes an oxygen gas, a nitrous oxide gas, a chlorine gas or any other suitable gas component in any suitable combination. In another even still further example, the predetermined concentration ranges between approximately 20 percent and approximately 25 percent.

In yet another further example, the environmental test chamber 100 also includes an inert gas inlet valve 602, a first inert gas conduit 702, a second inert gas conduit 706 and an inert gas vent valve 608. The inert gas inlet valve 602 installed through an exterior wall 114 of the enclosure 102 and configured to receive an inert gas 604 from an external source 606. The first inert gas conduit 702 with a proximal end 704 connected to the inert gas inlet valve 602 and configured to provide an inlet path for the inert gas 604 to the first pressure vessel 500. The second inert gas conduit 706 with a proximal end 708 connected to the first pressure vessel 500 and configured to provide an outlet path to vent the inert gas 604 from the first pressure vessel 500. The inert gas vent valve 608 installed through the exterior wall 114 of the enclosure 102. A distal end 710 of the second inert gas conduit 706 is connected to the inert gas vent valve 608. The inert gas vent valve 608 configured to vent the inert gas 604 from the first pressure vessel 500 via the second inert gas conduit 706 to an external environment 112 of the environmental test chamber 100. In an even further example, the controller 110 of the environmental test chamber 100 is configured to control the inert gas inlet valve 602 and the inert gas vent valve 608 during operation of the environmental test chamber 100.

In another even further example, the first pressure vessel 500 includes an inert gas inlet port 712 and an inert gas vent port 718. The inert gas inlet port 712 installed through an exterior wall 714 of the first container 502. A distal end 716 of the first inert gas conduit 702 is connected to the inert gas inlet port 712. The inert gas vent port 718 installed through the exterior wall 714 of the first container 502. A proximal end 708 of the second inert gas conduit 706 is connected to the inert gas vent port 718. In an even yet further example, the environmental test chamber 100 also includes a compressor system 310 configured to pressurize the first pressure vessel 500 to a predetermined pressure during operation of the environmental test chamber 100. The controller 110 of the environmental test chamber 100 is configured to control the compressor system 310 and configured to monitor a current pressure of the first pressure vessel 500.

In another even yet further example, the environmental test chamber 100 also incudes a ventilation system 314 configured to circulate the inert gas 604 through the first pressure vessel 500 at a predetermined flow rate during operation of the environmental test chamber 100. The controller 110 of the environmental test chamber 100 is configured to control the ventilation system 314 and configured to monitor a current flow rate of the inert gas 604 through the first pressure vessel 500. In yet another even yet further example, the environmental test chamber 100 also includes a cooling system 610 configured to cool the inert gas 604 flowing through the first pressure vessel 500 to a predetermined temperature during operation of the environmental test chamber 100. The controller 110 of the environmental test chamber 100 is configured to control the cooling system 610 and configured to monitor a current temperature of the inert gas 604 flowing through the first pressure vessel 500.

In still another further example, the environmental test chamber 100 also includes a vacuum valve 802 and an internal vacuum line 804. The vacuum valve 802 installed through an exterior wall 114 of the enclosure 102 and configured to receive a vacuum draw from a vacuum system 902. The internal vacuum line 804 with a proximal end 806 connected to the vacuum valve 802 and configured to provide the vacuum draw to the first pressure vessel 500.

In an even further example, the controller 110 of the environmental test chamber 100 is configured to control the vacuum valve 802 during operation of the environmental test chamber 100.

In another even further example, the first pressure vessel 500 includes a vacuum port 808 installed through an exterior wall 714 of the first container 502. A distal end 810 of the internal vacuum line 804 is connected to the vacuum port 808.

In an even yet further example, the environmental test chamber 100 also includes a vacuum pump 904 connected to the vacuum valve 802 and configured to draw a predetermined vacuum on the first pressure vessel 500 during operation of the environmental test chamber 100. The controller 110 of the environmental test chamber 100 is configured to control the vacuum pump 904 and configured to monitor a current vacuum drawn on the first pressure vessel 500.

Referring generally to Figs. 1, 2A-B, 3, 4, 5A-B, 6-9, 10A-B and 11-33, by way of examples, the present disclosure is directed to a method 1300 for improving fidelity of thermal oxidative stability testing. Fig. 1 shows an example of an environmental test chamber 100 of the test fixture 300. Fig. 2A shows an example of a test material holder 200 of a test fixture 300 for improving fidelity of thermal oxidative stability testing. Fig. 2B shows a cross-sectional view of the test material holder 200 of Fig. 2A holding an example of a material under test 202. Fig. 3 provides a functional block diagram of an example of the test fixture 300. Fig. 4 shows another example of an environmental test chamber 100 in the test fixture 300. Fig. 5A shows another example of a test material holder 200 of the test fixture 300. Fig. 5B shows a cross-sectional view of the test material holder 200 of Fig. 5A holding an example of a material under test 202. Fig. 6 provides a functional block diagram of another example of the test fixture 300. Fig. 7 provides a functional diagram of an example of the test material holder 200 of Fig. 5A inside an example of an enclosure 102 of an environmental test chamber 100. Fig. 8 provides a functional diagram of another example the test material holder 200 of Fig. 5A inside an example of an enclosure 102 of an environmental test chamber 100. Fig. 9 provides a functional block diagram of yet another example of the test fixture 300. Fig. 10A shows yet another example of a test material holder 200 of the test fixture 300. Fig. 10B shows a cross-sectional view of the test material holder 200 of Fig. 10A holding an example of a material under test 202. Fig. 11 provides a functional diagram of an example of the test material holder 200 of Fig. 10A inside an example of an enclosure 102 of an environmental test chamber 100. Fig. 12 provides a functional diagram of another example the test material holder 200 of Fig. 10A inside an example of an enclosure 102 of an environmental test chamber 100.

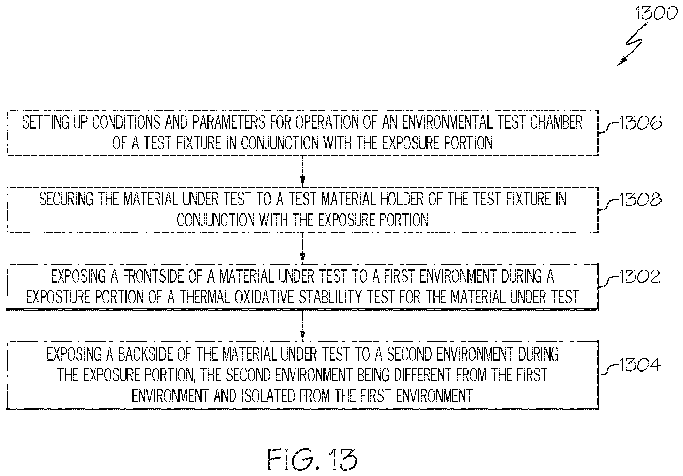

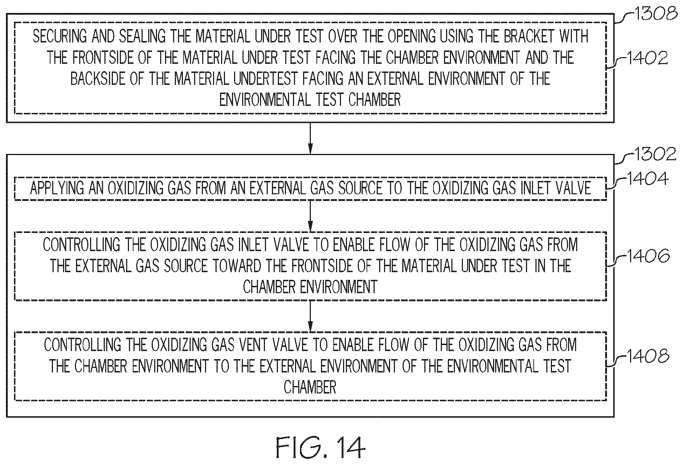

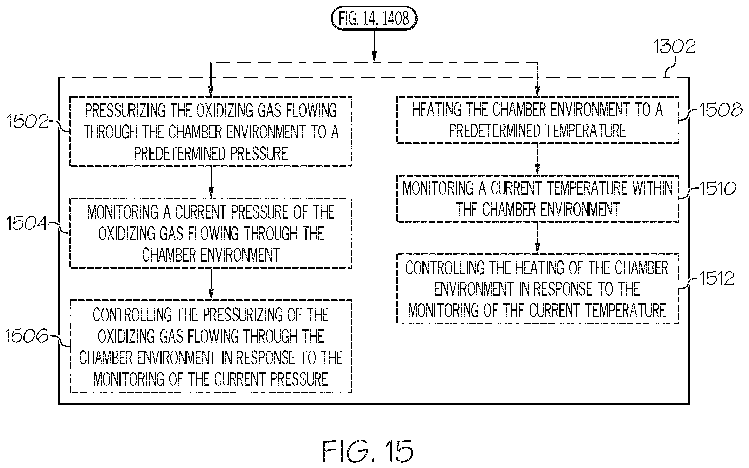

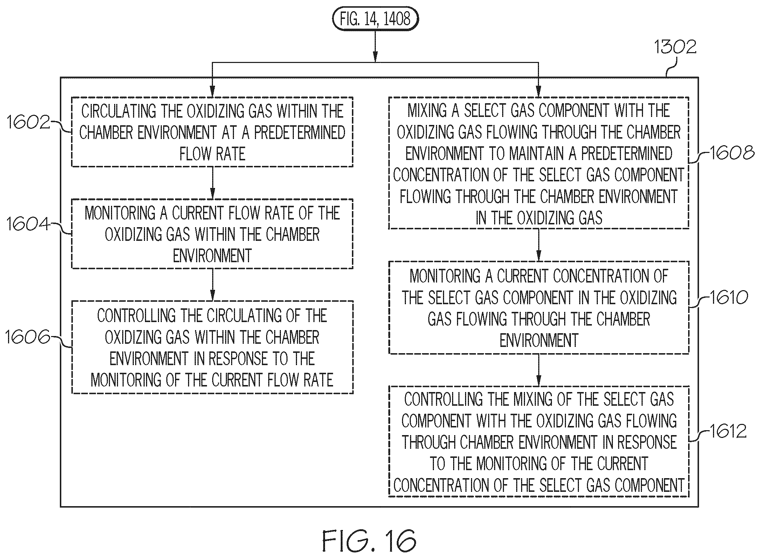

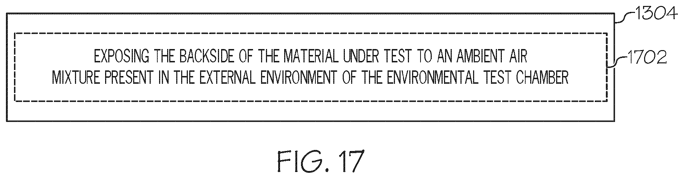

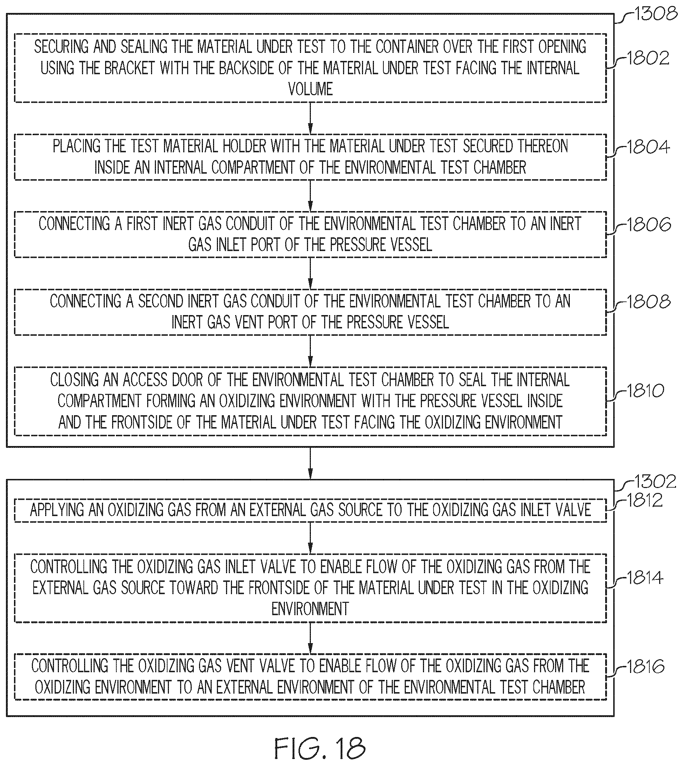

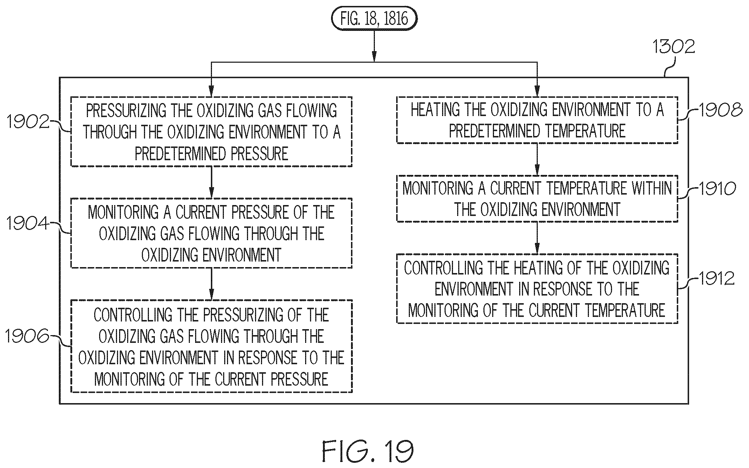

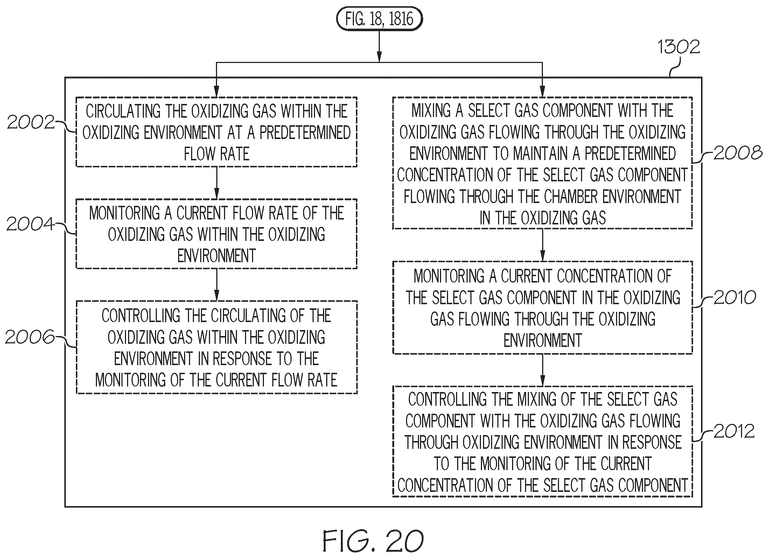

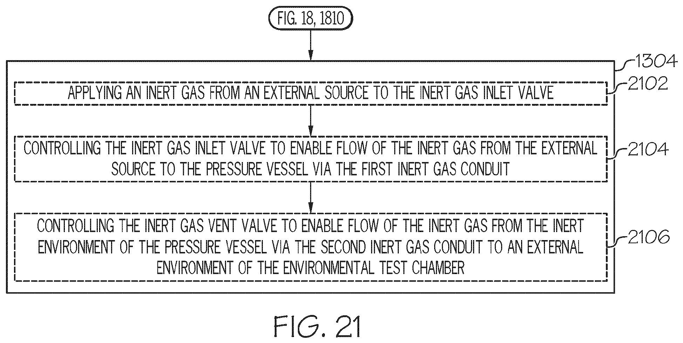

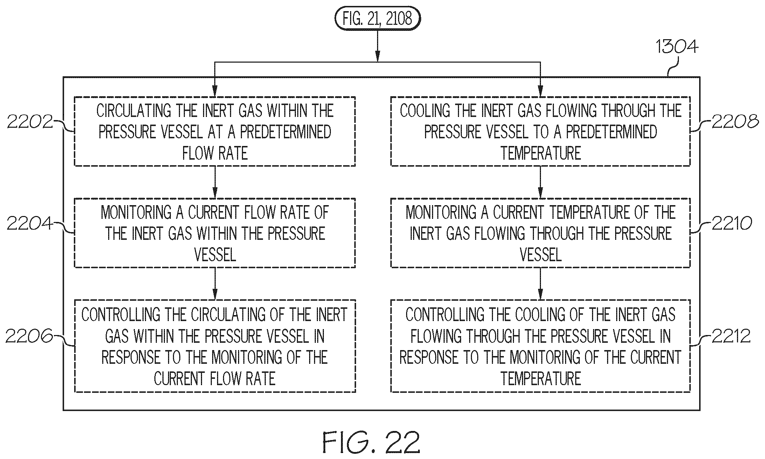

Fig. 13 provides an example of the method 1300. Fig. 14 provides an example of the securing 1308 of the material under test 202 in the method 1300 of Fig. 13 and an example of the exposing 1302 of the frontside 204 of the material under test 202 in the method 1300. Fig. 15, in combination with Fig. 14, provides another example of the exposing 1302 of the frontside 204 of the material under test 202 in the method 1300. Fig. 16, in combination with Fig. 14, provides yet another example of the exposing 1302 of the frontside 204 of the material under test 202 in the method 1300. Fig. 17 provides an example of the exposing 1304 of the backside 206 of the material under test 202 in the method 1300. Fig. 18 provides another example of the securing 1308 of the material under test 202 in the method 1300 and still another example of the exposing 1302 of the frontside 204 of the material under test 202 in the method 1300. Fig. 19 provides still yet another example of the exposing 1302 of the frontside 204 of the material under test 202 in the method 1300. Fig. 20 provides another example of the exposing 1302 of the frontside 204 of the material under test 202 in the method 1300. Fig. 21, in combination with Fig. 18, provides another example of the exposing 1304 of the backside 206 of the material under test 202 in the method 1300. Fig. 22, in combination with Figs. 18 and 21, provides yet another example the exposing 1304 of the backside 206 of the material under test 202 in the method 1300.

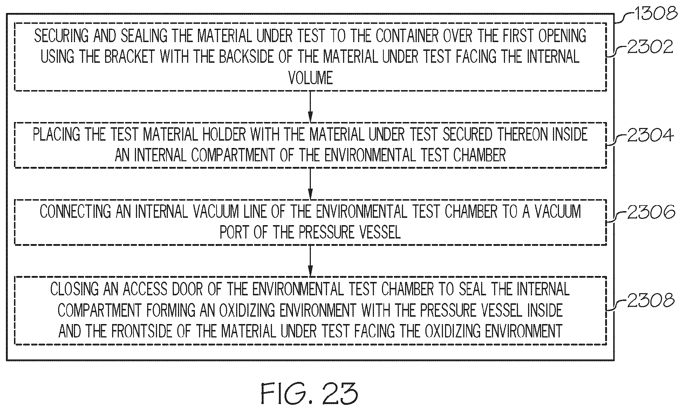

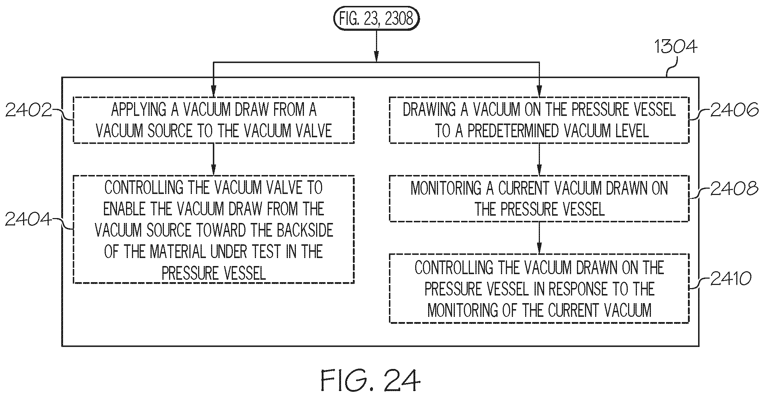

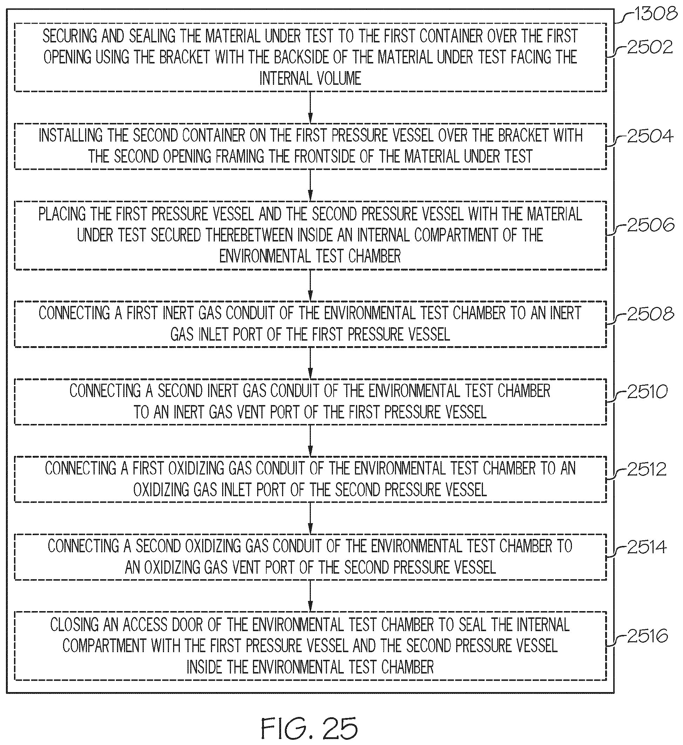

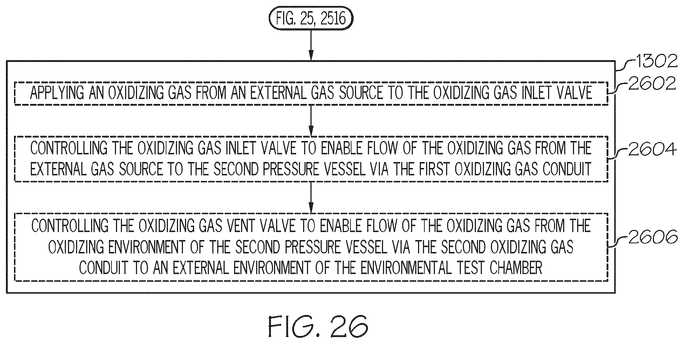

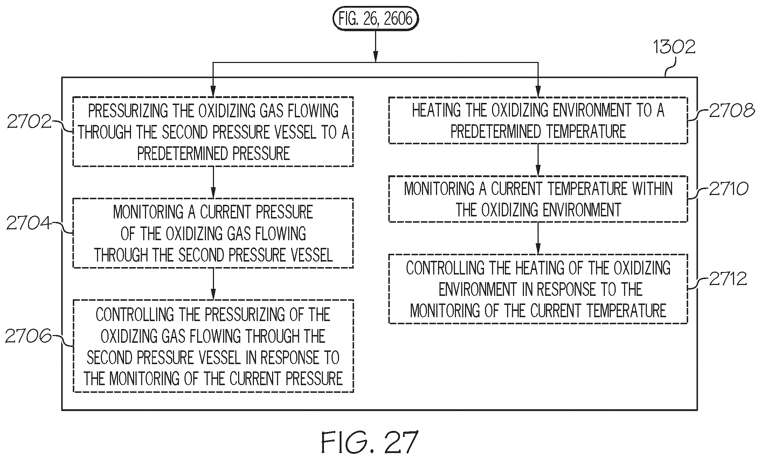

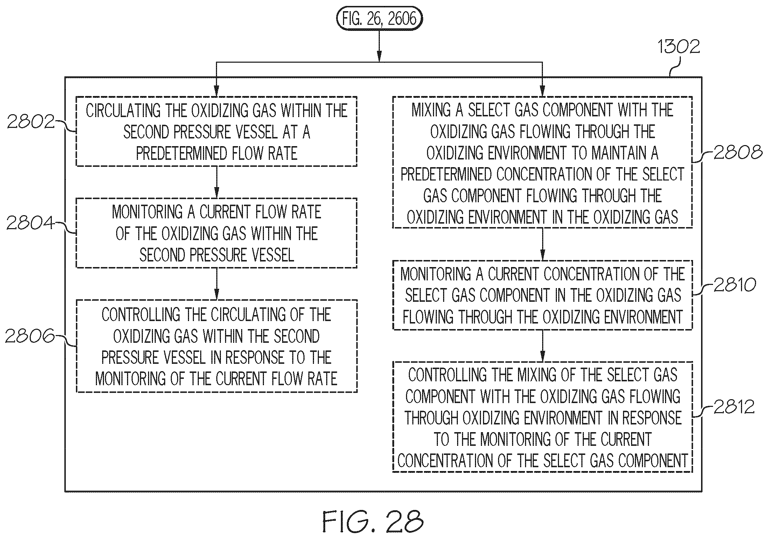

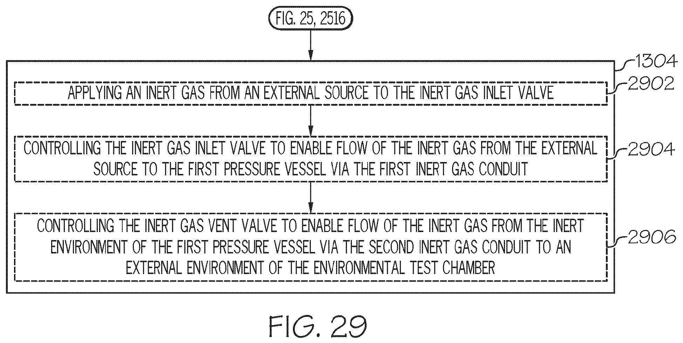

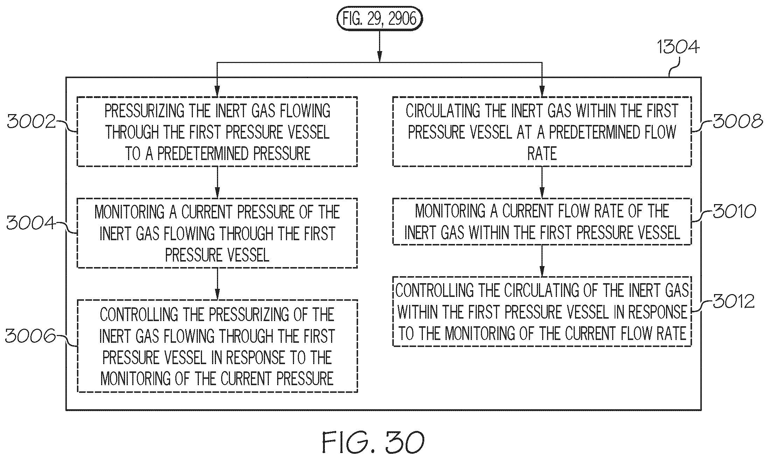

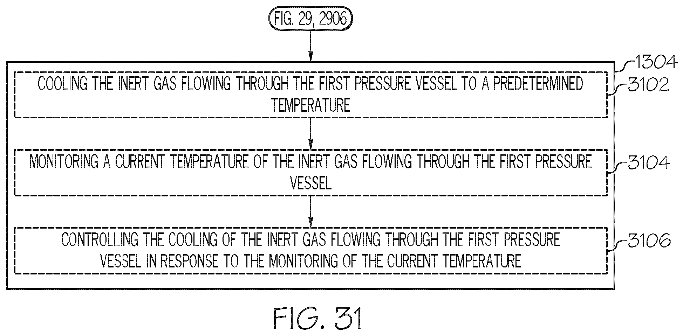

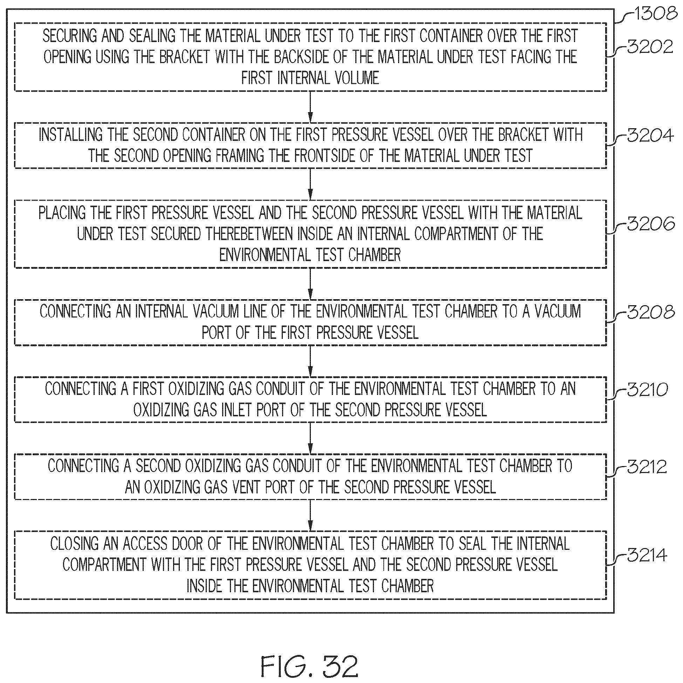

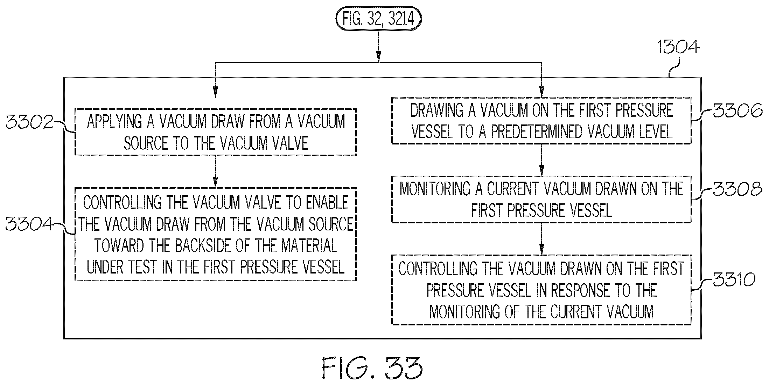

Fig. 23 provides yet another example of the securing 1308 of the material under test 202 in the method 1300. Fig. 24, in combination with Fig. 23, provides still another example of the exposing 1304 of the backside 206 of the material under test 202 in the method 1300. Fig. 25 provides still another example of the securing 1308 of the material under test 202 in the method 1300. Fig. 26, in combination with Fig. 25, provides another example of the exposing 1302 of the frontside 204 of the material under test 202 in the method 1300. Fig. 27, in combination with Figs. 25 and 26, provides yet another example of the exposing 1302 of the frontside 204 of the material under test 202 in the method 1300. Fig. 28, in combination with Figs. 25 and 26, provides still another example of the exposing 1302 of the frontside 204 of the material under test 202 in the method 1300. Fig. 29, in combination with Fig. 25, provides still yet another example of the exposing 1304 of the backside 206 of the material under test 202 in the method 1300. Fig. 30, in combination with Figs. 25 and 29, provides another example of the exposing 1304 of the backside 206 of the material under test 202 in the method 1300. Fig. 31, in combination with Figs. 25 and 29, provides yet another example of the exposing 1304 of the backside 206 of the material under test 202 in the method 1300. Fig. 32 provides still yet another example of the securing 1308 of the material under test 202 in the method 1300. Fig. 33, in combination with Fig. 32, provides still another example of the exposing 1304 of the backside 206 of the material under test 202 in the method 1300.

With reference again to Figs. 1, 2A-B, 3, 4, 5A-B, 6-9, 10A-B and 11-33, in one or more examples, a method 1300 (see Fig. 13) for improving fidelity of thermal oxidative stability testing includes exposing 1302 a frontside 204 of a material under test 202 to a first environment 205 during an exposure portion of a thermal oxidative stability test for the material under test 202. At 1304, a backside 206 of the material under test 202 is exposed to a second environment 207 during the exposure portion. The second environment 207 being different from the first environment 205 and isolated from the first environment 205.

In another example, the method 1300 also includes setting up 1306 conditions and parameters for operation of an environmental test chamber 100 of a test fixture 300 in conjunction with the exposure portion. At 1308, the material under test 202 is secured to a test material holder 200 of the test fixture 300 in conjunction with the exposure portion. In a further example, the environmental test chamber 100 includes an enclosure 102 with an opening 104 that provides access to an internal compartment 106 of the environmental test chamber 100. The internal compartment 106 defines a chamber environment 108. The test material holder 200 includes a bracket 208 sized to frame the opening 104. In this example, the securing 1308 of the material under test 202 includes securing and sealing 1402 (see Fig. 14) the material under test 202 over the opening 104 using the bracket 208 with the frontside 204 of the material under test 202 facing the chamber environment 108 and the backside 206 of the material under test 202 facing an external environment 112 of the environmental test chamber 100. In an even further example, the first environment 205 includes the chamber environment 108 and the second environment 207 includes the external environment 112 of the environmental test chamber 100.

In another even further example, the environmental test chamber 100 includes an oxidizing gas inlet valve 302 and an oxidizing gas vent valve 308. In this example, the exposing 1302 of the frontside 204 includes applying 1404 an oxidizing gas 304 from an external gas source 306 to the oxidizing gas inlet valve 302. At 1406, the oxidizing gas inlet valve 302 is controlled to enable flow of the oxidizing gas 304 from the external gas source 306 toward the frontside 204 of the material under test 202 in the chamber environment 108. At 1408, the oxidizing gas vent valve 308 is controlled to enable flow of the oxidizing gas 304 from the chamber environment 108 to the external environment 112 of the environmental test chamber 100.

In an even further example, the exposing 1302 of the frontside 204 also includes pressurizing 1502 (see Fig. 15) the oxidizing gas 304 flowing through the chamber environment 108 to a predetermined pressure. In an even yet further example, the exposing 1302 of the frontside 204 also includes monitoring 1504 a current pressure of the oxidizing gas 304 flowing through the chamber environment 108. At 1506, the pressurizing of the oxidizing gas 304 flowing through the chamber environment 108 is controlled in response to the monitoring of the current pressure. In another even further example, the exposing 1302 of the frontside 204 also includes heating 1508 the chamber environment 108 to a predetermined temperature. In an even yet further example, the exposing 1302 of the frontside 204 also includes monitoring 1510 a current temperature within the chamber environment 108. At 1512, the heating of the chamber environment 108 is controlled in response to the monitoring of the current temperature.

In yet another even further example, the exposing 1302 of the frontside 204 also includes circulating 1602 (see Fig. 16) the oxidizing gas 304 within the chamber environment 108 at a predetermined flow rate. In an even yet further example, the exposing 1302 of the frontside 204 also includes monitoring 1604 a current flow rate of the oxidizing gas 304 within the chamber environment 108. At 1606, the circulating of the oxidizing gas 304 within the chamber environment 108 is controlled in response to the monitoring of the current flow rate. In still another even further example, the exposing 1302 of the frontside 204 includes mixing 1608 a select gas component 318 with the oxidizing gas 304 flowing through the chamber environment 108 to maintain a predetermined concentration of the select gas component 318 flowing through the chamber environment 108 in the oxidizing gas 304. In an even yet further example, the exposing 1302 of the frontside 204 also includes monitoring 1610 a current concentration of the select gas component 318 in the oxidizing gas 304 flowing through the chamber environment 108. At 1612, the mixing of the select gas component 318 with the oxidizing gas 304 flowing through chamber environment 108 is controlled in response to the monitoring of the current concentration of the select gas component 318.

In yet another further example, the exposing 1304 of the backside 206 includes exposing 1702 (see Fig. 17) the backside 206 of the material under test 202 to an ambient air mixture present in the external environment 112 of the environmental test chamber 100.

In yet another example of the method 1300, the test material holder 200 includes a container 502 and a bracket 208. The container 502 has a first opening 504 that provides access to an internal volume 506 of the container 502. The bracket 208 is sized to frame the first opening 504. In this example, the securing 1308 of the material under test 202 includes securing and sealing 1802 (see Fig. 18) the material under test 202 to the container 502 over the first opening 504 using the bracket 208 with the backside 206 of the material under test 202 facing the internal volume 506. The container 502 with the material under test 202 secured thereon forms a pressure vessel 500 that defines an inert environment 509 within the internal volume 506 of the container 502. At 1804, the test material holder 200 with the material under test 202 secured thereon is placed inside an internal compartment 106 of the environmental test chamber 100. At 1806, a first inert gas conduit 702 of the environmental test chamber 100 is connected to an inert gas inlet port 712 of the pressure vessel 500. At 1808, a second inert gas conduit 706 of the environmental test chamber 100 is connected to an inert gas vent port 718 of the pressure vessel 500. At 1810, an access door 402 of the environmental test chamber 100 is closed to seal the internal compartment 106 forming an oxidizing environment 511 with the pressure vessel 500 inside and the frontside 204 of the material under test 202 facing the oxidizing environment 511. In a further example, the first environment 205 includes the oxidizing environment 511 and the second environment 207 includes the inert environment 509.

In another further example, the environmental test chamber 100 includes an oxidizing gas inlet valve 302 and an oxidizing gas vent valve 308. In this example, the exposing 1302 of the frontside 204 includes applying 1812 an oxidizing gas 304 from an external gas source 306 to the oxidizing gas inlet valve 302. At 1814, the oxidizing gas inlet valve 302 is controlled to enable flow of the oxidizing gas 304 from the external gas source 306 toward the frontside 204 of the material under test 202 in the oxidizing environment 511. At 1816, the oxidizing gas vent valve 308 is controlled to enable flow of the oxidizing gas 304 from the oxidizing environment 511 to an external environment 112 of the environmental test chamber 100.

In an even further example, the exposing 1302 of the frontside 204 also includes pressurizing 1902 (see Fig. 19) the oxidizing gas 304 flowing through the oxidizing environment 511 to a predetermined pressure. In an even yet further example, the exposing 1302 of the frontside 204 also includes monitoring 1904 a current pressure of the oxidizing gas 304 flowing through the oxidizing environment 511. At 1906, the pressurizing of the oxidizing gas 304 flowing through the oxidizing environment 511 is controlled in response to the monitoring of the current pressure.

In another even further example, the exposing 1302 of the frontside 204 also includes heating 1908 the oxidizing environment 511 to a predetermined temperature. In an even yet further example, the exposing 1302 of the frontside 204 also includes monitoring 1910 a current temperature within the oxidizing environment 511. At 1912, the heating of the oxidizing environment 511 is controlled in response to the monitoring of the current temperature.

In yet another even further example, the exposing 1302 of the frontside 204 also include circulating 2002 (see Fig. 20) the oxidizing gas 304 within the oxidizing environment 511 at a predetermined flow rate. In an even yet further example, the exposing 1302 of the frontside 204 also includes monitoring 2004 a current flow rate of the oxidizing gas 304 within the oxidizing environment 511. At 2006, the circulating of the oxidizing gas 304 within the oxidizing environment 511 is controlled in response to the monitoring of the current flow rate.

In still another even further example, the exposing 1302 of the frontside 204 also includes mixing 2008 a select gas component 318 with the oxidizing gas 304 flowing through the oxidizing environment 511 to maintain a predetermined concentration of the select gas component 318 flowing through the oxidizing environment 511 in the oxidizing gas 304. In an even yet further example, the exposing 1302 of the frontside 204 also includes monitoring 2010 a current concentration of the select gas component 318 in the oxidizing gas 304 flowing through the oxidizing environment 511. At 2012, the mixing of the select gas component 318 with the oxidizing gas 304 flowing through oxidizing environment 511 is controlled in response to the monitoring of the current concentration of the select gas component 318.

In yet another further example, the environmental test chamber 100 includes an inert gas inlet valve 602 connected to the first inert gas conduit 702 and an inert gas vent valve 608 connected to the second inert gas conduit 706. In this example, the exposing 1304 of the backside 206 includes applying 2102 (see Fig. 21) an inert gas 604 from an external source 606 to the inert gas inlet valve 602. At 2104, the inert gas inlet valve 602 is controlled to enable flow of the inert gas 604 from the external source 606 to the pressure vessel 500 via the first inert gas conduit 702. At 2106, the inert gas vent valve 608 is controlled to enable flow of the inert gas 604 from the inert environment 509 of the pressure vessel 500 via the second inert gas conduit 706 to an external environment 112 of the environmental test chamber 100.

In an even further example, the exposing 1304 of the backside 206 also includes circulating 2202 (see Fig. 22) the inert gas 604 within the pressure vessel 500 at a predetermined flow rate. In an even yet further example, the exposing 1304 of the backside 206 also includes monitoring 2204 a current flow rate of the inert gas 604 within the pressure vessel 500. At 2206, the circulating of the inert gas 604 within the pressure vessel 500 is controlled in response to the monitoring of the current flow rate.

In another even further example, the exposing 1304 of the backside 206 also includes cooling 2208 the inert gas 604 flowing through the pressure vessel 500 to a predetermined temperature. In an even yet further example, the exposing 1304 of the backside 206 also includes monitoring 2210 a current temperature of the inert gas 604 flowing through the pressure vessel 500. At 2212, the cooling of the inert gas 604 flowing through the pressure vessel 500 is controlled in response to the monitoring of the current temperature.

In still another example of the method 1300, the test material holder 200 includes a container 502 and a bracket 208. The container 502 has a first opening 504 that provides access to an internal volume 506 of the container 502. The bracket 208 is sized to frame the first opening 504. In this example, the securing 1308 of the material under test 202 includes securing and sealing 2302 (see Fig. 23) the material under test 202 to the container 502 over the first opening 504 using the bracket 208 with the backside 206 of the material under test 202 facing the internal volume 506. The container 502 with the material under test 202 secured thereon forms a pressure vessel 500 that defines an inert environment 509 within the internal volume 506 of the container 502. At 2304, the test material holder 200 with the material under test 202 secured thereon is placed inside an internal compartment 106 of the environmental test chamber 100. At 2306, an internal vacuum line 804 of the environmental test chamber 100 is connected to a vacuum port 808 of the pressure vessel 500. At 2308, an access door 402 of the environmental test chamber 100 is closed to seal the internal compartment 106 forming an oxidizing environment 511 with the pressure vessel 500 inside and the frontside 204 of the material under test 202 facing the oxidizing environment 511.

In a further example, the environmental test chamber 100 includes a vacuum valve 802. In this example, the exposing 1304 of the backside 206 also includes applying 2402 (see Fig. 24) a vacuum draw from a vacuum system 902 to the vacuum valve 802. At 2404, the vacuum valve 802 is controlled to enable the vacuum draw from the vacuum system 902 toward the backside 206 of the material under test 202 in the pressure vessel 500.

In another further example, the environmental test chamber 100 also includes a vacuum pump 904. In this example, the exposing 1304 of the backside 206 also includes drawing 2406 a vacuum on the pressure vessel 500 to a predetermined vacuum level. In an even further example, the exposing 1304 of the backside 206 also includes monitoring 2408 a current vacuum drawn on the pressure vessel 500. At 2410, the vacuum drawn on the pressure vessel 500 is controlled in response to the monitoring of the current vacuum.

In still yet another example of the method 1300, the test material holder 200 includes a first container 502, a bracket 208 and a second container 1002. The first container 502 has a first opening 504 that provides access to a first internal volume 506 of the first container 502. The bracket 208 is sized to frame the first opening 504. The second container 1002 has a second opening 1004 that provides access to a second internal volume 1006. In this example, the securing 1308 of the material under test 202 includes securing and sealing 2502 (see Fig. 25) the material under test 202 to the first container 502 over the first opening 504 using the bracket 208 with the backside 206 of the material under test 202 facing the first internal volume 506. The first container 502 with the material under test 202 secured thereon forms a first pressure vessel 500 that defines an inert environment 509 within the first internal volume 506 of the first container 502. At 2504, the second container 1002 is installed on the first pressure vessel 500 over the bracket 208 with the second opening 1004 framing the frontside 204 of the material under test 202. The second container 1002 and the frontside 204 of the material under test 202 forms a second pressure vessel 1000 that defines an oxidizing environment 511 within the second internal volume 1006 of the second container 1002. At 2506, the first pressure vessel 500 and the second pressure vessel 1000 with the material under test 202 secured therebetween are placed inside an internal compartment 106 of the environmental test chamber 100. At 2508, a first inert gas conduit 702 of the environmental test chamber 100 is connected to an inert gas inlet port 712 of the first pressure vessel 500. At 2510, a second inert gas conduit 706 of the environmental test chamber 100 is connected to an inert gas vent port 718 of the first pressure vessel 500. At 2512, a first oxidizing gas conduit 1102 of the environmental test chamber 100 is connected to an oxidizing gas inlet port 1112 of the second pressure vessel 1000. At 2514, a second oxidizing gas conduit 1106 of the environmental test chamber 100 is connected to an oxidizing gas vent port 1118 of the second pressure vessel 1000. At 2516, an access door 402 of the environmental test chamber 100 is closed to seal the internal compartment 106 with the first pressure vessel 500 and the second pressure vessel 1000 inside the environmental test chamber 100. In a further example, the first environment 205 includes the oxidizing environment 511 and the second environment 207 includes the inert environment 509.

In another further example, the environmental test chamber 100 includes an oxidizing gas inlet valve 302 connected to the first oxidizing gas conduit 1102 and an oxidizing gas vent valve 308 connected to the second oxidizing gas conduit 1106. In this example, the exposing 1302 of the frontside 204 includes applying 2602 (see Fig. 26) an oxidizing gas 304 from an external gas source 306 to the oxidizing gas inlet valve 302. At 2604, the oxidizing gas inlet valve 302 is controlled to enable flow of the oxidizing gas 304 from the external gas source 306 to the second pressure vessel 1000 via the first oxidizing gas conduit 1102. At 2606, the oxidizing gas vent valve 308 is controlled to enable flow of the oxidizing gas 304 from the oxidizing environment 511 of the second pressure vessel 1000 via the second oxidizing gas conduit 1106 to an external environment 112 of the environmental test chamber 100.

In an even further example, the exposing 1302 of the frontside 204 also includes pressurizing 2702 (see Fig. 27) the oxidizing gas 304 flowing through the second pressure vessel 1000 to a predetermined pressure. In an even yet further example, the exposing 1302 of the frontside 204 also includes monitoring 2704 a current pressure of the oxidizing gas 304 flowing through the second pressure vessel 1000. At 2706, the pressurizing of the oxidizing gas 304 flowing through the second pressure vessel 1000 is controlled in response to the monitoring of the current pressure. In another even further example, the exposing 1302 of the frontside 204 also includes heating 2708 the oxidizing environment 511 to a predetermined temperature. In an even yet further example, the exposing 1302 of the frontside 204 also includes monitoring 2710 a current temperature within the oxidizing environment 511. At 2712, the heating of the oxidizing environment 511 is controlled in response to the monitoring of the current temperature.

In yet another even further example, the exposing 1302 of the frontside 204 also includes circulating 2802 (see Fig. 28) the oxidizing gas 304 within the second pressure vessel 1000 at a predetermined flow rate. In an even yet further example, the exposing 1302 of the frontside 204 also includes monitoring 2804 a current flow rate of the oxidizing gas 304 within the second pressure vessel 1000. At 2806, the circulating of the oxidizing gas 304 within the second pressure vessel 1000 is controlled in response to the monitoring of the current flow rate. In still another even further example, the exposing 1302 of the frontside 204 also includes mixing 2808 a select gas component 318 with the oxidizing gas 304 flowing through the oxidizing environment 511 to maintain a predetermined concentration of the select gas component 318 flowing through the oxidizing environment 511 in the oxidizing gas 304. In an even yet further example, the exposing 1302 of the frontside 204 also includes monitoring 2810 a current concentration of the select gas component 318 in the oxidizing gas 304 flowing through the oxidizing environment 511. At 2812, the mixing of the select gas component 318 with the oxidizing gas 304 flowing through oxidizing environment 511 is controlled in response to the monitoring of the current concentration of the select gas component 318.

In yet another further example, the environmental test chamber 100 includes an inert gas inlet valve 602 connected to the first inert gas conduit 702 and an inert gas vent valve 608 connected to the second inert gas conduit 706. In this example, the exposing 1304 of the backside 206 also includes applying 2902 (see Fig. 29) an inert gas 604 from an external source 606 to the inert gas inlet valve 602. At 2904, the inert gas inlet valve 602 is controlled to enable flow of the inert gas 604 from the external source 606 to the first pressure vessel 500 via the first inert gas conduit 702. At 2906, the inert gas vent valve 608 is controlled to enable flow of the inert gas 604 from the inert environment 509 of the first pressure vessel 500 via the second inert gas conduit 706 to an external environment 112 of the environmental test chamber 100. In an even further example, the exposing 1304 of the backside 206 also includes pressurizing 3002 (see Fig. 30) the inert gas 604 flowing through the first pressure vessel 500 to a predetermined pressure. In an even yet further example, the exposing 1304 of the backside 206 also includes monitoring 3004 a current pressure of the inert gas 604 flowing through the first pressure vessel 500. At 3006, the pressurizing of the inert gas 604 flowing through the first pressure vessel 500 is controlled in response to the monitoring of the current pressure.

In another even further example, the exposing 1304 of the backside 206 also includes circulating 3008 the inert gas 604 within the first pressure vessel 500 at a predetermined flow rate. In an even yet further example, the exposing 1304 of the backside 206 also includes monitoring 3010 a current flow rate of the inert gas 604 within the first pressure vessel 500. At 3012, the circulating of the inert gas 604 within the first pressure vessel 500 is controlled in response to the monitoring of the current flow rate. In yet another even further example, the exposing 1304 of the backside 206 also includes cooling 3102 (see Fig. 31) the inert gas 604 flowing through the first pressure vessel 500 to a predetermined temperature. In an even yet further example, the exposing 1304 of the backside 206 also includes monitoring 3104 a current temperature of the inert gas 604 flowing through the first pressure vessel 500. At 3106, the cooling of the inert gas 604 flowing through the first pressure vessel 500 is controlled in response to the monitoring of the current temperature.

In another example of the method 1300, the test material holder 200 includes a first container 502, a bracket 208 and a second container 1002. The first container 502 has a first opening 504 that provides access to a first internal volume 506 of the first container 502. The bracket 208 is sized to frame the first opening 504. The second container 1002 has a second opening 1004 that provides access to a second internal volume 1006. In this example, the securing 1308 of the material under test 202 includes securing and sealing 3202 (see Fig. 32) the material under test 202 to the first container 502 over the first opening 504 using the bracket 208 with the backside 206 of the material under test 202 facing the first internal volume 506. The first container 502 with the material under test 202 secured thereon forms a first pressure vessel 500 that defines an inert environment 509 within the first internal volume 506 of the first container 502. At 3204, the second container 1002 is installed on the first pressure vessel 500 over the bracket 208 with the second opening 1004 framing the frontside 204 of the material under test 202. The second container 1002 and the frontside 204 of the material under test 202 forms a second pressure vessel 1000 that defines an oxidizing environment 511 within the second internal volume 1006 of the second container 1002. At 3206, the first pressure vessel 500 and the second pressure vessel 1000 with the material under test 202 secured therebetween are placed inside an internal compartment 106 of the environmental test chamber 100. At 3208, an internal vacuum line 804 of the environmental test chamber 100 is connected to a vacuum port 808 of the first pressure vessel 500. At 3210, a first oxidizing gas conduit 1102 of the environmental test chamber 100 is connected to an oxidizing gas inlet port 1112 of the second pressure vessel 1000. At 3212, a second oxidizing gas conduit 1106 of the environmental test chamber 100 is connected to an oxidizing gas vent port 1118 of the second pressure vessel 1000. At 3214, an access door 402 of the environmental test chamber 100 is closed to seal the internal compartment 106 with the first pressure vessel 500 and the second pressure vessel 1000 inside the environmental test chamber 100.

In a further example, the environmental test chamber 100 includes a vacuum valve 802. In this example, the exposing 1304 of the backside 206 also includes applying 3302 (see Fig. 33) a vacuum draw from a vacuum system 902 to the vacuum valve 802. At 3304, the vacuum valve 802 is controlled to enable the vacuum draw from the vacuum system 902 toward the backside 206 of the material under test 202 in the first pressure vessel 500. In another further example, the exposing 1304 of the backside 206 also includes drawing 3306 a vacuum on the first pressure vessel 500 to a predetermined pressure vessel. In an even further example, the exposing 1304 of the backside 206 also includes monitoring 3308 a current vacuum drawn on the first pressure vessel 500. At 3310, the vacuum drawn on the first pressure vessel 500 is controlled in response to the monitoring of the current vacuum.

Referring generally to Figs. 1, 2A-B, 3, 4, 5A-B, 6, 7, 10A-B, 11, 34-39 and 42, by way of examples, the present disclosure is directed to a method 3400, 3500, 3600, 3700, 3800, 3900 for improving fidelity of thermal oxidative stability testing. Fig. 1 shows an example of an environmental test chamber 100 of the test fixture 300. Fig. 2A shows an example of a test material holder 200 of a test fixture 300 for improving fidelity of thermal oxidative stability testing. Fig. 2B shows a cross-sectional view of the test material holder 200 of Fig. 2A holding an example of a material under test 202. Fig. 3 provides a functional block diagram of an example of the test fixture 300. Fig. 4 shows another example of an environmental test chamber 100 in the test fixture 300. Fig. 5A shows another example of a test material holder 200 of the test fixture 300. Fig. 5B shows a cross-sectional view of the test material holder 200 of Fig. 5A holding an example of a material under test 202. Fig. 6 provides a functional block diagram of another example of the test fixture 300.

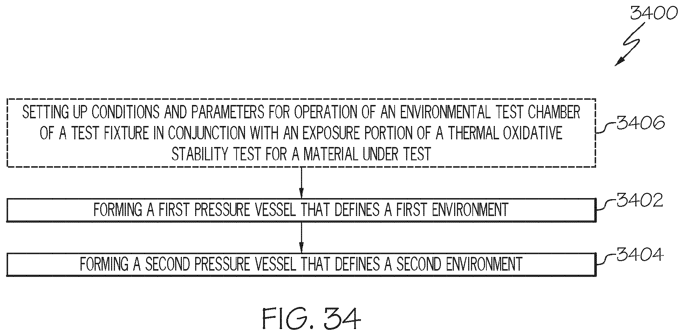

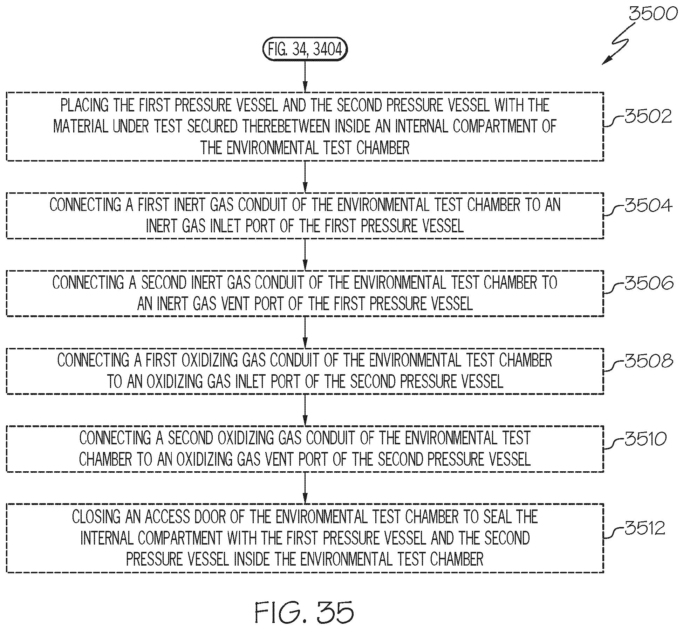

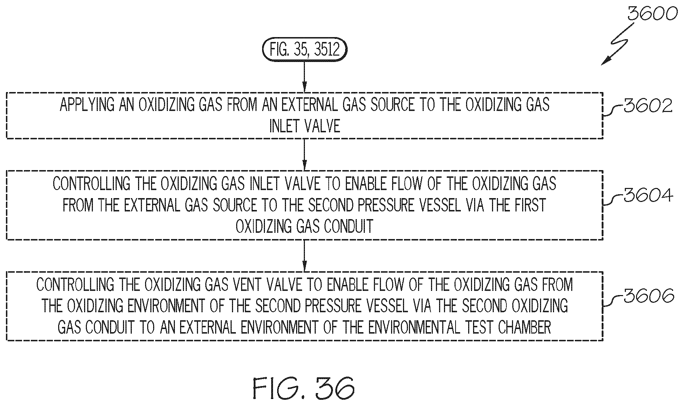

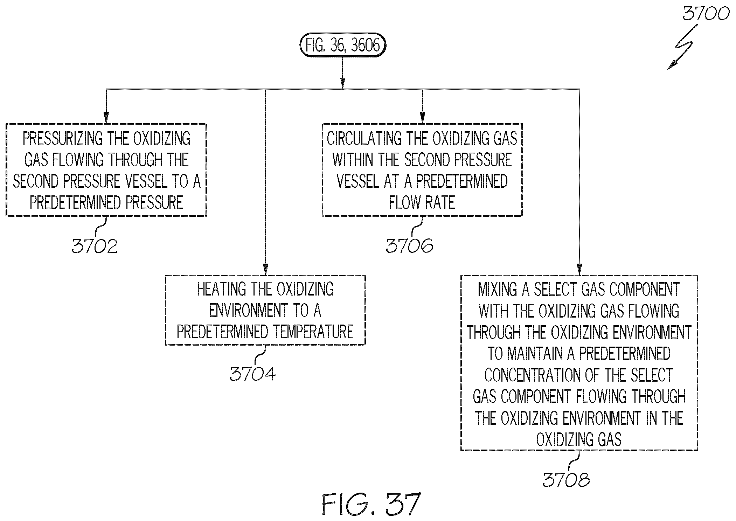

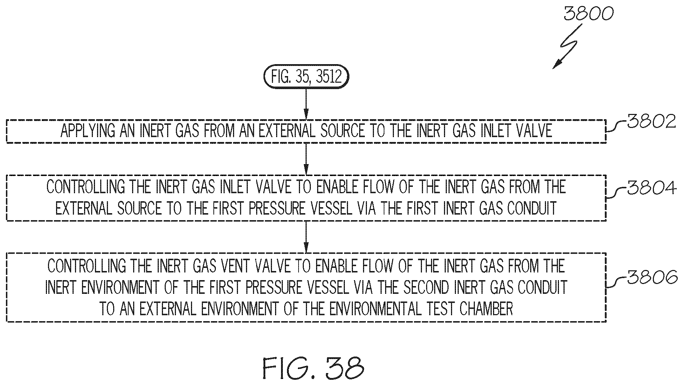

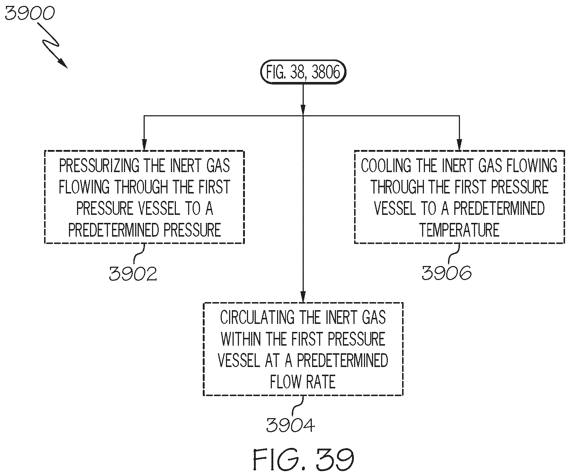

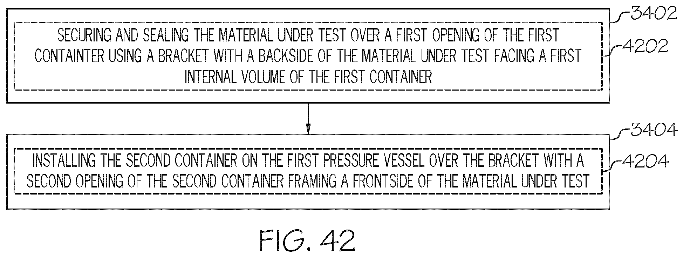

Fig. 7 provides a functional diagram of an example of the test material holder 200 of Fig. 5A inside an example of an enclosure 102 of an environmental test chamber 100. Fig. 10A shows yet another example of a test material holder 200 of the test fixture 300. Fig. 10B shows a cross-sectional view of the test material holder 200 of Fig. 10A holding an example of a material under test 202. Fig. 11 provides a functional diagram of an example of the test material holder 200 of Fig. 10A inside an example of an enclosure 102 of an environmental test chamber 100. Fig. 34 provides an example of the method 3400. Fig. 35, in combination with Fig. 34, provides an example of the method 3500. Fig. 36, in combination with Figs. 34 and 35, provides an example of the method 3600. Fig. 37, in combination with Figs. 34, 35 and 36, provides an example of the method 3700. Fig. 38, in combination with Figs. 34 and 35, provides an example of the method 3800. Fig. 39, in combination with Figs. 34, 35 and 38, provides an example of the method 3900. Fig. 42 provides examples of the forming 3402 of the first pressure vessel 500 and the forming 3404 of the second pressure vessel 1000 in the method of Fig. 34.

With reference again to Figs. 1, 2A-B, 3, 5A-B, 10A-B, 34 and 42, in one or more examples, a method 3400 (see Fig. 34) for improving fidelity of thermal oxidative stability testing includes forming 3402 a first pressure vessel 500 that defines a first environment 508. The first pressure vessel 500 includes a first container 502 and a material under test 202. At 3404, a second pressure vessel 1000 that defines a second environment 510 is formed. The second pressure vessel includes a second container 1002 and the material under test 202. The second environment 510 being different from the first environment 508 and isolated from the first environment 508.

In another example, the method 3400 also includes setting up 3406 conditions and parameters for operation of an environmental test chamber 100 of a test fixture 300 in conjunction with an exposure portion of a thermal oxidative stability test for a material under test 202. The test fixture 300 includes a first container 502, a bracket 208 and a second container 1002. The first container 502 has a first opening 504 that provides access to a first internal volume 506 of the first container 502. The bracket 208 is sized to frame the first opening 504. The second container 1002 has a second opening 1004 that provides access to a second internal volume 1006.

In yet another example of the method 3400, the forming 3402 of the first pressure vessel 500 includes securing and sealing 4202 (see Fig. 42) the material under test 202 over a first opening 504 of the first container 502 using a bracket 208 with a backside 206 of the material under test 202 facing a first internal volume 506 of the first container 502. The first container 502 with the material under test 202 secured thereon forms the first pressure vessel 500. In a further example, the forming 3404 of the second pressure vessel 1000 includes installing 4204 the second container 1002 on the first pressure vessel 500 over the bracket 208 with a second opening 1004 of the second container 1002 framing a frontside 204 of the material under test 202. The second container 1002 and the frontside 204 of the material under test 202 forms the second pressure vessel 1000. In an even further example, the first environment 508 includes an inert environment 509 and the second environment includes an oxidizing environment 511.

With reference again to Figs. 1, 2A-B, 4, 5A-B, 7, 10A-B, 11, 34 and 35, in one or more examples, a method 3500 (see Fig. 35) for improving fidelity of thermal oxidative stability testing includes the method 3400 of Fig. 34 and continues from 3404 to 3502 where the first pressure vessel 500 and the second pressure vessel 1000 with the material under test 202 secured therebetween are placed inside an internal compartment 106 of an environmental test chamber 100. At 3504, a first inert gas conduit 702 of the environmental test chamber 100 is connected to an inert gas inlet port 712 of the first pressure vessel 500. At 3506, a second inert gas conduit 706 of the environmental test chamber 100 is connected to an inert gas vent port 718 of the first pressure vessel 500. At 3508, a first oxidizing gas conduit 1102 of the environmental test chamber 100 is connected to an oxidizing gas inlet port 1112 of the second pressure vessel 1000. At 3510, a second oxidizing gas conduit 1106 of the environmental test chamber 100 is connected to an oxidizing gas vent port 1118 of the second pressure vessel 1000. At 3512, an access door 402 of the environmental test chamber 100 is closed to seal the internal compartment 106 with the first pressure vessel 500 and the second pressure vessel 1000 inside the environmental test chamber 100.

With reference again to Figs. 1, 3, 5A-B, 10A-B, 11 and 34-36, in one or more examples, a method 3600 (see Fig. 36) for improving fidelity of thermal oxidative stability testing includes the method 3400 of Fig. 34 and the method 3500 of Fig. 35. In this example, the environmental test chamber 100 includes an oxidizing gas inlet valve 302 connected to the first oxidizing gas conduit 1102 and an oxidizing gas vent valve 308 connected to the second oxidizing gas conduit 1106. The method 3600 continues from 3512 of Fig. 35 to 3602 where an oxidizing gas 304 from an external gas source 306 is applied to the oxidizing gas inlet valve 302. At 3604, the oxidizing gas inlet valve 302 is controlled to enable flow of the oxidizing gas 304 from the external gas source 306 to the second pressure vessel 1000 via the first oxidizing gas conduit 1102. At 3606, the oxidizing gas vent valve 308 is controlled to enable flow of the oxidizing gas 304 from the oxidizing environment 511 of the second pressure vessel 1000 via the second oxidizing gas conduit 1106 to an external environment 112 of the environmental test chamber 100.

With reference again to Figs. 3, 5A-B, 10A-B, and 34-37, in one or more examples, a method 3700 (see Fig. 37) for improving fidelity of thermal oxidative stability testing includes the method 3400 of Fig. 34, the method 3500 of Fig. 35 and the method 3600 of Fig. 36. The method 3700 continues from 3606 of Fig. 36 to 3702, 3704, 3706 or 3708. At 3702, the oxidizing gas 304 flowing through the second pressure vessel 1000 is pressurized to a predetermined pressure. At 3704, the oxidizing environment 511 is heated to a predetermined temperature. At 3706, the oxidizing gas 304 within the second pressure vessel 1000 is circulated at a predetermined flow rate. At 3708, a select gas component 318 is mixed with the oxidizing gas 304 flowing through the oxidizing environment 511 to maintain a predetermined concentration of the select gas component 318 flowing through the oxidizing environment 511 in the oxidizing gas 304.

With reference again to Figs. 1, 5A-B, 6, 7, 34, 35 and 38, in one or more examples, a method 3800 (see Fig. 38) for improving fidelity of thermal oxidative stability testing includes the method 3400 of Fig. 34 and the method 3500 of Fig. 35. In this example, the environmental test chamber 100 includes an inert gas inlet valve 602 connected to the first inert gas conduit 702 and an inert gas vent valve 608 connected to the second inert gas conduit 706. The method 3800 continues from 3512 of Fig. 35 to 3802 where an inert gas 604 from an external source 606 is applied to the inert gas inlet valve 602. At 3804, the inert gas inlet valve 602 is controlled to enable flow of the inert gas 604 from the external source 606 to the first pressure vessel 500 via the first inert gas conduit 702. At 3806, the inert gas vent valve 608 is controlled to enable flow of the inert gas 604 from the inert environment 509 of the first pressure vessel 500 via the second inert gas conduit 706 to an external environment 112 of the environmental test chamber 100.

With reference again to Figs. 5A-B, 6, 34, 35, 38 and 39, in one or more examples, a method 3900 (see Fig. 39) for improving fidelity of thermal oxidative stability testing includes the method 3400 of Fig. 34, the method 3500 of Fig. 35 and the method 3800 of Fig. 38. The method 3900 continues from 3806 of Fig. 38 to 3902, 3904 or 3906. At 3902, the inert gas 604 flowing through the first pressure vessel 500 is pressurized to a predetermined pressure. At 3904, the inert gas 604 within the first pressure vessel 500 is circulated at a predetermined flow rate. At 3906, the inert gas 604 flowing through the first pressure vessel 500 is cooled to a predetermined temperature.

Referring generally to Figs. 2A-B, 3, 5A-B and 10A-B, 11 and 12, by way of examples, the present disclosure is directed to a test fixture 300 for improving fidelity of thermal oxidative stability testing. Fig. 2A shows an example of a test material holder 200 of the test fixture 300. Fig. 2B shows a cross-sectional view of the test material holder 200 of Fig. 2A holding an example of a material under test 202. Fig. 3 provides a functional block diagram of an example of the test fixture 300. Fig. 5A shows another example of a test material holder 200 of the test fixture 300. Fig. 5B shows a cross-sectional view of the test material holder 200 of Fig. 5A holding an example of a material under test 202. Fig. 10A shows yet another example of a test material holder 200 of the test fixture 300. Fig. 10B shows a cross-sectional view of the test material holder 200 of Fig. 10A holding an example of a material under test 202.

With reference again to Figs. 2A-B, 3, 5A-B and 10A-B, 11 and 12, in one or more examples, a test fixture 300 for improving fidelity of thermal oxidative stability testing includes a first container 502, a bracket 208 and a second container 1002. The first container 502 has a first opening 504 that provides access to a first internal volume 506. The bracket 208 is sized to frame the first opening 504 of the first container 502. A material under test 202 is sealed and secured to the first container 502 over the first opening 504 using the bracket 208 with a backside 206 of the material under test 202 facing the first internal volume 506. The first container 502 with the material under test 202 secured thereon forms a first pressure vessel 500 that defines a first environment 508 within the first internal volume 506. The second container 1002 having a second opening 1004 that provides access to a second internal volume 1006, the second container 1002 installed on the first pressure vessel 500 over the bracket 208 with the second opening 1004 framing a frontside 204 of the material under test 202. The second container 1002 and the frontside 204 of the material under test 202 forms a second pressure vessel 1000 that defines a second environment 510 within the second internal volume 1006 of the second container 1002. The second environment 510 being different from the first environment 508 and isolated from the first environment 508. In another example of the test fixture, the first environment 508 includes an inert environment 509 and the second environment 510 includes an oxidizing environment 511.

Examples of test fixtures 300 and methods 1300, 3400, 3500, 3600, 3700, 3800, 3900 for improving fidelity of thermal oxidative stability testing may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1, 2A-B, 3, 4, 5A-B, 6-9, 10A-B, 11 and 12, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1, 2A-B, 3, 4, 5A-B, 6-9, 10A-B, 11 and 12, referred to above, need be included in every example and not all elements, features and/or components described herein are necessarily depicted in each illustrative example. Accordingly, some of the elements, features and/or components described and illustrated in Figs. 1, 2A-B, 3, 4, 5A-B, 6-9, 10A-B, 11 and 12 may be combined in various ways without the need to include other features described and illustrated in Figs. 1, 2A-B, 3, 4, 5A-B, 6-9, 10A-B, 11 and 12, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1, 2A-B, 3, 4, 5A-B, 6-9, 10A-B, 11 and 12, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1, 2A-B, 3, 4, 5A-B, 6-9, 10A-B, 11 and 12 and such elements, features and/or components may not be discussed in detail herein with reference to each of Figs. 1, 2A-B, 3, 4, 5A-B, 6-9, 10A-B, 11 and 12. Similarly, all elements, features and/or components may not be labeled in each of Figs. 1, 2A-B, 3, 4, 5A-B, 6-9, 10A-B, 11 and 12, but reference numerals associated therewith may be utilized herein for consistency.

In Figs. 13-39, referred to above, the blocks may represent operations, steps and/or portions thereof, and lines connecting the various blocks do not imply any particular order or dependency of the operations or portions thereof. It will be understood that not all dependencies among the various disclosed operations are necessarily represented. Figs. 13-39 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

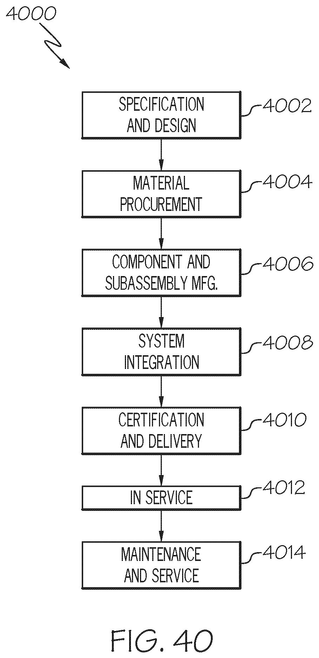

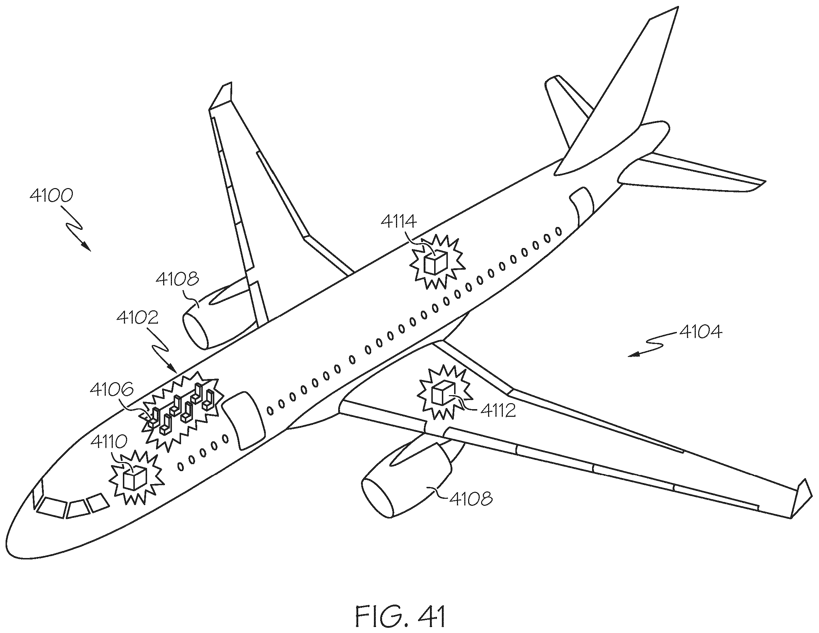

Examples of the subject matter disclosed herein may be described in the context of aircraft manufacturing and service method 4000 as shown in Fig. 40 and aircraft 4100 as shown in Fig. 41. In one or more examples, the disclosed test fixtures 300 and methods 1300, 3400, 3500, 3600, 3700, 3800, 3900 for improving fidelity of thermal oxidative stability testing may be used in aircraft manufacturing. During pre-production, the service method 4000 may include specification and design (block 4002) of aircraft 4100 and material procurement (block 4004). During production, component and subassembly manufacturing (block 4006) and system integration (block 4008) of aircraft 4100 may take place. Thereafter, aircraft 4100 may go through certification and delivery (block 4010) to be placed in service (block 4012). While in service, aircraft 4100 may be scheduled for routine maintenance and service (block 4014). Routine maintenance and service may include modification, reconfiguration, refurbishment, etc. of one or more systems of aircraft 4100.

Each of the processes of the service method 4000 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 41, aircraft 4100 produced by the service method 4000 may include airframe 4102 with a plurality of high-level systems 4104 and interior 4106. Examples of high-level systems 4104 include one or more of propulsion system 4108, electrical system 4110, hydraulic system 4112 and environmental system 4114. Any number of other systems may be included. Although an aerospace example is shown, the principles disclosed herein may be applied to other industries, such as the automotive industry. Accordingly, in addition to aircraft 4100, the principles disclosed herein may apply to other vehicles, e.g., land vehicles, marine vehicles, space vehicles, etc.

The disclosed test fixtures 300 and methods 1300, 3400, 3500, 3600, 3700, 3800, 3900 for improving fidelity of thermal oxidative stability testing may be employed during any one or more of the stages of the manufacturing and service method 4000. For example, components or subassemblies corresponding to component and subassembly manufacturing (block 4006) may be fabricated or manufactured in a manner similar to components or subassemblies produced while aircraft 4100 is in service (block 4012). Also, one or more examples of the system(s), method(s), or combination thereof may be utilized during production stages (block 4006 and block 4008), for example, by substantially expediting assembly of or reducing the cost of aircraft 4100. Similarly, one or more examples of the system or method realizations, or a combination thereof, may be utilized, for example and without limitation, while aircraft 4100 is in service (block 4012) and/or during maintenance and service (block 4014).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, various examples of the test fixtures 300 and methods 1300, 3400, 3500, 3600, 3700, 3800, 3900 for improving fidelity of thermal oxidative stability testing have been shown and described, modifications may occur to those skilled in the art upon reading the specification. The present application includes such modifications and is limited only by the scope of the claims.

The disclosure further comprises the following clauses:
1. A test fixture (300) for improving fidelity of thermal oxidative stability testing, comprising:
   an environmental test chamber (100), comprising:
      an enclosure (102) with an opening (104) that provides access to an internal compartment (106) defining a chamber environment (108); and
      a controller (110) configured to control the chamber environment (108) within the internal compartment (106); and
   a test material holder (200) at least partially disposed in the internal compartment (106) and configured to hold a material under test (202), and
   wherein the environmental test chamber (100) and the test material holder (200) are configured to expose a frontside (204) of the material under test (202) to a first environment (205) and to expose a backside (206) of the material under test (202) to a second environment (207), the second environment (207) being different from the first environment (205) and isolated from the first environment (205).
2. The test fixture of Clause 1 wherein the environmental test chamber (100) comprises as least one of a conditioning oven, a fan-assisted oven, a mechanical convection oven, a laboratory oven, an inert atmosphere oven, a gravity oven, a climate test chamber, a climatic test chamber and an altitude test chamber.
3. The test fixture of Clause 1 or 2 wherein the material under test (202) comprises as least one of a polymer matrix composite material, a ceramic matrix composite material, a carbon matrix composite material, a carbon fiber reinforced polymer material, a fiberglass material, a thermoplastic composite material, a thermoset composite material, a metal matrix composite material, an aluminum matrix composite material, a metallic material, a ceramic material, a polymer material and a coated material.
4. The test fixture of any one of Clauses 1-3, the test material holder (200) comprising:
   a bracket (208) installed on the enclosure (102) and sized to frame the opening (104), the bracket (208) configured to secure and seal the material under test (202) over the opening (104) with the frontside (204) of the material under test (202) facing the chamber environment (108) and the backside (206) of the material under test (202) facing an external environment (112) of the environmental test chamber (100).
5. The test fixture of Clause 4 wherein the first environment (205) comprises the chamber environment (108) and the second environment (207) comprises the external environment (112) of the environmental test chamber (100).
6. The test fixture of Clause 4 or 5, the environmental test chamber (100) further comprising:
   an oxidizing gas inlet valve (302) installed through an exterior wall (114) of the enclosure (102) and configured to receive an oxidizing gas (304) from an external gas source (306) and configured to direct the oxidizing gas (304) toward the frontside (204) of the material under test (202) in the chamber environment (108); and
   an oxidizing gas vent valve (308) installed through the exterior wall (114) of the enclosure (102) and configured to pass the oxidizing gas (304) from the chamber environment (108) to the external environment (112) of the environmental test chamber (100).
7. The test fixture of Clause 6 wherein the oxidizing gas (304) comprises at least one of an oxygen gas, an air mixture, a nitrous oxide gas and a chlorine gas.
8. The test fixture of Clause 6 or 7 wherein the external gas source (306) comprises at least one of a premixed oxidizing gas cylinder, a premixed air cylinder, an oxygen gas cylinder, a nitrous oxide gas cylinder, a premixed oxidizing gas supply system and a premixed air supply system.
9. The test fixture of any one of Clauses 6-8, wherein the controller (110) of the environmental test chamber (100) is configured to control the oxidizing gas inlet valve (302) and the oxidizing gas vent valve (308) during operation of the environmental test chamber (100).
10. The test fixture of any one of Clauses 6-9, the environmental test chamber (100) further comprising:
   a compressor system (310) configured to pressurize the chamber environment (108) to a predetermined pressure during operation of the environmental test chamber (100), and
   wherein the controller (110) of the environmental test chamber (100) is configured to control the compressor system (310) and configured to monitor a current pressure of the chamber environment (108).
11. The test fixture of Clause 10 wherein the predetermined pressure ranges between 1 standard atmosphere and 35 standard atmospheres.
12. The test fixture of any one of Clauses 6-11, the environmental test chamber (100) further comprising:
   a heating system (312) configured to heat the chamber environment (108) to a predetermined temperature during operation of the environmental test chamber (100), and
   wherein the controller (110) of the environmental test chamber (100) is configured to control the heating system (312) and configured to monitor a current temperature of the chamber environment (108).
13. The test fixture of Clause 12 wherein the predetermined temperature ranges between 15 °C above ambient and 2000 °C.
14. The test fixture of any one of Clauses 6-13, the environmental test chamber (100) further comprising:
   a ventilation system (314) configured to circulate the oxidizing gas (304) within the chamber environment (108) at a predetermined flow rate during operation of the environmental test chamber (100), and
   wherein the controller (110) of the environmental test chamber (100) is configured to control the ventilation system (314) and configured to monitor a current flow rate of the oxidizing gas (304) within the chamber environment (108).
15. The test fixture of Clause 14 wherein the predetermined flow rate ranges between 750 cubic feet per minute and 1750 cubic feet per minute.
16. The test fixture of any one of Clauses 6-15, the environmental test chamber (100) further comprising:
   an oxidizing gas mixing system (316) configured to mix a select gas component (318) with the oxidizing gas (304) flowing through the chamber environment (108) to maintain a predetermined concentration of the select gas component (318) during operation of the environmental test chamber (100), and
   wherein the controller (110) of the environmental test chamber (100) is configured to control the oxidizing gas mixing system (316) and configured to monitor a current concentration of the select gas component (318) in the oxidizing gas (304) flowing through the chamber environment (108).
17. The test fixture of Clause 16 wherein the select gas component (318) comprises at least one of an oxygen gas, a nitrous oxide gas and a chlorine gas.
18. The test fixture of Clause 16 or 17 wherein the predetermined concentration ranges between approximately 20 percent and approximately 25 percent.
19. The test fixture of any one of Clauses 1-18, the environmental test chamber (100) further comprising:
   an access door (402) installed on the enclosure (102) and sized to fit the opening (104), the access door (402) is configured to open to permit placement of the test material holder (200) with the material under test (202) inside the internal compartment (106) and to close to seal the opening (104).
20. The test fixture of any one of Clauses 1-19, the test material holder (200) comprising:
   a container (502) with a first opening (504) that provides access to an internal volume (506); and
   a bracket (208) installed on the container (502) and sized to frame the first opening (504), the bracket (208) configured to secure and seal the material under test (202) over the first opening (504) with the backside (206) of the material under test (202) facing the internal volume (506) and the frontside (204) of the material under test (202) facing the chamber environment (108) of the environmental test chamber (100), and
   wherein, during operation of the environmental test chamber (100), the container (502) with the material under test (202) secured thereon forms a pressure vessel (500) that defines an inert environment (509) within the internal volume (506) of the container (502) and an oxidizing environment (511) outside the pressure vessel (500) in the chamber environment (108).
21. The test fixture of Clause 20 wherein the first environment (205) comprises the oxidizing environment (511) and the second environment (207) comprises the inert environment (509).
22. The test fixture of Clause 20 or 21, the environmental test chamber (100) further comprising:
   an oxidizing gas inlet valve (302) installed through an exterior wall (114) of the enclosure (102) and configured to receive an oxidizing gas (304) from an external gas source (306) and to direct the oxidizing gas (304) toward the frontside (204) of the material under test (202) in the chamber environment (108); and
   an oxidizing gas vent valve (308) installed through the exterior wall (114) of the enclosure (102) and configured to pass the oxidizing gas (304) from the chamber environment (108) to an external environment (112) of the environmental test chamber (100).
23. The test fixture of Clause 22, wherein the controller (110) of the environmental test chamber (100) is configured to control the oxidizing gas inlet valve (302) and the oxidizing gas vent valve (308) during operation of the environmental test chamber (100).
24. The test fixture of Clause 22 or 23, the environmental test chamber (100) further comprising:
   a compressor system (310) configured to pressurize the chamber environment (108) to a predetermined pressure during operation of the environmental test chamber (100), and
   wherein the controller (110) of the environmental test chamber (100) is configured to control the compressor system (310) and configured to monitor a current pressure of the chamber environment (108).
25. The test fixture of any one of Clauses 22-24, the environmental test chamber (100) further comprising:
   a heating system (312) configured to heat the chamber environment (108) to a predetermined temperature during operation of the environmental test chamber (100), and
   wherein the controller (110) of the environmental test chamber (100) is configured to control the heating system (312) and configured to monitor a current temperature of the chamber environment (108).
26. The test fixture of any one of Clauses 22-25, the environmental test chamber (100) further comprising:
   a ventilation system (314) configured to circulate the oxidizing gas (304) within the chamber environment (108) at a predetermined flow rate during operation of the environmental test chamber (100), and
   wherein the controller (110) of the environmental test chamber (100) is configured to control the ventilation system (314) and configured to monitor a current flow rate of the oxidizing gas (304) within the chamber environment (108).
27. The test fixture of any one of Clauses 22-26, the environmental test chamber (100) further comprising:
   an oxidizing gas mixing system (316) configured to mix a select gas component (318) with the oxidizing gas (304) flowing through the chamber environment (108) to maintain a predetermined concentration of the select gas component (318) during operation of the environmental test chamber (100), and
   wherein the controller (110) of the environmental test chamber (100) is configured to control the oxidizing gas mixing system (316) and configured to monitor a current concentration of the select gas component (318) in the oxidizing gas (304) flowing through the chamber environment (108).
28. The test fixture of any one of Clauses 20-27, the environmental test chamber (100) further comprising:
   an inert gas inlet valve (602) installed through an exterior wall (114) of the enclosure (102) and configured to receive an inert gas (604) from an external source (606);
   a first inert gas conduit (702) with a proximal end (704) connected to the inert gas inlet valve (602) and configured to provide an inlet path for the inert gas (604) to the pressure vessel (500);
   a second inert gas conduit (706) with a proximal end (708) connected to the pressure vessel (500) and configured to provide an outlet path to vent the inert gas (604) from the pressure vessel (500); and
   an inert gas vent valve (608) installed through the exterior wall (114) of the enclosure (102), wherein a distal end (710) of the second inert gas conduit (706) is connected to the inert gas vent valve (608), the inert gas vent valve (608) configured to vent the inert gas (604) from the pressure vessel (500) via the second inert gas conduit (706) to an external environment (112) of the environmental test chamber (100).
29. The test fixture of Clause 28 wherein the inert gas (604) comprises at least one of a dry air, a nitrogen gas, a noble gas and an argon gas.
30. The test fixture of Clause 28 or 29 wherein the external source (606) comprises at least one of a dry air cylinder, a nitrogen gas cylinder, an argon gas cylinder, a shop air supply system, an inert gas supply system and a noble gas supply system.
31. The test fixture of any one of Clauses 28-30, wherein the controller (110) of the environmental test chamber (100) is configured to control the inert gas inlet valve (602) and the inert gas vent valve (608) during operation of the environmental test chamber (100).
32. The test fixture of any one of Clauses 28-31, the pressure vessel (500) further comprising:
   an inert gas inlet port (712) installed through an exterior wall (714) of the container (502), wherein a distal end (716) of the first inert gas conduit (702) is connected to the inert gas inlet port (712); and
   an inert gas vent port (718) installed through the exterior wall (714) of the container (502), wherein a proximal end (708) of the second inert gas conduit (706) is connected to the inert gas vent port (718).
33. The test fixture of Clause 32, the environmental test chamber (100) further comprising:
   a ventilation system (314) configured to circulate the inert gas (604) through the pressure vessel (500) at a predetermined flow rate during operation of the environmental test chamber (100), and
   wherein the controller (110) of the environmental test chamber (100) is configured to control the ventilation system (314) and configured to monitor a current flow rate of the inert gas (604) through the pressure vessel (500).
34. The test fixture of Clause 33 wherein the predetermined flow rate ranges between 750 cubic feet per minute and 1750 cubic feet per minute.
35. The test fixture of any one of Clauses 32-34, the environmental test chamber (100) further comprising:
   a cooling system (610) configured to cool the inert gas (604) flowing through the pressure vessel (500) to a predetermined temperature during operation of the environmental test chamber (100), and
   wherein the controller (110) of the environmental test chamber (100) is configured to control the cooling system (610) and configured to monitor a current temperature of the inert gas (604) flowing through the pressure vessel (500).
36. The test fixture of Clause 35 wherein the predetermined temperature ranges between 15 °C above ambient and 2000 °C.
37. The test fixture of any one of Clauses 20-36, the environmental test chamber (100) further comprising:
   a vacuum valve (802) installed through an exterior wall (114) of the enclosure (102) and configured to receive a vacuum draw from a vacuum system (902); and
   an internal vacuum line (804) with a proximal end (806) connected to the vacuum valve (802) and configured to provide the vacuum draw to the pressure vessel (500).
38. The test fixture of Clause 37 wherein the vacuum system (902) comprises at least one of a vacuum pump (904) within the environmental test chamber (100), an external vacuum pump and a shop vacuum system with a vacuum pump (904).
39. The test fixture of Clause 37 or 38 wherein the controller (110) of the environmental test chamber (100) is configured to control the vacuum valve (802) during operation of the environmental test chamber (100).
40. The test fixture of any one of Clauses 37-39, the pressure vessel (500) further comprising:
   a vacuum port (808) installed through an exterior wall (714) of the container (502), wherein a distal end (810) of the internal vacuum line (804) is connected to the vacuum port (808).
41. The test fixture of Clause 40, the environmental test chamber (100) further comprising:
   a vacuum pump (904) connected to the vacuum valve (802) and configured to draw a predetermined vacuum on the pressure vessel (500) during operation of the environmental test chamber (100), and
   wherein the controller (110) of the environmental test chamber (100) is configured to control the vacuum pump (904) and configured to monitor a current vacuum drawn on the pressure vessel (500).
42. The test fixture of Clause 41 wherein the predetermined vacuum ranges between approximately 20 percent vacuum and approximately 50 percent vacuum.
43. The test fixture of any one of Clauses 1-42, the test material holder (200) comprising:
   a first container (502) with a first opening (504) that provides access to a first internal volume (506);
   a bracket (208) installed on the first container (502) and sized to frame the first opening (504), the bracket (208) configured to secure and seal the material under test (202) over the first opening (504) with the backside (206) of the material under test (202) facing the first internal volume (506) and the frontside (204) of the material under test (202) facing the chamber environment (108) of the environmental test chamber (100); and
   a second container (1002) with a second opening (1004) that provides access to a second internal volume (1006), the second container (1002) installed over the bracket (208) with the second opening (1004) sized to frame the frontside (204) of the material under test (202), and
   wherein, during operation of the environmental test chamber (100), the first container (502) with the material under test (202) secured thereon forms a first pressure vessel (500) that defines an inert environment (509) within the first internal volume (506) of the first container (502) and the second container (1002) installed over the frontside (204) of the material under test (202) forms a second pressure vessel (1000) that defines an oxidizing environment (511) within the second internal volume (1006).
44. The test fixture of Clause 43 wherein the first environment (205) comprises the oxidizing environment (511) and the second environment (207) comprises the inert environment (509).
45. The test fixture of Clause 43 or 44, the environmental test chamber (100) further comprising:
   an oxidizing gas inlet valve (302) installed through an exterior wall (114) of the enclosure (102) and configured to receive an oxidizing gas (304) from an external gas source (306);
   a first oxidizing gas conduit (1102) with a proximal end (1104) connected to the oxidizing gas inlet valve (302) and configured to provide an inlet path for the oxidizing gas (304) to the second pressure vessel (1000);
   a second oxidizing gas conduit (1106) with a proximal end (1108) connected to the second pressure vessel (1000) and configured to provide an outlet path to vent the oxidizing gas (304) from the second pressure vessel (1000); and
   an oxidizing gas vent valve (308) installed through the exterior wall (114) of the enclosure (102), wherein a distal end (1110) of the second oxidizing gas conduit (1106) is connected to the oxidizing gas vent valve (308), the oxidizing gas vent valve (308) configured to vent the oxidizing gas (304) from the second pressure vessel (1000) via the second oxidizing gas conduit (1106) to an external environment (112) of the environmental test chamber (100).
46. The test fixture of Clause 45, wherein the controller (110) of the environmental test chamber (100) is configured to control the oxidizing gas inlet valve (302) and the oxidizing gas vent valve (308) during operation of the environmental test chamber (100).
47. The test fixture of Clause 45 or 46, the second pressure vessel (1000) comprising:
   an oxidizing gas inlet port (1112) installed through an exterior wall (1114) of the second container (1002), wherein a distal end (1116) of the first oxidizing gas conduit (1102) is connected to the oxidizing gas inlet port (1112); and
   an oxidizing gas vent port (1118) installed through the exterior wall (1114) of the second container (1002), wherein a proximal end (1108) of the second oxidizing gas conduit (1106) is connected to the oxidizing gas vent port (1118).
48. The test fixture of Clause 47, the environmental test chamber (100) further comprising:
   a compressor system (310) configured to pressurize the second pressure vessel (1000) to a predetermined pressure during operation of the environmental test chamber (100), and
   wherein the controller (110) of the environmental test chamber (100) is configured to control the compressor system (310) and configured to monitor a current pressure of the second pressure vessel (1000).
49. The test fixture of Clause 48 wherein the predetermined pressure ranges between 1 standard atmosphere and 35 standard atmospheres.
50. The test fixture of any one of Clauses 47-49, the environmental test chamber (100) further comprising:
   a heating system (312) configured to heat the oxidizing gas (304) flowing through the second pressure vessel (1000) to a predetermined temperature during operation of the environmental test chamber (100), and
   wherein the controller (110) of the environmental test chamber (100) is configured to control the heating system (312) and configured to monitor a current temperature of the oxidizing gas (304) flowing through the second pressure vessel (1000).
51. The test fixture of Clause 50 wherein the predetermined temperature ranges between 15 °C above ambient and 2000 °C.
52. The test fixture of any one of Clauses 47-51, the environmental test chamber (100) further comprising:
   a ventilation system (314) configured to circulate the oxidizing gas (304) within the second pressure vessel (1000) at a predetermined flow rate during operation of the environmental test chamber (100), and
   wherein the controller (110) of the environmental test chamber (100) is configured to control the ventilation system (314) and configured to monitor a current flow rate within the second pressure vessel (1000).
53. The test fixture of Clause 52 wherein the predetermined flow rate ranges between 750 cubic feet per minute and 1750 cubic feet per minute.
54. The test fixture of any one of Clauses 47-53, the environmental test chamber (100) further comprising:
   an oxidizing gas mixing system (316) configured to mix a select gas component (318) with the oxidizing gas (304) flowing through the second pressure vessel (1000) to maintain a predetermined concentration of the select gas component (318) during operation of the environmental test chamber (100), and
   wherein the controller (110) of the environmental test chamber (100) is configured to control the oxidizing gas mixing system (316) and configured to monitor a current concentration of the select gas component (318) in the oxidizing gas (304) flowing through the second pressure vessel (1000).
55. The test fixture of Clause 54 wherein the select gas component (318) comprises at least one of an oxygen gas, a nitrous oxide gas and a chlorine gas.
56. The test fixture of Clause 54 or 55 wherein the predetermined concentration ranges between approximately 20 percent and approximately 25 percent.
57. The test fixture of any one of Clauses 43-56, the environmental test chamber (100) further comprising:
   an inert gas inlet valve (602) installed through an exterior wall (114) of the enclosure (102) and configured to receive an inert gas (604) from an external source (606);
   a first inert gas conduit (702) with a proximal end (704) connected to the inert gas inlet valve (602) and configured to provide an inlet path for the inert gas (604) to the first pressure vessel (500);
   a second inert gas conduit (706) with a proximal end (708) connected to the first pressure vessel (500) and configured to provide an outlet path to vent the inert gas (604) from the first pressure vessel (500); and
   an inert gas vent valve (608) installed through the exterior wall (114) of the enclosure (102), wherein a distal end (710) of the second inert gas conduit (706) is connected to the inert gas vent valve (608), the inert gas vent valve (608) configured to vent the inert gas (604) from the first pressure vessel (500) via the second inert gas conduit (706) to an external environment (112) of the environmental test chamber (100).
58. The test fixture of Clause 57, wherein the controller (110) of the environmental test chamber (100) is configured to control the inert gas inlet valve (602) and the inert gas vent valve (608) during operation of the environmental test chamber (100).
59. The test fixture of Clause 57 or 58, the first pressure vessel (500) comprising:
   an inert gas inlet port (712) installed through an exterior wall (714) of the first container (502), wherein a distal end (716) of the first inert gas conduit (702) is connected to the inert gas inlet port (712); and
   an inert gas vent port (718) installed through the exterior wall (714) of the first container (502), wherein a proximal end (708) of the second inert gas conduit (706) is connected to the inert gas vent port (718).
60. The test fixture of Clause 59, the environmental test chamber (100) further comprising:
   a compressor system (310) configured to pressurize the first pressure vessel (500) to a predetermined pressure during operation of the environmental test chamber (100), and
   wherein the controller (110) of the environmental test chamber (100) is configured to control the compressor system (310) and configured to monitor a current pressure of the first pressure vessel (500).
61. The test fixture of Clause 59 or 60, the environmental test chamber (100) further comprising:
   a ventilation system (314) configured to circulate the inert gas (604) through the first pressure vessel (500) at a predetermined flow rate during operation of the environmental test chamber (100), and
   wherein the controller (110) of the environmental test chamber (100) is configured to control the ventilation system (314) and configured to monitor a current flow rate of the inert gas (604) through the first pressure vessel (500).
62. The test fixture of any one of Clauses 59-61, the environmental test chamber (100) further comprising:
   a cooling system (610) configured to cool the inert gas (604) flowing through the first pressure vessel (500) to a predetermined temperature during operation of the environmental test chamber (100), and
   wherein the controller (110) of the environmental test chamber (100) is configured to control the cooling system (610) and configured to monitor a current temperature of the inert gas (604) flowing through the first pressure vessel (500).
63. The test fixture of any one of Clauses 43-62, the environmental test chamber (100) further comprising:
   a vacuum valve (802) installed through an exterior wall (114) of the enclosure (102) and configured to receive a vacuum draw from a vacuum system (902); and
   an internal vacuum line (804) with a proximal end (806) connected to the vacuum valve (802) and configured to provide the vacuum draw to the first pressure vessel (500).
64. The test fixture of Clause 63, wherein the controller (110) of the environmental test chamber (100) is configured to control the vacuum valve (802) during operation of the environmental test chamber (100).
65. The test fixture of Clause 63 or 64, the first pressure vessel (500) comprising:
   a vacuum port (808) installed through an exterior wall (714) of the first container (502), wherein a distal end (810) of the internal vacuum line (804) is connected to the vacuum port (808).
66. The test fixture of Clause 65, the environmental test chamber (100) further comprising:
   a vacuum pump (904) connected to the vacuum valve (802) and configured to draw a predetermined vacuum on the first pressure vessel (500) during operation of the environmental test chamber (100), and
   wherein the controller (110) of the environmental test chamber (100) is configured to control the vacuum pump (904) and configured to monitor a current vacuum drawn on the first pressure vessel (500).
67. A method (1300) for improving fidelity for thermal oxidative stability testing, comprising:
   exposing (1302) a frontside (204) of a material under test (202) to a first environment (205) during an exposure portion of a thermal oxidative stability test for the material under test (202); and
   exposing (1304) a backside (206) of the material under test (202) to a second environment (207) during the exposure portion, the second environment (207) being different from the first environment (205) and isolated from the first environment (205).
68. The method of Clause 67, further comprising:
   setting up (1306) conditions and parameters for operation of an environmental test chamber (100) of a test fixture (300) in conjunction with the exposure portion; and
   securing (1308) the material under test (202) to a test material holder (200) of the test fixture (300) in conjunction with the exposure portion.
69. The method of Clause 68 wherein the environmental test chamber (100) comprises an enclosure (102) with an opening (104) that provides access to an internal compartment (106) of the environmental test chamber (100), the internal compartment (106) defining a chamber environment (108), wherein the test material holder (200) comprises a bracket (208) sized to frame the opening (104), the securing (1308) of the material under test (202) comprising:
   securing and sealing (1402) the material under test (202) over the opening (104) using the bracket (208) with the frontside (204) of the material under test (202) facing the chamber environment (108) and the backside (206) of the material under test (202) facing an external environment (112) of the environmental test chamber (100).
70. The method of Clause 69 wherein the first environment (205) comprises the chamber environment (108) and the second environment (207) comprises the external environment (112) of the environmental test chamber (100).
71. The method of any one of Clauses 69-70 wherein the environmental test chamber (100) comprises an oxidizing gas inlet valve (302) and an oxidizing gas vent valve (308), the exposing (1302) of the frontside (204) comprising:
   applying (1404) an oxidizing gas (304) from an external gas source (306) to the oxidizing gas inlet valve (302);
   controlling (1406) the oxidizing gas inlet valve (302) to enable flow of the oxidizing gas (304) from the external gas source (306) toward the frontside (204) of the material under test (202) in the chamber environment (108); and
   controlling (1408) the oxidizing gas vent valve (308) to enable flow of the oxidizing gas (304) from the chamber environment (108) to the external environment (112) of the environmental test chamber (100).
72. The method of Clause 71, the exposing (1302) of the frontside (204) further comprising:
   pressurizing (1502) the oxidizing gas (304) flowing through the chamber environment (108) to a predetermined pressure.
73. The method of Clause 72, the exposing (1302) of the frontside (204) further comprising:
   monitoring (1504) a current pressure of the oxidizing gas (304) flowing through the chamber environment (108); and
   controlling (1506) the pressurizing of the oxidizing gas (304) flowing through the chamber environment (108) in response to the monitoring of the current pressure.
74. The method of any one of Clauses 71-73, the exposing (1302) of the frontside (204) further comprising:
   heating (1508) the chamber environment (108) to a predetermined temperature.
75. The method of Clause 74, the exposing (1302) of the frontside (204) further comprising:
   monitoring (1510) a current temperature within the chamber environment (108); and
   controlling (1512) the heating of the chamber environment (108) in response to the monitoring of the current temperature.
76. The method of any one of Clauses 71-75, the exposing (1302) of the frontside (204) further comprising:
   circulating (1602) the oxidizing gas (304) within the chamber environment (108) at a predetermined flow rate.
77. The method of Clause 76, the exposing (1302) of the frontside (204) further comprising:
   monitoring (1604) a current flow rate of the oxidizing gas (304) within the chamber environment (108); and
   controlling (1606) the circulating of the oxidizing gas (304) within the chamber environment (108) in response to the monitoring of the current flow rate.
78. The method of any one of Clauses 71-77, the exposing (1302) of the frontside (204) comprising:
   mixing (1608) a select gas component (318) with the oxidizing gas (304) flowing through the chamber environment (108) to maintain a predetermined concentration of the select gas component (318) flowing through the chamber environment (108) in the oxidizing gas (304).
79. The method of Clause 78, the exposing (1302) of the frontside (204) further comprising:
   monitoring (1610) a current concentration of the select gas component (318) in the oxidizing gas (304) flowing through the chamber environment (108); and
   controlling (1612) the mixing of the select gas component (318) with the oxidizing gas (304) flowing through chamber environment (108) in response to the monitoring of the current concentration of the select gas component (318).
80. The method of any one of Clauses 69-79, the exposing (1304) of the backside (206) comprising:
   exposing (1702) the backside (206) of the material under test (202) to an ambient air mixture present in the external environment (112) of the environmental test chamber (100).
81. The method of any one of Clauses 68-80 wherein the test material holder (200) comprises a container (502) and a bracket (208), the container (502) having a first opening (504) that provides access to an internal volume (506) of the container (502), the bracket (208) sized to frame the first opening (504), the securing (1308) of the material under test (202) comprising:
   securing and sealing (1802) the material under test (202) to the container (502) over the first opening (504) using the bracket (208) with the backside (206) of the material under test (202) facing the internal volume (506), wherein the container (502) with the material under test (202) secured thereon forms a pressure vessel (500) that defines an inert environment (509) within the internal volume (506) of the container (502);
   placing (1804) the test material holder (200) with the material under test (202) secured thereon inside an internal compartment (106) of the environmental test chamber (100);
   connecting (1806) a first inert gas conduit (702) of the environmental test chamber (100) to an inert gas inlet port (712) of the pressure vessel (500);
   connecting (1808) a second inert gas conduit (706) of the environmental test chamber (100) to an inert gas vent port (718) of the pressure vessel (500); and
   closing (1810) an access door (402) of the environmental test chamber (100) to seal the internal compartment (106) forming an oxidizing environment (511) with the pressure vessel (500) inside and the frontside (204) of the material under test (202) facing the oxidizing environment (511).
82. The method of Clause 81 wherein the first environment (205) comprises the oxidizing environment (511) and the second environment (207) comprises the inert environment (509).
83. The method of Clause 81 or 82 wherein the environmental test chamber (100) comprises an oxidizing gas inlet valve (302) and an oxidizing gas vent valve (308), the exposing (1302) of the frontside (204) comprising:
   applying (1812) an oxidizing gas (304) from an external gas source (306) to the oxidizing gas inlet valve (302);
   controlling (1814) the oxidizing gas inlet valve (302) to enable flow of the oxidizing gas (304) from the external gas source (306) toward the frontside (204) of the material under test (202) in the oxidizing environment (511); and
   controlling (1816) the oxidizing gas vent valve (308) to enable flow of the oxidizing gas (304) from the oxidizing environment (511) to an external environment (112) of the environmental test chamber (100).
84. The method of Clause 83, the exposing (1302) of the frontside (204) further comprising:
   pressurizing (1902) the oxidizing gas (304) flowing through the oxidizing environment (511) to a predetermined pressure.
85. The method of Clause 84, the exposing (1302) of the frontside (204) further comprising:
   monitoring (1904) a current pressure of the oxidizing gas (304) flowing through the oxidizing environment (511); and
   controlling (1906) the pressurizing of the oxidizing gas (304) flowing through the oxidizing environment (511) in response to the monitoring of the current pressure.
86. The method of any one of Clauses 83-85, the exposing (1302) of the frontside (204) further comprising:
   heating (1908) the oxidizing environment (511) to a predetermined temperature.
87. The method of Clause 86, the exposing (1302) of the frontside (204) further comprising:
   monitoring (1910) a current temperature within the oxidizing environment (511); and
   controlling (1912) the heating of the oxidizing environment (511) in response to the monitoring of the current temperature.
88. The method of any one of Clauses 83-87, the exposing (1302) of the frontside (204) further comprising:
   circulating (2002) the oxidizing gas (304) within the oxidizing environment (511) at a predetermined flow rate.
89. The method of Clause 88, the exposing (1302) of the frontside (204) further comprising:
   monitoring (2004) a current flow rate of the oxidizing gas (304) within the oxidizing environment (511); and
   controlling (2006) the circulating of the oxidizing gas (304) within the oxidizing environment (511) in response to the monitoring of the current flow rate.
90. The method of any one of Clauses 83-89, the exposing (1302) of the frontside (204) further comprising:
   mixing (2008) a select gas component (318) with the oxidizing gas (304) flowing through the oxidizing environment (511) to maintain a predetermined concentration of the select gas component (318) flowing through the oxidizing environment (511) in the oxidizing gas (304).
91. The method of Clause 90, the exposing (1302) of the frontside (204) further comprising:
   monitoring (2010) a current concentration of the select gas component (318) in the oxidizing gas (304) flowing through the oxidizing environment (511); and
   controlling (2012) the mixing of the select gas component (318) with the oxidizing gas (304) flowing through oxidizing environment (511) in response to the monitoring of the current concentration of the select gas component (318).
92. The method of any one of Clauses 81-91 wherein the environmental test chamber (100) comprises an inert gas inlet valve (602) connected to the first inert gas conduit (702) and an inert gas vent valve (608) connected to the second inert gas conduit (706), the exposing (1304) of the backside (206) comprising:
   applying (2102) an inert gas (604) from an external source (606) to the inert gas inlet valve (602);
   controlling (2104) the inert gas inlet valve (602) to enable flow of the inert gas (604) from the external source (606) to the pressure vessel (500) via the first inert gas conduit (702); and
   controlling (2106) the inert gas vent valve (608) to enable flow of the inert gas (604) from the inert environment (509) of the pressure vessel (500) via the second inert gas conduit (706) to an external environment (112) of the environmental test chamber (100).
93. The method of Clause 92, the exposing (1304) of the backside (206) further comprising:
   circulating (2202) the inert gas (604) within the pressure vessel (500) at a predetermined flow rate.
94. The method of Clause 93, the exposing (1304) of the backside (206) further comprising:
   monitoring (2204) a current flow rate of the inert gas (604) within the pressure vessel (500); and
   controlling (2206) the circulating of the inert gas (604) within the pressure vessel (500) in response to the monitoring of the current flow rate.
95. The method of any one of Clauses 92-94, the exposing (1304) of the backside (206) further comprising:
   cooling (2208) the inert gas (604) flowing through the pressure vessel (500) to a predetermined temperature.
96. The method of Clause 95, the exposing (1304) of the backside (206) further comprising:
   monitoring (2210) a current temperature of the inert gas (604) flowing through the pressure vessel (500); and
   controlling (2212) the cooling of the inert gas (604) flowing through the pressure vessel (500) in response to the monitoring of the current temperature.
97. The method of any one of Clauses 68-96 wherein the test material holder (200) comprises a container (502) and a bracket (208), the container (502) having a first opening (504) that provides access to an internal volume (506) of the container (502), the bracket (208) sized to frame the first opening (504), the securing (1308) of the material under test (202) comprising:
   securing and sealing (2302) the material under test (202) to the container (502) over the first opening (504) using the bracket (208) with the backside (206) of the material under test (202) facing the internal volume (506), wherein the container (502) with the material under test (202) secured thereon forms a pressure vessel (500) that defines an inert environment (509) within the internal volume (506) of the container (502);
   placing (2304) the test material holder (200) with the material under test (202) secured thereon inside an internal compartment (106) of the environmental test chamber (100);
   connecting (2306) an internal vacuum line (804) of the environmental test chamber (100) to a vacuum port (808) of the pressure vessel (500); and
   closing (2308) an access door (402) of the environmental test chamber (100) to seal the internal compartment (106) forming an oxidizing environment (511) with the pressure vessel (500) inside and the frontside (204) of the material under test (202) facing the oxidizing environment (511).
98. The method of Clause 97 wherein the environmental test chamber (100) comprises a vacuum valve (802), the exposing (1304) of the backside (206) further comprising:
   applying (2402) a vacuum draw from a vacuum system (902) to the vacuum valve (802); and
   controlling (2404) the vacuum valve (802) to enable the vacuum draw from the vacuum system (902) toward the backside (206) of the material under test (202) in the pressure vessel (500).
99. The method of Clause 97 or 98 wherein the environmental test chamber (100) further comprises a vacuum pump (904), the exposing (1304) of the backside (206) further comprising:
   drawing (2406) a vacuum on the pressure vessel (500) to a predetermined vacuum level.
100. The method of Clause 99, the exposing (1304) of the backside (206) further comprising:
   monitoring (2408) a current vacuum drawn on the pressure vessel (500); and
   controlling (2410) the vacuum drawn on the pressure vessel (500) in response to the monitoring of the current vacuum.
101. The method of any one of Clauses 68-100 wherein the test material holder (200) comprises a first container (502), a bracket (208) and a second container (1002), the first container (502) having a first opening (504) that provides access to a first internal volume (506) of the first container (502), the bracket (208) sized to frame the first opening (504), the second container (1002) having a second opening (1004) that provides access to a second internal volume (1006), the securing (1308) of the material under test (202) comprising:
   securing and sealing (2502) the material under test (202) to the first container (502) over the first opening (504) using the bracket (208) with the backside (206) of the material under test (202) facing the first internal volume (506), wherein the first container (502) with the material under test (202) secured thereon forms a first pressure vessel (500) that defines an inert environment (509) within the first internal volume (506) of the first container (502);
   installing (2504) the second container (1002) on the first pressure vessel (500) over the bracket (208) with the second opening (1004) framing the frontside (204) of the material under test (202), wherein the second container (1002) and the frontside (204) of the material under test (202) forms a second pressure vessel (1000) that defines an oxidizing environment (511) within the second internal volume (1006) of the second container (1002);
   placing (2506) the first pressure vessel (500) and the second pressure vessel (1000) with the material under test (202) secured therebetween inside an internal compartment (106) of the environmental test chamber (100);
   connecting (2508) a first inert gas conduit (702) of the environmental test chamber (100) to an inert gas inlet port (712) of the first pressure vessel (500);
   connecting (2510) a second inert gas conduit (706) of the environmental test chamber (100) to an inert gas vent port (718) of the first pressure vessel (500);
   connecting (2512) a first oxidizing gas conduit (1102) of the environmental test chamber (100) to an oxidizing gas inlet port (1112) of the second pressure vessel (1000);
   connecting (2514) a second oxidizing gas conduit (1106) of the environmental test chamber (100) to an oxidizing gas vent port (1118) of the second pressure vessel (1000); and
   closing (2516) an access door (402) of the environmental test chamber (100) to seal the internal compartment (106) with the first pressure vessel (500) and the second pressure vessel (1000) inside the environmental test chamber (100).
102. The method of Clause 101 wherein the first environment (205) comprises the oxidizing environment (511) and the second environment (207) comprises the inert environment (509).
103. The method of Clause 101 or 102 wherein the environmental test chamber (100) comprises an oxidizing gas inlet valve (302) connected to the first oxidizing gas conduit (1102) and an oxidizing gas vent valve (308) connected to the second oxidizing gas conduit (1106), the exposing (1302) of the frontside (204) comprising:
   applying (2602) an oxidizing gas (304) from an external gas source (306) to the oxidizing gas inlet valve (302);
   controlling (2604) the oxidizing gas inlet valve (302) to enable flow of the oxidizing gas (304) from the external gas source (306) to the second pressure vessel (1000) via the first oxidizing gas conduit (1102); and
   controlling (2606) the oxidizing gas vent valve (308) to enable flow of the oxidizing gas (304) from the oxidizing environment (511) of the second pressure vessel (1000) via the second oxidizing gas conduit (1106) to an external environment (112) of the environmental test chamber (100).
104. The method of Clause 103, the exposing (1302) of the frontside (204) further comprising:
   pressurizing (2702) the oxidizing gas (304) flowing through the second pressure vessel (1000) to a predetermined pressure.
105. The method of Clause 104, the exposing (1302) of the frontside (204) further comprising:
   monitoring (2704) a current pressure of the oxidizing gas (304) flowing through the second pressure vessel (1000); and
   controlling (2706) the pressurizing of the oxidizing gas (304) flowing through the second pressure vessel (1000) in response to the monitoring of the current pressure.
106. The method of any one of Clauses 103-105, the exposing (1302) of the frontside (204) further comprising:
   heating (2708) the oxidizing environment (511) to a predetermined temperature.
107. The method of Clause 106, the exposing (1302) of the frontside (204) further comprising:
   monitoring (2710) a current temperature within the oxidizing environment (511); and
   controlling (2712) the heating of the oxidizing environment (511) in response to the monitoring of the current temperature.
108. The method of any one of Clauses 103-107, the exposing (1302) of the frontside (204) further comprising:
   circulating (2802) the oxidizing gas (304) within the second pressure vessel (1000) at a predetermined flow rate.
109. The method of Clause 108, the exposing (1302) of the frontside (204) further comprising:
   monitoring (2804) a current flow rate of the oxidizing gas (304) within the second pressure vessel (1000); and
   controlling (2806) the circulating of the oxidizing gas (304) within the second pressure vessel (1000) in response to the monitoring of the current flow rate.
110. The method of any one of Clauses 103-109, the exposing (1302) of the frontside (204) further comprising:
   mixing (2808) a select gas component (318) with the oxidizing gas (304) flowing through the oxidizing environment (511) to maintain a predetermined concentration of the select gas component (318) flowing through the oxidizing environment (511) in the oxidizing gas (304).
111. The method of Clause 110, the exposing (1302) of the frontside (204) further comprising:
   monitoring (2810) a current concentration of the select gas component (318) in the oxidizing gas (304) flowing through the oxidizing environment (511); and
   controlling (2812) the mixing of the select gas component (318) with the oxidizing gas (304) flowing through oxidizing environment (511) in response to the monitoring of the current concentration of the select gas component (318).
112. The method of any one of Clauses 101-111 wherein the environmental test chamber (100) comprises an inert gas inlet valve (602) connected to the first inert gas conduit (702) and an inert gas vent valve (608) connected to the second inert gas conduit (706), the exposing (1304) of the backside (206) further comprising:
   applying (2902) an inert gas (604) from an external source (606) to the inert gas inlet valve (602);
   controlling (2904) the inert gas inlet valve (602) to enable flow of the inert gas (604) from the external source (606) to the first pressure vessel (500) via the first inert gas conduit (702); and
   controlling (2906) the inert gas vent valve (608) to enable flow of the inert gas (604) from the inert environment (509) of the first pressure vessel (500) via the second inert gas conduit (706) to an external environment (112) of the environmental test chamber (100).
113. The method of Clause 112, the exposing (1304) of the backside (206) further comprising:
   pressurizing (3002) the inert gas (604) flowing through the first pressure vessel (500) to a predetermined pressure.
114. The method of Clause 113, the exposing (1304) of the backside (206) further comprising:
   monitoring (3004) a current pressure of the inert gas (604) flowing through the first pressure vessel (500); and
   controlling (3006) the pressurizing of the inert gas (604) flowing through the first pressure vessel (500) in response to the monitoring of the current pressure.
115. The method of any one of Clauses 112-114, the exposing (1304) of the backside (206) further comprising:
   circulating (3008) the inert gas (604) within the first pressure vessel (500) at a predetermined flow rate.
116. The method of Clause 115, the exposing (1304) of the backside (206) further comprising:
   monitoring (3010) a current flow rate of the inert gas (604) within the first pressure vessel (500); and
   controlling (3012) the circulating of the inert gas (604) within the first pressure vessel (500) in response to the monitoring of the current flow rate.
117. The method of any one of Clauses 112-116, the exposing (1304) of the backside (206) further comprising:
   cooling (3102) the inert gas (604) flowing through the first pressure vessel (500) to a predetermined temperature.
118. The method of Clause 117, the exposing (1304) of the backside (206) further comprising:
   monitoring (3104) a current temperature of the inert gas (604) flowing through the first pressure vessel (500); and
   controlling (3106) the cooling of the inert gas (604) flowing through the first pressure vessel (500) in response to the monitoring of the current temperature.
119. The method of any one of Clauses 68-118 wherein the test material holder (200) comprises a first container (502), a bracket (208) and a second container (1002), the first container (502) having a first opening (504) that provides access to a first internal volume (506) of the first container (502), the bracket (208) sized to frame the first opening (504), the second container (1002) having a second opening (1004) that provides access to a second internal volume (1006), the securing (1308) of the material under test (202) comprising:
   securing and sealing (3202) the material under test (202) to the first container (502) over the first opening (504) using the bracket (208) with the backside (206) of the material under test (202) facing the first internal volume (506), wherein the first container (502) with the material under test (202) secured thereon forms a first pressure vessel (500) that defines an inert environment (509) within the first internal volume (506) of the first container (502);
   installing (3204) the second container (1002) on the first pressure vessel (500) over the bracket (208) with the second opening (1004) framing the frontside (204) of the material under test (202), wherein the second container (1002) and the frontside (204) of the material under test (202) forms a second pressure vessel (1000) that defines an oxidizing environment (511) within the second internal volume (1006) of the second container (1002);
   placing (3206) the first pressure vessel (500) and the second pressure vessel (1000) with the material under test (202) secured therebetween inside an internal compartment (106) of the environmental test chamber (100);
   connecting (3208) an internal vacuum line (804) of the environmental test chamber (100) to a vacuum port (808) of the first pressure vessel (500);
   connecting (3210) a first oxidizing gas conduit (1102) of the environmental test chamber (100) to an oxidizing gas inlet port (1112) of the second pressure vessel (1000);
   connecting (3212) a second oxidizing gas conduit (1106) of the environmental test chamber (100) to an oxidizing gas vent port (1118) of the second pressure vessel (1000); and
   closing (3214) an access door (402) of the environmental test chamber (100) to seal the internal compartment (106) with the first pressure vessel (500) and the second pressure vessel (1000) inside the environmental test chamber (100).
120. The method of Clause 119 wherein the environmental test chamber (100) comprises a vacuum valve (802), the exposing (1304) of the backside (206) further comprising:
   applying (3302) a vacuum draw from a vacuum system (902) to the vacuum valve (802); and
   controlling (3304) the vacuum valve (802) to enable the vacuum draw from the vacuum system (902) toward the backside (206) of the material under test (202) in the first pressure vessel (500).
121. The method of Clause 119, or 120 the exposing (1304) of the backside (206) further comprising:
   drawing (3306) a vacuum on the first pressure vessel (500) to a predetermined pressure vessel.
122. The method of Clause 121, the exposing (1304) of the backside (206) further comprising:
   monitoring (3308) a current vacuum drawn on the first pressure vessel (500); and
   controlling (3310) the vacuum drawn on the first pressure vessel (500) in response to the monitoring of the current vacuum.
123. A method (3400) for improving fidelity for thermal oxidative stability testing, comprising:
   forming (3402) a first pressure vessel (500) that defines a first environment (508), the first pressure vessel (500) comprising a first container (502) and a material under test (202); and
   forming (3404) a second pressure vessel (1000) that defines a second environment (510), the second pressure vessel comprising a second container (1002) and the material under test (202), the second environment (510) being different from the first environment (508) and isolated from the first environment (508).
124. The method of Clause 123, further comprising:
   setting up (3406) conditions and parameters for operation of an environmental test chamber (100) of a test fixture (300) in conjunction with an exposure portion of a thermal oxidative stability test for a material under test (202), wherein the test fixture (300) comprises the first container (502), a bracket (208) and the second container (1002), the first container (502) having a first opening (504) that provides access to a first internal volume (506) of the first container (502), the bracket (208) sized to frame the first opening (504), the second container (1002) having a second opening (1004) that provides access to a second internal volume (1006).
125. The method of Clause 123 or 124, the forming (3402) of the first pressure vessel (500) comprising:
   securing and sealing (4202) the material under test (202) over a first opening (504) of the first container (502) using a bracket (208) with a backside (206) of the material under test (202) facing a first internal volume (506) of the first container (502), wherein the first container (502) with the material under test (202) secured thereon forms the first pressure vessel (500).
126. The method of Clause 125, the forming (3404) of the second pressure vessel (1000) comprising:
   installing (4204) the second container (1002) on the first pressure vessel (500) over the bracket (208) with a second opening (1004) of the second container (1002) framing a frontside (204) of the material under test (202), wherein the second container (1002) and the frontside (204) of the material under test (202) forms the second pressure vessel (1000).
127. The method of any one of Clauses 123-126 wherein the first environment (508) comprises an inert environment (509) and the second environment (510) comprises an oxidizing environment (511).
128. The method (3500) of Clause 127, further comprising:
   placing (3502) the first pressure vessel (500) and the second pressure vessel (1000) with the material under test (202) secured therebetween inside an internal compartment (106) of an environmental test chamber (100);
   connecting (3504) a first inert gas conduit (702) of the environmental test chamber (100) to an inert gas inlet port (712) of the first pressure vessel (500);
   connecting (3506) a second inert gas conduit (706) of the environmental test chamber (100) to an inert gas vent port (718) of the first pressure vessel (500);
   connecting (3508) a first oxidizing gas conduit (1102) of the environmental test chamber (100) to an oxidizing gas inlet port (1112) of the second pressure vessel (1000);
   connecting (3510) a second oxidizing gas conduit (1106) of the environmental test chamber (100) to an oxidizing gas vent port (1118) of the second pressure vessel (1000); and
   closing (3512) an access door (402) of the environmental test chamber (100) to seal the internal compartment (106) with the first pressure vessel (500) and the second pressure vessel (1000) inside the environmental test chamber (100).
129. The method (3600) of Clause 128 wherein the environmental test chamber (100) comprises an oxidizing gas inlet valve (302) connected to the first oxidizing gas conduit (1102) and an oxidizing gas vent valve (308) connected to the second oxidizing gas conduit (1106), the method further comprising:
   applying (3602) an oxidizing gas (304) from an external gas source (306) to the oxidizing gas inlet valve (302);
   controlling (3604) the oxidizing gas inlet valve (302) to enable flow of the oxidizing gas (304) from the external gas source (306) to the second pressure vessel (1000) via the first oxidizing gas conduit (1102); and
   controlling (3606) the oxidizing gas vent valve (308) to enable flow of the oxidizing gas (304) from the oxidizing environment (511) of the second pressure vessel (1000) via the second oxidizing gas conduit (1106) to an external environment (112) of the environmental test chamber (100).
130. The method (3700) of Clause 129, further comprising:
   pressurizing (3702) the oxidizing gas (304) flowing through the second pressure vessel (1000) to a predetermined pressure.
131. The method of Clause 129 or 130, further comprising:
   heating (3704) the oxidizing environment (511) to a predetermined temperature.
132. The method of any one of Clauses 129-131, further comprising:
   circulating (3706) the oxidizing gas (304) within the second pressure vessel (1000) at a predetermined flow rate.
133. The method of any one of Clauses 129-132, further comprising:
   mixing (3708) a select gas component (318) with the oxidizing gas (304) flowing through the oxidizing environment (511) to maintain a predetermined concentration of the select gas component (318) flowing through the oxidizing environment (511) in the oxidizing gas (304).
134. The method (3800) of any one of Clauses 128-133 wherein the environmental test chamber (100) comprises an inert gas inlet valve (602) connected to the first inert gas conduit (702) and an inert gas vent valve (608) connected to the second inert gas conduit (706), the method further comprising:
   applying (3802) an inert gas (604) from an external source (606) to the inert gas inlet valve (602);
   controlling (3804) the inert gas inlet valve (602) to enable flow of the inert gas (604) from the external source (606) to the first pressure vessel (500) via the first inert gas conduit (702); and
   controlling (3806) the inert gas vent valve (608) to enable flow of the inert gas (604) from the inert environment (509) of the first pressure vessel (500) via the second inert gas conduit (706) to an external environment (112) of the environmental test chamber (100).
135. The method (3900) of Clause 134, further comprising:
   pressurizing (3902) the inert gas (604) flowing through the first pressure vessel (500) to a predetermined pressure.
136. The method of Clause 134 or 135, further comprising:
   circulating (3904) the inert gas (604) within the first pressure vessel (500) at a predetermined flow rate.
137. The method of any one of Clauses 134-136, further comprising:
   cooling (3906) the inert gas (604) flowing through the first pressure vessel (500) to a predetermined temperature.
138. A test fixture (300) for improving fidelity for thermal oxidative stability testing, comprising:
   a first container (502) having a first opening (504) that provides access to a first internal volume (506);
   a bracket (208) sized to frame the first opening (504) of the first container (502), wherein a material under test (202) is sealed and secured to the first container (502) over the first opening (504) using the bracket (208) with a backside (206) of the material under test (202) facing the first internal volume (506), wherein the first container (502) with the material under test (202) secured thereon forms a first pressure vessel (500) that defines a first environment (508) within the first internal volume (506); and
   a second container (1002) having a second opening (1004) that provides access to a second internal volume (1006), the second container (1002) installed on the first pressure vessel (500) over the bracket (208) with the second opening (1004) framing a frontside (204) of the material under test (202), wherein the second container (1002) and the frontside (204) of the material under test (202) forms a second pressure vessel (1000) that defines a second environment (510) within the second internal volume (1006) of the second container (1002), the second environment (510) being different from the first environment (508) and isolated from the first environment (508).
139. The test fixture of Clause 138 wherein the first environment (508) comprises an inert environment (509) and the second environment (510) comprises an oxidizing environment (511).

## Claims

1. A test fixture (300) for improving fidelity of thermal oxidative stability testing, comprising:
an environmental test chamber (100), comprising:
an enclosure (102) with an opening (104) that provides access to an internal compartment (106) defining a chamber environment (108); and
a controller (110) configured to control the chamber environment (108) within the internal compartment (106); and
a test material holder (200) at least partially disposed in the internal compartment (106) and configured to hold a material under test (202), and
wherein the environmental test chamber (100) and the test material holder (200) are configured to expose a frontside (204) of the material under test (202) to a first environment (205) and to expose a backside (206) of the material under test (202) to a second environment (207), the second environment (207) being different from the first environment (205) and isolated from the first environment (205).

2. The test fixture of Claim 1, the test material holder (200) comprising:
a bracket (208) installed on the enclosure (102) and sized to frame the opening (104), the bracket (208) configured to secure and seal the material under test (202) over the opening (104) with the frontside (204) of the material under test (202) facing the chamber environment (108) and the backside (206) of the material under test (202) facing an external environment (112) of the environmental test chamber (100).

3. The test fixture of Claim 1 or 2, the test material holder (200) comprising:
a container (502) with a first opening (504) that provides access to an internal volume (506); and
a bracket (208) installed on the container (502) and sized to frame the first opening (504), the bracket (208) configured to secure and seal the material under test (202) over the first opening (504) with the backside (206) of the material under test (202) facing the internal volume (506) and the frontside (204) of the material under test (202) facing the chamber environment (108) of the environmental test chamber (100), and
wherein, during operation of the environmental test chamber (100), the container (502) with the material under test (202) secured thereon forms a pressure vessel (500) that defines an inert environment (509) within the internal volume (506) of the container (502) and an oxidizing environment (511) outside the pressure vessel (500) in the chamber environment (108), preferably wherein:
the first environment (205) comprises the oxidizing environment (511) and the second environment (207) comprises the inert environment (509); and/or
the environmental test chamber (100) further comprises:
an oxidizing gas inlet valve (302) installed through an exterior wall (114) of the enclosure (102) and configured to receive an oxidizing gas (304) from an external gas source (306) and to direct the oxidizing gas (304) toward the frontside (204) of the material under test (202) in the chamber environment (108), and
an oxidizing gas vent valve (308) installed through the exterior wall (114) of the enclosure (102) and configured to pass the oxidizing gas (304) from the chamber environment (108) to an external environment (112) of the environmental test chamber (100).

4. The test fixture of Claim 3, the environmental test chamber (100) further comprising:
an inert gas inlet valve (602) installed through an exterior wall (114) of the enclosure (102) and configured to receive an inert gas (604) from an external source (606);
a first inert gas conduit (702) with a proximal end (704) connected to the inert gas inlet valve (602) and configured to provide an inlet path for the inert gas (604) to the pressure vessel (500);
a second inert gas conduit (706) with a proximal end (708) connected to the pressure vessel (500) and configured to provide an outlet path to vent the inert gas (604) from the pressure vessel (500); and
an inert gas vent valve (608) installed through the exterior wall (114) of the enclosure (102), wherein a distal end (710) of the second inert gas conduit (706) is connected to the inert gas vent valve (608), the inert gas vent valve (608) configured to vent the inert gas (604) from the pressure vessel (500) via the second inert gas conduit (706) to an external environment (112) of the environmental test chamber (100).

5. The test fixture of Claim 3 or 4, the environmental test chamber (100) further comprising:
a vacuum valve (802) installed through an exterior wall (114) of the enclosure (102) and configured to receive a vacuum draw from a vacuum system (902); and
an internal vacuum line (804) with a proximal end (806) connected to the vacuum valve (802) and configured to provide the vacuum draw to the pressure vessel (500).

6. The test fixture of any one of Claims 1-5, the test material holder (200) comprising:
a first container (502) with a first opening (504) that provides access to a first internal volume (506);
a bracket (208) installed on the first container (502) and sized to frame the first opening (504), the bracket (208) configured to secure and seal the material under test (202) over the first opening (504) with the backside (206) of the material under test (202) facing the first internal volume (506) and the frontside (204) of the material under test (202) facing the chamber environment (108) of the environmental test chamber (100); and
a second container (1002) with a second opening (1004) that provides access to a second internal volume (1006), the second container (1002) installed over the bracket (208) with the second opening (1004) sized to frame the frontside (204) of the material under test (202), and
wherein, during operation of the environmental test chamber (100), the first container (502) with the material under test (202) secured thereon forms a first pressure vessel (500) that defines an inert environment (509) within the first internal volume (506) of the first container (502) and the second container (1002) installed over the frontside (204) of the material under test (202) forms a second pressure vessel (1000) that defines an oxidizing environment (511) within the second internal volume (1006), preferably wherein:
the first environment (205) comprises the oxidizing environment (511) and the second environment (207) comprises the inert environment (509).

7. The test fixture of Claim 6, the environmental test chamber (100) further comprising:
an oxidizing gas inlet valve (302) installed through an exterior wall (114) of the enclosure (102) and configured to receive an oxidizing gas (304) from an external gas source (306);
a first oxidizing gas conduit (1102) with a proximal end (1104) connected to the oxidizing gas inlet valve (302) and configured to provide an inlet path for the oxidizing gas (304) to the second pressure vessel (1000);
a second oxidizing gas conduit (1106) with a proximal end (1108) connected to the second pressure vessel (1000) and configured to provide an outlet path to vent the oxidizing gas (304) from the second pressure vessel (1000); and
an oxidizing gas vent valve (308) installed through the exterior wall (114) of the enclosure (102), wherein a distal end (1110) of the second oxidizing gas conduit (1106) is connected to the oxidizing gas vent valve (308), the oxidizing gas vent valve (308) configured to vent the oxidizing gas (304) from the second pressure vessel (1000) via the second oxidizing gas conduit (1106) to an external environment (112) of the environmental test chamber (100).

8. The test fixture of Claim 7, the second pressure vessel (1000) comprising:
an oxidizing gas inlet port (1112) installed through an exterior wall (1114) of the second container (1002), wherein a distal end (1116) of the first oxidizing gas conduit (1102) is connected to the oxidizing gas inlet port (1112); and
an oxidizing gas vent port (1118) installed through the exterior wall (1114) of the second container (1002), wherein a proximal end (1108) of the second oxidizing gas conduit (1106) is connected to the oxidizing gas vent port (1118).

9. The test fixture of Claim 8, the environmental test chamber (100) further comprising:
a compressor system (310) configured to pressurize the second pressure vessel (1000) to a predetermined pressure during operation of the environmental test chamber (100), and wherein the controller (110) of the environmental test chamber (100) is configured to control the compressor system (310) and configured to monitor a current pressure of the second pressure vessel (1000); and/or
a heating system (312) configured to heat the oxidizing gas (304) flowing through the second pressure vessel (1000) to a predetermined temperature during operation of the environmental test chamber (100), and wherein the controller (110) of the environmental test chamber (100) is configured to control the heating system (312) and configured to monitor a current temperature of the oxidizing gas (304) flowing through the second pressure vessel (1000); and/or
a ventilation system (314) configured to circulate the oxidizing gas (304) within the second pressure vessel (1000) at a predetermined flow rate during operation of the environmental test chamber (100), and wherein the controller (110) of the environmental test chamber (100) is configured to control the ventilation system (314) and configured to monitor a current flow rate within the second pressure vessel (1000); and/or
an oxidizing gas mixing system (316) configured to mix a select gas component (318) with the oxidizing gas (304) flowing through the second pressure vessel (1000) to maintain a predetermined concentration of the select gas component (318) during operation of the environmental test chamber (100), and wherein the controller (110) of the environmental test chamber (100) is configured to control the oxidizing gas mixing system (316) and configured to monitor a current concentration of the select gas component (318) in the oxidizing gas (304) flowing through the second pressure vessel (1000).

10. The test fixture of any one of Claims 6-9, the environmental test chamber (100) further comprising:
an inert gas inlet valve (602) installed through an exterior wall (114) of the enclosure (102) and configured to receive an inert gas (604) from an external source (606);
a first inert gas conduit (702) with a proximal end (704) connected to the inert gas inlet valve (602) and configured to provide an inlet path for the inert gas (604) to the first pressure vessel (500);
a second inert gas conduit (706) with a proximal end (708) connected to the first pressure vessel (500) and configured to provide an outlet path to vent the inert gas (604) from the first pressure vessel (500); and
an inert gas vent valve (608) installed through the exterior wall (114) of the enclosure (102), wherein a distal end (710) of the second inert gas conduit (706) is connected to the inert gas vent valve (608), the inert gas vent valve (608) configured to vent the inert gas (604) from the first pressure vessel (500) via the second inert gas conduit (706) to an external environment (112) of the environmental test chamber (100).

11. The test fixture of Claim 10, the first pressure vessel (500) comprising:
an inert gas inlet port (712) installed through an exterior wall (714) of the first container (502), wherein a distal end (716) of the first inert gas conduit (702) is connected to the inert gas inlet port (712); and
an inert gas vent port (718) installed through the exterior wall (714) of the first container (502), wherein a proximal end (708) of the second inert gas conduit (706) is connected to the inert gas vent port (718), preferably wherein the environmental test chamber (100) further comprises:
a compressor system (310) configured to pressurize the first pressure vessel (500) to a predetermined pressure during operation of the environmental test chamber (100), and wherein the controller (110) of the environmental test chamber (100) is configured to control the compressor system (310) and configured to monitor a current pressure of the first pressure vessel (500); and/or
a cooling system (610) configured to cool the inert gas (604) flowing through the first pressure vessel (500) to a predetermined temperature during operation of the environmental test chamber (100), and wherein the controller (110) of the environmental test chamber (100) is configured to control the cooling system (610) and configured to monitor a current temperature of the inert gas (604) flowing through the first pressure vessel (500).

12. The test fixture of any one of Claims 6-11, the environmental test chamber (100) further comprising:
a vacuum valve (802) installed through an exterior wall (114) of the enclosure (102) and configured to receive a vacuum draw from a vacuum system (902); and
an internal vacuum line (804) with a proximal end (806) connected to the vacuum valve (802) and configured to provide the vacuum draw to the first pressure vessel (500), preferably wherein the first pressure vessel (500) comprises:
a vacuum port (808) installed through an exterior wall (714) of the first container (502), wherein a distal end (810) of the internal vacuum line (804) is connected to the vacuum port (808), and further preferably wherein the environmental test chamber (100) comprises:
a vacuum pump (904) connected to the vacuum valve (802) and configured to draw a predetermined vacuum on the first pressure vessel (500) during operation of the environmental test chamber (100), and wherein the controller (110) of the environmental test chamber (100) is configured to control the vacuum pump (904) and configured to monitor a current vacuum drawn on the first pressure vessel (500).

13. A method (1300) for improving fidelity for thermal oxidative stability testing, comprising:
exposing (1302) a frontside (204) of a material under test (202) to a first environment (205) during an exposure portion of a thermal oxidative stability test for the material under test (202); and
exposing (1304) a backside (206) of the material under test (202) to a second environment (207) during the exposure portion, the second environment (207) being different from the first environment (205) and isolated from the first environment (205).

14. A method (3400) for improving fidelity for thermal oxidative stability testing, comprising:
forming (3402) a first pressure vessel (500) that defines a first environment (508), the first pressure vessel (500) comprising a first container (502) and a material under test (202); and
forming (3404) a second pressure vessel (1000) that defines a second environment (510), the second pressure vessel comprising a second container (1002) and the material under test (202), the second environment (510) being different from the first environment (508) and isolated from the first environment (508).

15. A test fixture (300) for improving fidelity for thermal oxidative stability testing, comprising:
a first container (502) having a first opening (504) that provides access to a first internal volume (506);
a bracket (208) sized to frame the first opening (504) of the first container (502), wherein a material under test (202) is sealed and secured to the first container (502) over the first opening (504) using the bracket (208) with a backside (206) of the material under test (202) facing the first internal volume (506), wherein the first container (502) with the material under test (202) secured thereon forms a first pressure vessel (500) that defines a first environment (508) within the first internal volume (506); and
a second container (1002) having a second opening (1004) that provides access to a second internal volume (1006), the second container (1002) installed on the first pressure vessel (500) over the bracket (208) with the second opening (1004) framing a frontside (204) of the material under test (202), wherein the second container (1002) and the frontside (204) of the material under test (202) forms a second pressure vessel (1000) that defines a second environment (510) within the second internal volume (1006) of the second container (1002), the second environment (510) being different from the first environment (508) and isolated from the first environment (508).
